# EUROPEAN PATENT APPLICATION

(11) **EP 4 753 072 A1**
(43) Date of publication of application: **03.06.2026**
(21) Application number: 25726203.0
(22) Date of filing: 27.05.2025
(51) Int. Cl.: H01Q 1/24, G06F 1/16

(54) **PORTABLE ELECTRONIC DEVICE INCLUDING ANTENNA**

(30) Priority: 02.09.2024 KR 20240118762; 06.11.2024 KR 20240155866
(71) Applicant: SAMSUNG ELECTRONICS CO., LTD., Yeongtong-gu, Suwon-si, Gyeonggi-do 16677 (KR)
(72) Inventor: JUNG, Yanggyun, Suwon-si, Gyeonggi-do 16677 (KR); HUR, Changwon, Suwon-si, Gyeonggi-do 16677 (KR); BAE, Jonghong, Suwon-si, Gyeonggi-do 16677 (KR)
(74) Representative: Appleyard Lees IP LLP
(86) International application number: PCT/KR2025/007150
(87) International publication number: WO 2026/049210

(57) **Abstract**

There is described a portable electronic device comprising a display (160) and a housing (110) in which the display is placed. The housing includes an injection-molded portion (102) including an injection molded material, and a metal portion (101) including a metal material. The metal portion includes a first side portion (110a) including an opening (110a_h). The device further includes an antenna structure (110_am) disposed in the housing, wherein at least a portion of antenna structure is disposed to face the opening, and a support structure (200) disposed between the antenna structure and the first side portion. The support structure includes a conductive plate (210) that partially overlaps the antenna structure with respect to a first direction toward the antenna structure from the first side portion, and a non-conductive plate (220) that closes the opening. At least a portion of the non-conductive plate overlaps the conductive plate.

## Description

### BACKGROUND

### 1. Field

Various embodiments disclosed in the disclosure relate to a portable electronic device including an antenna.

### 2. Description of Related Art

With the rapid increase in mobile traffic, the next generation communication technology based on high-band frequency (e.g., 5-generation (5G) or wireless gigabit alliance (WiGig)) is being developed. A 5G-related signal in high-band frequency may include a millimeter wave (mmWave) having the frequency band of 30 GHz to 300 GHz. When the high-band frequency is used, a wavelength may become short, and thus, an antenna and a device may become small-sized and/or lightweight.

### SUMMARY

A portable electronic device according to an embodiment disclosed in the disclosure may include a display, a rear case, a frame structure disposed between the display and the rear case, and defining at least a portion of one side surface of the portable electronic device, and an array antenna including a first antenna element and a second antenna element disposed to face the one side surface of the portable electronic device, between the display and the rear case, and the frame structure may include an inner portion including a non-conductive material and an outer portion including a conductive material, an opening region formed at the outer portion, and disposed in a position corresponding to the array antenna, a conductive plate disposed adjacent to the opening region, and including at least two holes divided by a rib disposed to cover the first antenna element and the second antenna element, and a non-conductive plate disposed to correspond to the opening region, and including an opaque material.

The portable electronic device described herein may improve a housing structure that is located in a signal radiation direction of a communication module (e.g., a communication circuit and an antenna connected thereto) that uses a high-band frequency to secure a signal radiation performance of the communication module and to design a housing (or a frame) included in a signal radiation structure in various ways according to a design or a designer's purpose, thereby securing diversity of design.

Furthermore, the portable electronic device of this disclosure may provide flexibility in designing a separate antenna structure while maintaining an overall design form of the portable electronic device by providing a communication support structure (or support structure) disposed in the housing (or a basic frame) as a separate independent structure so that the communication support structure may be adjusted to suit the intentions of the designer of an antenna structure (or a communication module), or by integrating it with an injection-molded portion that defines a portion of the housing.

Furthermore, at least one of the various embodiments of the disclosure supports securing and maintaining good signal characteristics by forming at least a portion of the communication support structure that faces the antenna structure according to the antenna signal radiation characteristics.

Besides these effects and advantages, a variety of effects and advantages may be provided directly or indirectly throughout the disclosure.

In an aspect of this disclosure, there is provided a portable electronic device that comprises: a display; a housing in which the display is placed - the housing includes an injection-molded portion including an injection molded material and a metal portion including a metal material, and the metal portion includes a first side portion including an opening; an antenna structure disposed in the housing, at least a portion of antenna structure is disposed to face the opening; a support structure disposed between the antenna structure and the first side portion; wherein the support structure includes: a conductive plate that partially overlaps the antenna structure with respect to a first direction toward the antenna structure from the first side portion; a non-conductive plate that closes the opening, wherein at least a portion of the non-conductive plate overlaps the conductive plate.

In an embodiment, the injection-molded portion includes an injection side portion disposed between the antenna structure and the first side portion.

In an embodiment, the portable electronic device further comprises: a first adhesive member that adheres the conductive plate to the injection side portion.

In an embodiment, a thickness of a upper portion or lower portion of the injection side portion is thicker than a thickness of the center portion of the injection side portion.

In an embodiment, the injection side portion includes a through hole that penetrates the injection-molded portion in the first direction.

In an embodiment, the conductive plate is disposed in the injection side portion.

In an embodiment, the portable electronic device further comprises: a second adhesive member disposed between the conductive plate and the non-conductive plate.

In an embodiment, the conductive plate comprises a metal pattern formed on the non-conductive plate.

In an embodiment, the conductive plate comprises a structure in which a plurality of layers, wherein each the plurality of layers includes openings.

In another aspect of this disclosure, there is provided a portable electronic device that comprises: a display; a rear case; a frame structure disposed between the display and the rear case, the frame structure is forming at least a portion of one side of the portable electronic device; and an array antenna including a first antenna element and a second antenna element, the first antenna element and the second antenna element are arranged to face the one side of the portable electronic device between the display and the rear case, wherein the frame structure comprises: an inner portion including a non-conductive material and an outer portion including a conductive material, an opening region formed in the outer portion and disposed at a position corresponding to the array antenna, a conductive plate including at least two holes separated by a rib disposed adjacent to the opening region and disposed to cover between the first antenna element and the second antenna element; and a non-conductive plate disposed corresponding to the opening region and comprising an opaque material.

In an embodiment, the conductive plate is coupled to the opening region by being attached to the inner portion at the position using a first adhesive member, wherein the non-conductive plate is attached to the conductive plate using a second adhesive member having substantially the same size as the first adhesive member.

In an embodiment, the conductive plate is formed by insert molding in the inner portion, or is formed by deposition on the non-conductive plate.

In an embodiment, a width of the rib is greater than a width between the first antenna element and the second antenna element.

In an embodiment, the conductive plate includes an additional rib, wherein the additional rib is arranged to overlap at least a portion of the second antenna element.

In an embodiment, the portable electronic device further comprises: an another conductive plate stacked with the conductive plate, wherein the other conductive plate includes a first portion overlapped with the rib and a second portion in which other rib is disposed that do not overlap with the rib.

In an embodiment, the width of the rib may be related to a radiation pattern that the array antenna has with respect to a direction of the one side surface and a direction of the rear cover.

In an embodiment, by setting the array antenna such that the array antenna has the radiation pattern of a specific frequency band, the portable electronic device may be set not to use another antenna of the specific frequency band.

### BRIEF DESCRIPTION OF THE DRAWINGS

FIG. 1 is a view illustrating an example of an exterior of a portable electronic device;
FIG. 2 is an exploded perspective view illustrating at least a portion of a portable electronic device;
FIG. 3 is a view illustrating an example of a portion of a portable electronic device;
FIG. 4 is a view illustrating an example of a cross section of a portable electronic device, at a first position;
FIG. 5 is a view illustrating an example of a cross section of a portable electronic device, at a second position;
FIG. 6 is a view illustrating an example of a cross section of a portable electronic device, at a third position;
FIG. 7 is a view illustrating an example of a first communication support structure;
FIG. 8 is a view illustrating an example of some components of a second communication support structure;
FIG. 9 is a view illustrating an example of some components of a third communication support structure;
FIG. 10 is a view illustrating an example of some components of a fourth communication support structure;
FIG. 11 is a view illustrating an example of a second portable electronic device, to which a fifth communication support structure is applied;
FIG. 12 is a view illustrating an example of a third portable electronic device, to which a sixth communication support structure is applied;
FIG. 13 is a view illustrating an example of a formation in which some components of a fourth portable electronic device, to which a seventh communication support structure is applied, are separated;
FIG. 14 is a view illustrating an example of a front structure of a fourth portable electronic device;
FIG. 15 is a view illustrating an example of an antenna structure disposition region and a side portion of a fourth portable electronic device;
FIG. 16 is a view illustrating an example of a cross section, taken along cutting line D-D' of FIG. 15;
FIG. 17 is a view illustrating an example of some components including a support plate, a side portion, and a conductive plate, among components of a fifth portable electronic device;
FIG. 18 is a view illustrating an example of some components including a support plate, a side portion, an injection-molded portion, and a conductive plate, among components of a fifth portable electronic device;
FIG. 19 is a view illustrating an example of a cross section, taken along cutting line E-E' of FIG. 18;
FIG. 20 is a view illustrating an example of some components of a sixth portable electronic device, in which an eighth communication support structure including a first modified conductive plate is disposed;
FIG. 21 is a view illustrating an example of a second modified conductive plate;
FIG. 22 is a view illustrating an example of a disposition relationship between a second modified conductive plate and an antenna structure;
FIG. 23 is a view illustrating an example of a third modified conductive plate;
FIG. 24 is a view illustrating an example of a configuration of a seventh portable electronic device including a third modified conductive plate and a first modified antenna structure;
FIG. 25 is a view illustrating an example of a fourth modified conductive plate;
FIG. 26 is a view illustrating an example of a disposition relationship between a fifth modified conductive plate and a first modified antenna structure;
FIG. 27 is a view illustrating an example of a disposition relationship between a sixth modified conductive plate and a first modified antenna structure;
FIG. 28 is a view illustrating an example of an eighth portable electronic device including a seventh modified conductive plate and a second modified antenna structure;
FIG. 29 is a view illustrating an example of a ninth portable electronic device including a seventh modified conductive plate and a third modified antenna structure;
FIG. 30 is a view illustrating an example of an exterior of a foldable portable electronic device, to which a communication support structure may be applied, in a folded state;
FIG. 31 is a view illustrating an example of an exterior of a foldable portable electronic device, to which a communication support structure may be applied, in an unfolded state;
FIG. 32 is a view illustrating an example of an eleventh portable electronic device including a side signal radiation structure;
FIG. 33 is a view illustrating an example of a twelfth portable electronic device including a side signal radiation structure;
FIG. 34 is a view illustrating an example of a shape of a thirteenth portable electronic device in a first direction in an unfolded state;
FIG. 35 is a view illustrating an example of a shape of a thirteenth portable electronic device in a second direction in an unfolded state;
FIG. 36 is a view illustrating an example of a thirteenth portable electronic device in a folded state;
FIG. 37 is a view illustrating an example of a shape of a fourteenth portable electronic device in a first direction in an unfolded state;
FIG. 38 is a view illustrating an example of a fifteenth portable electronic device in a partially folded state; and

With regard to the description of the drawings, the same or similar components will be marked by the same or similar reference signs.

### DETAILED DESCRIPTION

Hereinafter, various embodiments of the disclosure will be described with reference to accompanying drawings. However, those of ordinary skill in the art will recognize that modification, equivalent, and/or alternative on various embodiments described herein can be variously made without departing from the scope and spirit of the disclosure.

mmWave antennas are very vulnerable to radiation if there is metal in the radiation direction. To address this, devices are being designed to remove some of the metal in the radiating direction or to avoid using metal. Some designs include a separate non-metallic structure instead of metal to enhance design aesthetics.

Conventional devices such as mobile phones use vertical and horizontal antenna modules at the same time to secure antenna performance, but recently there is a trend of using only one vertical module to reduce costs and to simplify the structure. In the case of a device having one vertical module, that is radiated towards a metal area and the back cover to minimize the performance reduction that can result from the absence of a horizontal module. It is therefore important to have a wall structure that does not completely remove the metal area, but leaves some areas intact to help to make the radiation pattern more uniform.

In order to remove some areas of the metal housing and form the metal wall, it is essential to correctly design a protruding shape of the structure. The shape design is complicated and there can also be problems with exterior shrinkage. In addition, the protruding shape can result in problems with lifting/pinching problems during assembly.

The portable electronic device described below may improve a housing structure that is located in a signal radiation direction of a communication module (e.g., a communication circuit and an antenna connected thereto) that uses a high-band frequency to secure ae signal radiation performance of the communication module and to design ae housing (or a frame) included in a signal radiation structure in various ways according to a design or a designer's purpose, thereby securing diversity of design.

Furthermore, the portable electronic device of this disclosure may provide flexibility in designing a separate antenna structure while maintaining an overall design form of the portable electronic device by providing a communication support structure (or support structure) disposed in the housing (or a basic frame) as a separate independent structure so that the communication support structure may be adjusted to suit the intentions of the designer of an antenna structure (or a communication module), or by integrating it with an injection-molded portion that defines a portion of the housing.

Furthermore, at least one of the various embodiments of the disclosure supports securing and maintaining good signal characteristics by forming at least a portion of the communication support structure that faces the antenna structure according to the antenna signal radiation characteristics.

Besides, a variety of effects directly or indirectly understood through the disclosure may be provided.

Hereinafter, various structures and arrangements of a portable electronic device including an antenna of the disclosure, and a relationship with peripheral structures will be described with reference to the drawings.

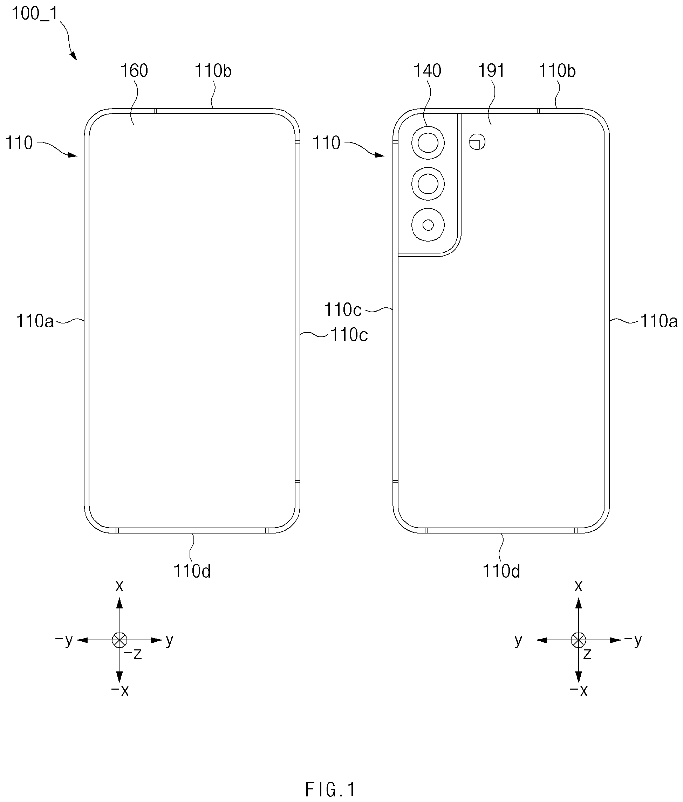

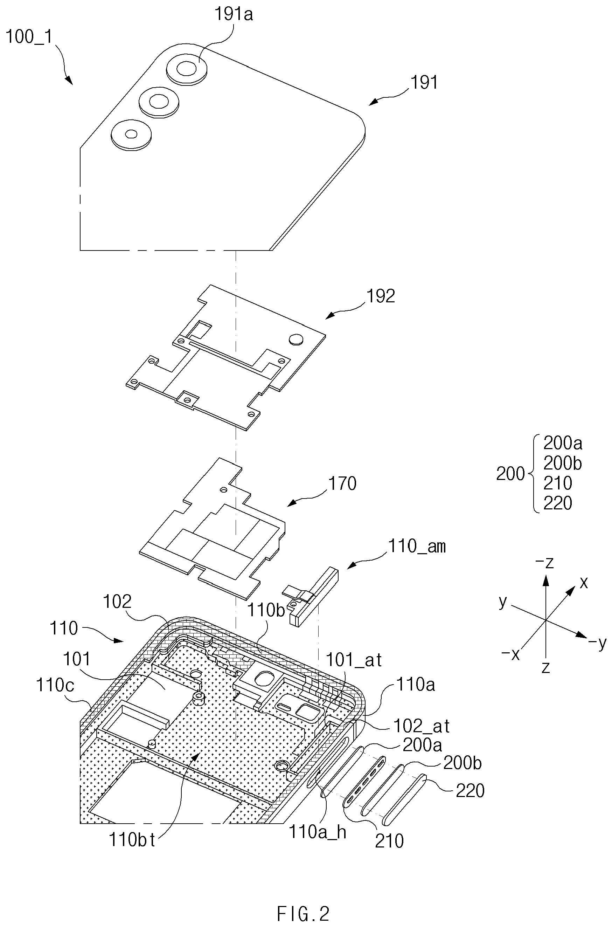

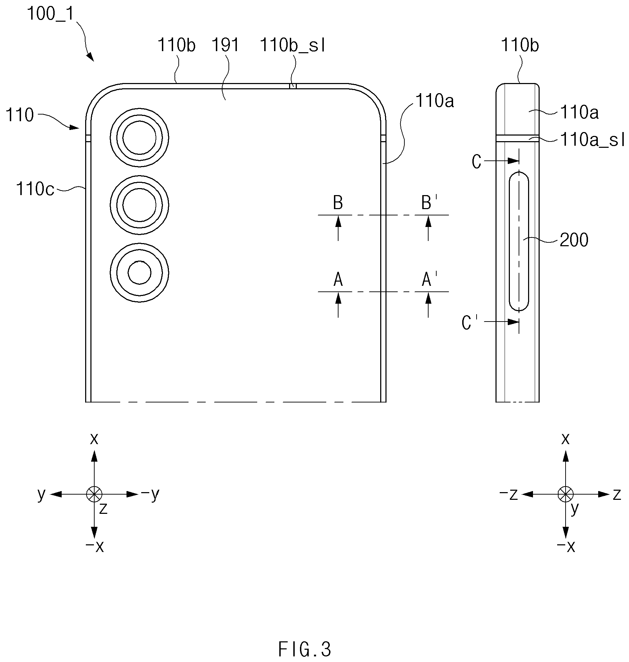

FIG. 1 is a view illustrating an example of an exterior of a portable electronic device according to an embodiment. FIG. 2 is an exploded perspective view illustrating at least a portion of a portable electronic device according to an embodiment. FIG. 3 is a view illustrating an example of a portion of a portable electronic device according to an embodiment.

Referring to FIG. 1, a portable electronic device 100_1 (or a first portable electronic device) according to an embodiment may include at least one of a display 160, a rear case 191, a camera device 140, and a housing 110. Alternatively, referring to FIGS. 2 and 3, the portable electronic device 100_1 may include a printed circuit board 170 that is disposed in a rearward direction (e.g., the -z-axis direction), a rear cover 192, a rear case 191, an antenna structure 110_am, a communication support structure 200 (or a support structure, a communication-related structure, an auxiliary communication structure, a housing support structure, or an auxiliary housing structure) including a conductive plate 210 (or a metal structure).

The display 160 may output at least one screen that is related to performance of a user function of the portable electronic device 100_1. As an example, the display 160 may output at least one screen of a standby screen, a call screen, an Internet access screen, and a specific application access screen. At least one display 160 may be disposed according to the type of the portable electronic device 100_1. As an example, the display 160 may be disposed on a front surface (e.g., a surface that faces the z axis) of the portable electronic device 100_1. At least a portion of the display 160 may be protected by the housing 110. As an example, a periphery of the display 160 may be surrounded by the housing 110. In the illustrated drawings, a structure, in which the display 160 is disposed in a bar type to cover almost the entire front side of the housing 110, is illustrated, but the disclosure is not limited thereto. For example, the portable electronic device 100_1 may be a foldable portable electronic device, and in this case, a central portion of the display 160 may be configured to be folded in one direction (e.g., a longitudinal or transverse direction).

As an example, at least one display 160 may be disposed in at least one of the front and rear directions (e.g., a direction that faces the -z axis) of the portable electronic device 100_1. For example, the display 160 may include a sub-display that is also disposed in a rearward direction of the portable electronic device 100_1. In this way, the portable electronic device 100_1 of the disclosure is not limited by at least one of the shape, size, and number of the displays 160, and may include various shapes and structures.

The printed circuit board 170 may be disposed between a rear surface of the housing 110 and the rear cover 192. Various electronic elements related to the operation of the portable electronic device 100_1 may be disposed (or mounted) on the printed circuit board 170. For example, at least one of a memory, a processor, and at least one sensor (e.g., a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor), and an audio input/output device (e.g., a speaker or a microphone) may be disposed on the printed circuit board 170. Alternatively, the memory and the processor may be disposed on the printed circuit board 170, and the at least one sensor and the audio input/output device may be connected to each other through a wiring line. As an example, a communication processor that is functionally connected to the antenna structure 110_am may be disposed on the printed circuit board 170.

The rear cover 192 may be disposed between the housing 110 and the rear case 191. The rear cover 192 may protect the printed circuit board 170. In this regard, a size of the rear cover 192 may be formed to be similar to a size of the printed circuit board 170 or larger than the size of the printed circuit board 170. As another example, when the portable electronic device 100_1 has a wireless charging function, an antenna pattern related to wireless charging may be disposed on the rear cover 192. At least one antenna pattern related to signal radiation of various communication modules (e.g., a short-range communication module, a global positioning system (GPS), and an NFC module) that is disposed in the portable electronic device 100_1 may be disposed in or on at least a portion of the rear cover 192. The rear cover 192 may be formed of (or including) a non-metallic material or an injection-molded material. The camera device 140 may be disposed on at least one side of the rear cover 192. The rear cover 192 may include at least one hole (e.g., a hole that passes upward and downward or a hole that passes through the z axis to the -z axis), in which at least a portion of a wiring line that connects the camera device 140 and the printed circuit board 170 is disposed.

The rear case 191 may be disposed in a rearward direction (e.g., the -z-axis direction) of the housing 110 to cover a rear surface of the housing 110 or the rear cover 192. At least a portion of the rear case 191 may be formed of (or including) a non-metallic material. As an example, the rear case 191 may be formed of (or including) at least one of glass, ceramic, and polymer. Alternatively, at least another portion of the rear case 191 may be formed of (or including) a metallic material. As an example, when the portable electronic device 100_1 is configured to support a 5G communication function and a 5G communication antenna related to the support of the 5G communication function is designed to radiate a signal toward the rear side of the portable electronic device 100_1, the rear case 191 corresponding to at least a portion of a portion, at which the 5G communication antenna is disposed, may be formed of (or including) a non-metallic material. A periphery of the rear case 191 may be surrounded by the housing 110. At least one hole 191a, through which at least a portion of the camera device 140 is exposed to the outside, may be formed on one side of the rear case 191. A camera decoration may be disposed around the at least one hole 191a in relation to protection of the camera device 140.

The portable electronic device 100_1 according to an embodiment of the disclosure includes an antenna structure 110_am (or a communication module, a communication device, a communication member, or a communication structure) (e.g., a communication circuit and a communication antenna) that may radiate signals related to support of a specific function toward a lateral side of the housing 110, at least a portion of which is formed of (or including) a metallic material, and proposes contents related to a communication support structure (or an auxiliary communication structure, a housing support structure, or an auxiliary housing structure), in which at least a portion of a side opening (or an opening) formed in the housing 110 is disposed such that a signal irradiated from the antenna structure 110_am is irradiated toward a lateral side of the housing 110. Accordingly, the portable electronic device 100_1 of the disclosure is not limited to the shape, form, color, and size element of the rear case 191, and may be formed in various shapes, colors, and sizes.

The camera device 140 may be disposed on one side of the portable electronic device 100_1, and may acquire an image of a subject in correspondence to a user control or in correspondence to a preset program. As an example, at least one image sensor included in the camera device 140 may acquire a signal for an external subject through at least one hole 191a formed in the rear case 191. The camera device 140 may include a front camera that captures an image in a forward direction (e.g., the z-axis direction) of the portable electronic device 100_1, and a rear camera that captures an image in a rearward direction (e.g., the -z-axis direction) of the portable electronic device 100_1. In the illustrated drawing, the rear camera is illustrated from the camera device 140, and an embodiment of the disclosure is not limited to the number of camera devices 140, the position of the camera device 140, and the shape or size of the camera device 140. In some portable electronic devices 100_1, the camera device 140 may be excluded, or the number of cameras of the camera device 140 may be decreased or increased.

Side portions 110a, 110b, 110c, and 110d (or outer portions) of the housing 110 may be formed of (or including) a conductive material, and a non-conductive material may be formed (or disposed) between the side portions 110a, 110b, 110c, and 110d of the housing 110 and a support plate 110_bt (or inner portions). A side opening 110a_h (or an opening) that is formed at least one (e.g., a first side portion 110a) of the side portions 110a, 110b, 110c, and 110d may be formed at an outer portion having a conductive material (or formed in a region, in which a portion of the conductive material of the outer portion is removed to corresponding to the position of the antenna structure 110_am). The side opening 110a_h may be formed in the form of one through hole (or hole). Alternatively, the side opening 110a_h may include a structure that passes between an inlet part (e.g., an opening portion (an inner portion) formed on an inside of the first side portion 100a or an opening part (an outer portion) formed on an outside of the first side portion 110a) and an outlet portion (e.g., an outer portion or an inner portion of the first side portion 110a) to distinguish them without any structure. The side opening 110a_h may be formed in relation to signal radiation of the antenna structure 110_am. The side opening 110a_h may be located at a center between the front surface and the rear surface of the portable electronic device 100_1 when viewed from the lateral side of the portable electronic device 100_1. A periphery (e.g., a step) having a lower height than the height of the opening may be formed on one side of the side opening 110a_h. The conductive plate 210 may be coupled or attached to a periphery (e.g., a step) of the side opening 110a_h. The side opening 110a_h may be used together as a passage for other components (speakers, microphones, and biological sensors) of the portable electronic device 100_1. At least one (e.g., a volume key or a power key) of the communication support structure 200 and a combination of keys of the communication support structure 200 may be disposed in the side opening 110a_h.

According to various embodiments, the side opening 110a_h, in which the communication support structure 200 is formed, may be disposed in or on at least one of various side portions 110a, 110b, 110c, and 110d (or the plurality of side openings are disposed in one side portion). For example, the side opening 110a_h may be located on the housing 110 on the left side, the right side, the upper side, or the lower side of the portable electronic device 100_1. The shape of the side opening 110a_h may also be formed of x, +, or square-shape slits when observed from the outside depending on the required antenna performance. The side opening 110a_h may have an inverse "L" shape or an "L" shape including a portion parallel to the front or rear surface of the portable electronic device 100_1. At least a portion of the side opening 110a_h may be formed not only in the lateral direction of the housing 110 but also in the forward or rearward direction of the housing 110.

According to an embodiment, the housing 110 may include a support plate 110bt, and side portions 110a, 110b, 110c, and 110d that are disposed at a periphery of the support plate 110_bt. As an example, the support plate 110_bt of the housing 110 may include a front surface (or a bottom surface or a surface that faces the z axis), on which the display 160 is positioned, and a rear surface (e.g., a surface that faces the -z axis), on which the printed circuit board 170 is positioned. Like opposite surfaces of the coin, the front and rear surfaces may form (or include) the front and rear surfaces of the support plate 110_bt. The support plate 110_bt may include at least one hole that passes through a front surface thereof. A battery may be disposed on one side (e.g., in or on at least a portion of the rear surface) of the support plate 110_bt. The side portions 110a, 110b, 110c, and 110d, for example, may include a first side portion 110a that is disposed in a first direction (e.g., the -y-axis periphery) with respect to the center of the support plate 110_bt, a second side portion 110b that is disposed in a second direction (e.g., the x-axis periphery) that is perpendicular to the first direction with respect to the center of the support plate 110_bt, a third side portion 110c that is disposed in a position that is parallel to the first direction with respect to the center of the support plate 110_bt and is spaced apart from the first side portion 110a (e.g., spaced apart by a y-axis length of the second side portion 110b), and a fourth side portion 110d that is perpendicular to the first direction with respect to the center of the support plate 110_bt and parallel to the second direction, and is disposed in a position spaced apart from the second side portion 110b (e.g., spaced apart by an x-axis length of the first side portion 110a).

As an example, opposite peripheries (e.g., the x-axis and -x-axis peripheries) of the first side portion 110a may be connected to one periphery (e.g., a -y-axis periphery) of the second side portion 110b and one periphery (e.g., a -y-axis periphery) of the fourth side portion 110d, respectively. Opposite peripheries (e.g., the x-axis and -x-axis peripheries) of the third side portion 110c may be connected to an opposite periphery (e.g., a y-axis periphery) of the second side portion 110b and an opposite periphery (e.g., a y-axis periphery) of the fourth side portion 110d, respectively. At least a portion of the first to fourth side parts 110a, 110b, 110c, and 110d may be used as an antenna. As an example, the first side portion 110a may include a slit 110a_sl that divides a section. Similarly, the second side portion 110b may include a slit 110b_sl that divides a section. An insulating member (or an insulating material or an injection-molded portion) may be disposed on the slit 110a_sl and the slit 110b_sl.

As an example, the housing 110 may include a machined portion 101 (e.g., a computerized numerical control (CNC)-machined portion, or a metal portion, a portion, at least a portion is formed of (or including) a metal (or a conductive material), an outer portion, or a portion of the support plate 110_bt and side portions 110a, 110b, 110c, and 110d), and an injection-molded portion 102 (or an injection-molded portion formed through an injection-molding process, a portion, at least portion of which is formed of (or including) a non-conductive material, or an inner portion). At least a portion of the side portions 110a, 110b, 110c, and 110d of the housing 110 may be used as an antenna related to communication functions (e.g., at least one of 3G communication, 4G communication, GPS communication, and Wi-Fi communication) of the portable electronic device 100_1. In this regard, at least a portion of the side portions 110a, 110b, 110c, and 110d of the housing 110 may be formed of (or including) a metallic material. The injection-molded portion 102 may be disposed in at least a portion between the side portions 110a, 110b, 110c, and 110d and the support plate 110bt. The support plate 110_bt may include an antenna disposition region 101_at (or an antenna disposition part), in which the antenna structure 110_am is disposed. The injection-molded portion 102 may include an injection side region 102_at that is disposed between the antenna disposition region 101_at and the first side portion 110a (e.g., at least a portion of which is formed of (or including) a metallic material and that includes a portion that is exposed toward the -y-axis direction). At least a portion of the communication support structure 200 may be disposed at the injection side region 102_at. With respect to the y-axis direction from the y-axis direction (or when observed from the -y axis to the y axis), at least a portion of the injection side region 102_at may be disposed to overlap at least a portion of the communication support structure 200. The housing 110 may have a frame structure (e.g., 110a or 102_at) including the first side portion 110a, at which the side opening 110a_h is formed, and the injection side region 102_at of the injection-molded portion 102.

At least a portion of the inner portion (or the injection-molded portion 102 or the injection side region 102_at) of the housing 110 may be removed. A through hole (or hole) (e.g., a through hole that is formed in a direction that is parallel to the display 160) or an opening may be formed at the inner portion (e.g., the injection-molded portion 102 or the injection side region 102_at) of the housing 110. A size of the through hole or the opening that is formed at the inner portion of the housing 110 may be smaller than a size of the side opening 110a_h that is formed at the outer portion (e.g., the first side portion 110a) of the housing 110. Holes corresponding to the openings (or holes) formed in the conductive plate 210 may be formed at the inner portion (or the injection-molded portion 102 or the injection side region 102_at) of the housing 110. The holes formed at the inner portion of the housing 110 may be filled with a dielectric.

As an example, the side opening 110a_h may be disposed at the first side portion 110a. At least a portion of the injection side region 102_at may overlap the side opening 110a_h (or a structure disposition hole, an antenna opening, and a signal emitting opening) that is formed at the first side portion 110a. Alternatively, when the communication support structure 200 is removed, at least a portion of the injection side region 102_at may be observed from the outside through the side opening 110a_h. The side opening 110a_h may be formed to pass through the lateral front and rear surfaces (e.g., the y-axis and -y-axis directions) (or directions that are parallel to the display 160) of the first side portion 110a formed of (or including) a metallic material. At least a portion of the shape of the side opening 110a_h may be formed to have a length (or a size that is smaller than the size of the antenna structure 110_am corresponding to the shape or length of the antenna structure 110_am. As the side opening 110a_h is formed to pass through the front and rear surfaces of the first side portion 110a, a process of forming the side opening 110a_h at the first side portion 110a may be simplified, and defects may be improved due to the simplification of the process.

At least a portion of the antenna structure 110_am may be disposed in the antenna disposition region 101_at of the support plate 110_bt, and may be electrically (or functionally) connected to the printed circuit board 170. Alternatively, according to an embodiment, at least a portion of the antenna structure 110_am may be disposed at the injection-molded portion 102, and the remaining portions may be disposed in the antenna disposition region 101_at of the support plate 110_bt. The antenna structure 110_am, for example, may include a substrate including a plurality of conductive layers and a plurality of non-conductive layers that are alternately laminated with the conductive layers, and an antenna array (e.g., a plurality of antenna elements disposed to form a directional beam, or a dipole antenna array and/or a patch antenna array). Alternatively, the antennal structure 110_am may include at least one antenna that may transmit signals corresponding to a cellular communication scheme (e.g., 3G, 4G, 5G, or 6G), a substrate, on which the antenna is disposed, a wiring line for supplying electric power to the antenna, at least one element for controlling radiation of signals of the antenna, and a support structure that supports the antenna structure. According to various embodiments, the antenna structure 110_am may include at least one of an antenna for Wi-Fi communication, an antenna for GPS communication, or an antenna for short-range communication, a substrate, on which the at least one antenna is disposed, a wiring line for supply electric power to the at least one antenna, at least one element for controlling radiation of signals of the at least one antenna, and/or a support structure that supports the antenna structure.

A signal (or an electromagnetic wave) in a lateral direction that is radiated from an antenna array (e.g., a mmWave antenna array) included in the antenna structure 110_am may be partially reflected by the conductive plate 210 (e.g., mmWave deco structure) and be radiated toward a rear surface (and/or a front surface) of the portable electronic device 100_1. A radiation pattern in a rearward direction may be set differently depending on the width, thickness, number, or shape of a rib (or a wall or a bridge) of the conductive plate 210. The rib may be formed to be wider than a width between patch antennas of the antenna structure 110_am. As another example, the rib of the conductive plate 210 may be formed to be narrower than the width between the patch antennas of the antenna structure 110_am. As an example, the conductive plate 210 may include a rib having a width that is greater than the width between patch antennas of the antenna structure 110_am and a rib having a narrower width together. As another example, the width of the rib formed in the conductive plate 210 may be the same as or similar to the width between the patch antennas of the antenna structure 110_am. For example, the width of the rib formed in the conductive plate and the width between the patches of the antenna structure 110_am may be modified in various forms in correspondence to at least one of a signal radiation performance or an orientation performance through the antenna structure 110_am, or a main lobe and a side lobe in the radiation pattern.

The antenna array included in the antenna structure 110_am may be disposed such that a central portion of the patch antenna is misaligned with a central portion of the side opening 110a_h.

The antenna structure 110_am may be related to an antenna technology for transmitting and receiving frequencies in the mmWave band. In this regard, the portable electronic device 100_1 may include a first communication processor that supports a band corresponding to about 410 MHz to 7.125 GHz, and a second communication processor that supports a band corresponding to about 24.25 GHz to 52.6 GHz. The antenna structure 110_am includes an antenna array corresponding to the side opening 110a_h of the disclosure, and may be connected to a second communication processor to support a band corresponding to about 24.25 GHz to 52.6 GHz. The antenna array may be connected to the printed circuit board 170, on which the second communication processor is disposed, through a flexible PCB (FPCB). Due to the high frequency, the antenna performance of the mmWave antenna may be affected when there is a metal in the radiation direction. To improve this, it is possible to design the antenna such that a metal in the radiation direction is removed or the metal is avoided. The mmWave antenna may be divided into a vertical module or a horizontal module depending on the radiation direction. The horizontal module may be disposed to radiate a signal toward the rear surface (the rear case 191) of the portable electronic device 100_1, and the vertical module may be disposed to radiate a signal toward the side surface (e.g., the first side portion 110a) of the portable electronic device 100_1. The radiation of the horizontal module is not disturbed unless the rear case is formed of (or including) a metal (e.g., glass). When the rear case is formed of (or including) a metallic material, the rear case may also define a radiation hole by removing a portion of the metal similar to at least a portion of the side portions. The portable electronic device of the disclosure may include only a vertical module. The signal radiated from the vertical module may be partially irradiated in the rearward direction depending on the shape, position, and/or structure (e.g., the number, width, thickness, or position of the ribs) of the conductive plate 210. According to the disposition of the antenna structure 110_am and the communication support structure 200 of the disclosure, the portable electronic device may radiate signals in lateral and rearward directions by using only the vertical module without using the horizontal module. When the portable electronic device of the disclosure includes a horizontal module while including a metal in at least a partial region of the rear case (includes only the horizontal module or includes both the horizontal module and the vertical module), it may have a structure, in which a separate metal plate including a plurality of opening holes are coupled to the opening of the rear case as in the contents disclosed in the disclosure, without forming a plurality of opening holes in the rear case. The antenna array (or an antenna pattern portion) of the antenna structure 110_am may be disposed not in a lateral direction but in a forward direction, a rearward direction, or a diagonal direction, and radiation may be made in a lateral direction (or a forward direction or a rearward direction) of the portable electronic device through a radiation path formed through the frame structure and the communication support structure 200.

According to an embodiment, the antenna structure 110_am may be disposed to radiate at least a portion of the signal toward the side opening 110a_h formed at the first side portion 110a. The antenna structure 110_am, for example, may have a length in the x-axis direction that is greater than a length in the y-axis direction, but the disclosure is not limited thereto, and the antenna structure 110_am may have at least one of various shapes and sizes, by which signals may be transmitted in the direction of the first side portion 110a. As an example, the antenna structure 110_am may include a plurality of antenna blocks (or antenna elements) that are divided into a plurality of patch antennas or specific regions. As an example, the antenna structure 110_am may include an array antenna including a first antenna element (or a first antenna block) and a second antenna element (or a second antenna block). The antenna structure 110_am may be disposed between a sidewall that extends in the z-axis direction from a bottom surface of the support plate 110_bt and the injection side region 102_at.

The communication support structure 200 may be disposed to close at least a portion of the side opening 110a_h while at least a portion thereof is disposed to face the injection side portion 101_at. The communication support structure 200, for example, may include a first adhesive member 200a, a conductive plate 210, a second adhesive member 200b, a non-conductive plate 220 (or a blocking member or a cover member that blocks an opening, or a support member that supports other components of the communication support structure 200). Here, at least one of the first adhesive member 200a and the second adhesive member 200b may be excluded from the communication support structure 200. At least a portion of the communication support structure 200 may be referred to as an antenna window, an antenna cover, or an antenna lead.

The conductive plate 210 included in the communication support structure 200 may be formed to improve signal interferences of the antenna blocks disposed on the antenna structure 110_am. For example, at least a portion of the conductive plate 210 may include openings (or holes) that face antenna blocks disposed in the antenna structure 110_am, and ribs that correspond to boundaries between the antenna blocks and distinguish the openings. The conductive plate 210 may be attached onto the inner portion (e.g., the injection-molded portion 102 or the injection side region 102_at) of the housing 110, in which at least a portion of the outer portion of the housing 110 corresponds to a removed position thereof, through at least one adhesive member (e.g., the first adhesive member 200a). The conductive plate 210 may be adhered onto a periphery around a through hole or an opening of the inner portion (e.g., the injection-molded portion 102 or the injection side region 102_at) that may be approached from the outer portion of the housing 110 through an adhesive member (e.g., the first adhesive member 200a). At least a portion or the entirety of the conductive plate 210 may have a flat plate shape. Alternatively, the conductive plate 210 may at least partially include a curved portion. At least a portion of the conductive plate 210 may be formed to have a different thickness from those of the other portions of the conductive plate 210. The conductive plate 210 may be referred to as a conductive member, a conductive panel, or a conductive structure.

According to an embodiment, the conductive plate 210 may have a protrusion formed at a periphery thereof. The protrusion of the conductive plate 210 may be mechanically coupled to a periphery (or at least one groove or boss connected to the side opening 110a_h) of the side opening 110a_h or may be coupled thereto through a fastening member (a screw or a spring). The conductive plate 210 may be electrically connected to the housing 110 (e.g., at least a portion of an outer portion). The conductive plate 210 may be electrically connected to the housing (e.g., at least a portion of the outer portion) and/or the antenna structure 110_am, and may function as at least a portion of the antenna of the portable electronic device 100_1. The conductive plate 210 may be electrically connected to the housing (e.g., at least a portion of the outer portion) and/or an antenna structure 110_am, and may function as at least a portion of a slit antenna. The conductive plate 210 may be electrically connected to a ground (or a ground region of the antenna structure 110_am) of the portable electronic device 100_1. At least a portion of the first adhesive member 200a and the second adhesive member 200b may include a conductive material. The first adhesive member 200a and the second adhesive members 200b (or at least one adhesive member) may have a shape corresponding to a shape of at least a portion (or the entirety) of the conductive plate 210. For example, at least one of the first adhesive member 200a and the second adhesive members 200b may have a shape corresponding to the openings and the ribs of the conductive plate 210.

According to an embodiment, the width (or thickness) of one or more of the plurality of ribs (or the plurality of walls) disposed on the conductive plate 210 may be different from the widths of one or more other ribs. The shapes (or sizes) of one or more of the openings formed in the conductive plate 210 may be different from the shapes (or sizes) of one or more others of the openings formed in the conductive plate 210. One or more of the openings of the conductive plate 210 (e.g., openings disposed at the center thereof) may have a polygonal shape that is defined by the ribs. Side surfaces of one or more (e.g., openings located at a periphery) of the openings of the conductive plate 210 may include a straight line and a curve.

The non-conductive plate 220 may serve to prevent movement of the conductive plate 210 while the conductive plate 210 faces the antenna structure 110_am. Furthermore, the non-conductive plate 220 may serve to close the side opening above 110a_h to prevent introduction of foreign substances through the side opening 110a_h. Furthermore, the non-conductive plate 220 is formed in the same or similar size to that of the side opening 110a_h and has the same or similar color and texture to those of the periphery of the first side portion 110a to provide continuity of design (or cognitive blocking and aesthetic effects of the side opening 110a_h or a sense of unity with the surroundings). At least a portion of the non-conductive plate 220 may be formed of (or including) a non-conductive material. As an example, the non-conductive plate 220 may be formed of (or including) glass or plastic. The non-conductive plate 220 may be formed by applying opaque or translucent printing to transparent glass. A surface formed on the exterior by the non-conductive plate 220 may coincide with a side surface (e.g., an outer surface of the first side portion 110a) of the housing or may be lower than the side surface of the housing 110. The non-conductive plate 220 may be formed of (or including) plastic having a fabric or grill structure. The non-conductive plate 220 disposed in the side opening 110a_h may be formed by stacking two or more dielectrics having different dielectric constants. According to various embodiments, at least a portion or the entirety of the non-conductive plate 220 may be formed in a flat plate shape. Alternatively, at least a portion of the non-conductive plate 220 may include a curved portion. A thickness of a portion of the non-conductive plate 220 may be different from that of the other portions of the non-conductive plate 220. The non-conductive plate 220 may be referred to as a non-conductive member, a cover member, or an antenna cover member.

Meanwhile, for a description of the configuration of the above-described portable electronic device 100_1, the display 160, the housing 110, the printed circuit board 170, the rear cover 192, the rear case 191, the camera device 140, the antenna structure 110_am, and the communication support structure 200 have been exemplified, but the disclosure is not limited thereto. For example, the portable electronic device 100_1 of the disclosure may further include a battery, an input/output interface, and/or a key input device.

The above-described portable electronic device 100_1 according to the embodiment of the disclosure may provide a degree of freedom, by which the conductive plate 210 may be deformed, for example, depending on modification of the form, modification of size, or modification of disposition of the antenna blocks of the antenna structure 110_am by providing the conductive plate 210 that may affect a radiation performance of the antenna structure 110_am without forming the conductive plate 210 in the side opening 110a_h, may lower a difficulty level of machining of the housing 110 by simplifying formation of the side opening 110a_h, and may support various modifications of the signal radiation direction in the antenna structure 110_am depending on an intention of the designer.

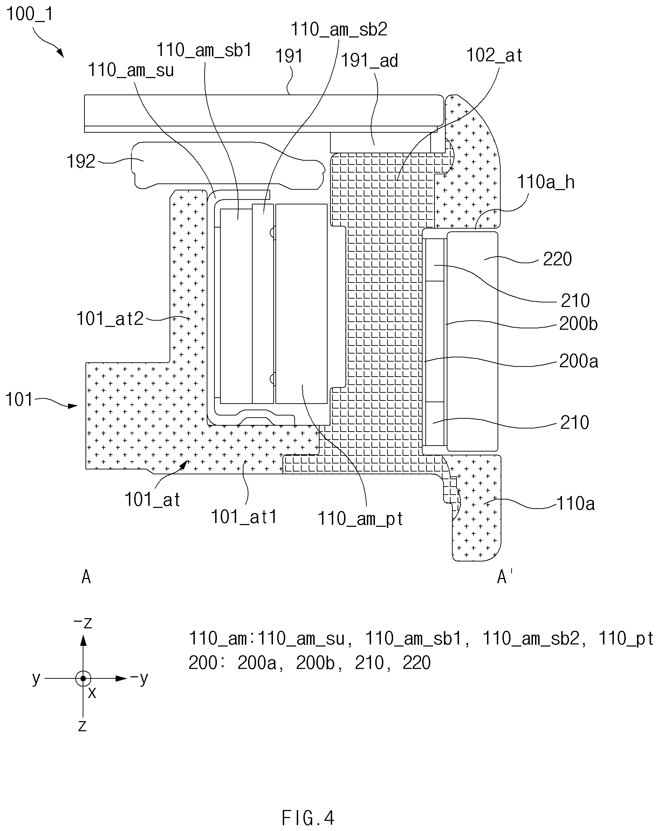

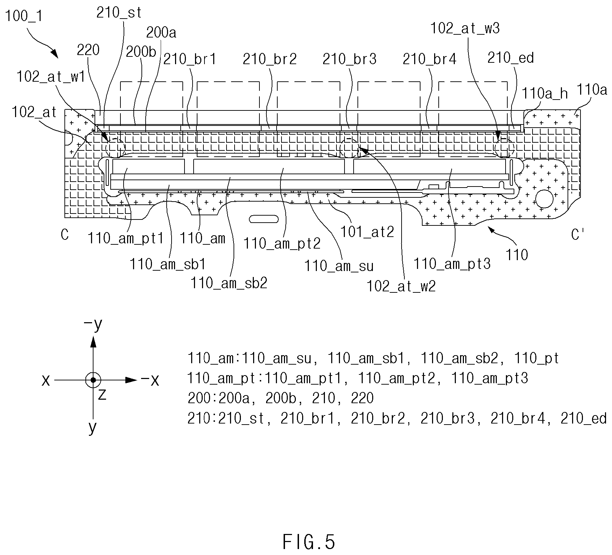

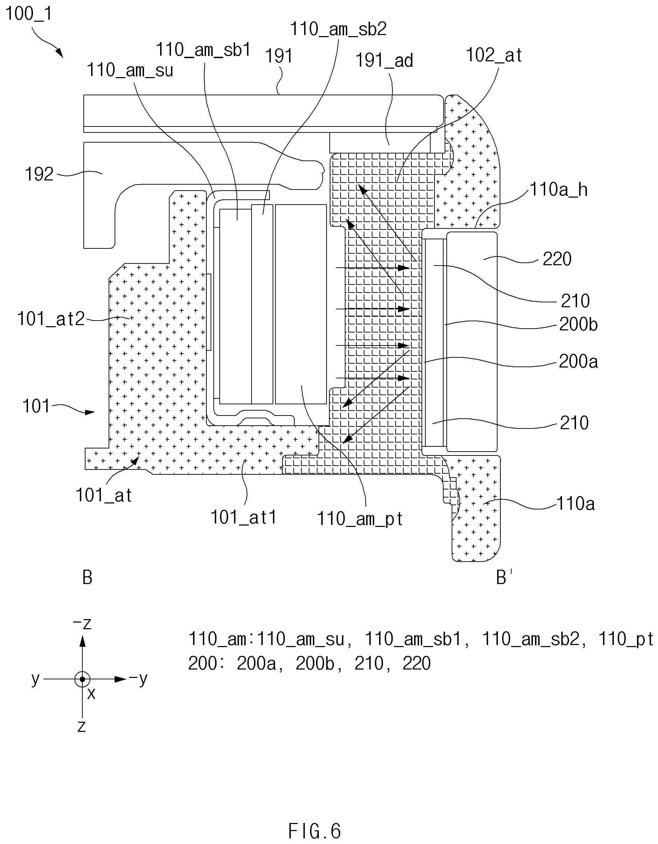

FIG. 4 is a view illustrating an example of a cross section of a portable electronic device according to an embodiment, at a first position. FIG. 5 is a view illustrating an example of a cross section of a portable electronic device according to an embodiment, at a second position. FIG. 6 is a view illustrating an example of a cross section of a portable electronic device according to an embodiment, at a third position.

As an example, FIG. 4 is a view illustrating an example of a cross section of the portable electronic device 100_1 taken along cutting line A-A' of FIG. 3. The position of cutting line A-A' may be a position, in which a region, in which the rib of the conductive plate 210 is not formed, or a region, in which the opening of the conductive plate 210 is formed, is cut. As an example, FIG. 5 is a view illustrating an example of a cross section of the portable electronic device 100_1 taken along cutting line C-C' of FIG. 3. The position of cutting line C-C' may be a position, in which the conductive plate 210 is cut in a lengthwise direction of the first side portion 110a. As an example, FIG. 6 is a view illustrating an example of a cross section of the portable electronic device 100_1 taken along cutting line B-B' of FIG. 3. The position of cutting line B-B' may be a position, in which a region, in which the rib of the conductive plate 210 is formed, is cut.

Referring to FIGS. 1 to 6, at least a portion of the portable electronic device 100_1 according to an embodiment may include a housing 110, a rear case 191 disposed on the rear surface of the housing 110, a rear cover 192, an antenna structure 110_am, and a communication support structure 200. A case adhesive member 191_ad may be disposed between a periphery of the rear case 191 and the housing 110. The case adhesive member 191_ad may define a band while being disposed along the periphery of the rear case 191. The case adhesive member 191_ad may be disposed on the injection-molded portion 102 of the housing 110. At least a portion of the rear cover 192 may be disposed to cover at least a portion of an upper portion (e.g., a lower portion with respect to the z-axis direction) of the antenna structure 110_am.

The housing 110 may include a machined portion 101 and an injection-molded portion 102, and the machined portion 101 may include an antenna disposition region 101_at, in which the antenna structure 110_am may be disposed. The antenna disposition region 101_at may include a first antenna support region 101_at1 that faces (or supports) one side (e.g., a bottom portion in the z-axis direction) of the antenna structure 110_am, and a second antenna support region 101_at2 that faces (e.g., supports) an opposite side (e.g., a periphery in the y-axis direction) of the antenna structure 110_am. With reference to the currently illustrated drawing, a periphery (e.g., a y-axis periphery) on one side of the first antenna support region 101_at1 may be connected to a periphery (e.g., a z-axis periphery) of a lower end of the second antenna support region 101_at2. As an example, the cross sections of the first antenna support region 101_at1 and the second antenna support region 101_at2 in the z-axis direction may form an L-shape with respect to the z-axis direction. The rear cover 192 and the antenna disposition region 101_at may be disposed to surround three surfaces of the antenna structure 110_am. In this regard, the z-axis cross sections of the rear cover 192 and the antenna disposition region 101_at may be formed in a "C" shape, of which the -y-axis direction (or the direction, in which the communication support structure 200 is disposed or the direction of the first side portion 110a, in which the side opening 110a_h is formed) is opened.

The injection side region 102_at (or the inner portion) is a portion of the injection-molded portion 102 of the housing 110, and may include a region that at least a portion of the antenna structure 110_am faces. At least a portion (e.g., a periphery at a y-axis lower end) of the lower end (an upper end with respect to the z axis) of the injection side region 102_at may be connected to one side (e.g., a second antenna support region 101_at2) of the machined portion 101. At least another portion (e.g., peripheries at an upper end and a lower end in the -y-axis direction) of the upper end and the lower end (e.g., the lower end and the upper end with respect to the z axis) of the injection side region 102_at may be connected to opposite sides (e.g., the upper end and the lower end of the first side portion 110a) of the machined portion 101. A recess that is recessed (or engraved) in the -y-axis direction may be formed on one surface of the injection side region 102_at, which faces the y-axis direction. For example, heights of the upper end and the lower end (the upper end and the lower end with respect to the z axis) of the injection side region 102_at in the y-axis direction, and a height of the central portion thereof in the y-axis direction may be different. Alternatively, an empty space may be formed (or disposed) between a central portion of the antenna structure 110_am in the -y-axis direction and a central portion of the injection side region 102_at in the y-axis direction. As another example, at least one isolation wall (e.g., isolation walls 102_w1, 102_at_w2, and 102_at_w3) that is formed long in the z-axis direction may be disposed at a central portion of the injection side region 102_at in the y-axis direction. As an example, the upper end and the lower end of the injection side region 102_at may be disposed to face or contact the upper end and the lower end of the antenna structure 110_am in the -y-axis direction. A pattern that radiates signals may be disposed at a central portion of the antenna structure 110_am in the -y-axis direction.

A recess that is recessed (or engraved) in the y-axis direction may be formed on one surface of the injection side region 102_at, which faces the -y-axis direction. For example, heights of the upper end and the lower end (the lower end and the upper end with respect to the z axis) of the injection side region 102_at in the y-axis direction, and a height of the central portion thereof in the y-axis direction may be different. The upper end and the lower end of the injection side region 102_at in the -y-axis direction may be formed to face or contact at least a portion of the -z-axis upper end and the z-axis lower end of the first side portion 110a that defines the side opening 110a_h. At least a portion of the communication support structure 200 may be seated in a recess formed in the central portion of the injection side region 102_at in the -y-axis direction. As an example, at least a portion of the first adhesive member 200a of the communication support structure 200 and the conductive plate 210 may be disposed in the recess formed of the injection side region 102_at in the -y-axis direction. Alternatively, the conductive plate 210 may be adhered to one surface (or a bottom surface of the recess) of the injection side region 102_at in the -y-axis direction through the first adhesive member 200a. The conductive plate 210 may serve to reduce signal interferences between patterns of an antenna pattern portion 110_am_pt disposed on the antenna structure 110_am, and to guide the signals irradiated from the antenna pattern portion 110_am_pt such that they are irradiated in a designated direction. In this regard, the plurality of openings formed in the conductive plate 210 with respect to the y-axis direction may be disposed to face the patterns of the antenna pattern portion 110_am_pt. A height (e.g., a height in the z-axis direction) of the recess of the injection side region 102_at in the -y-axis direction may be formed to be the same as or similar to a height (e.g., a height in the z-axis direction) of the side opening 110a_h. At least a portion of a cross part of the injection side region 102_at in the z-axis direction may include an "I"-shape, of which horizontal lengths of the upper end and the lower end are greater than the horizontal length of the center thereof.

According to an embodiment, with respect to the y-axis and -y-axis directions, at least a portion of a central portion of the antenna structure 110_am, at least a portion of a central portion of the injection side region 102_at (or the injection-molded portion 102), and at least a portion of a central portion (e.g., a central portion of the opening with respect to the z-axis direction) of the side opening 110a_h may be disposed to overlap each other. As an example, with respect to the y-axis direction (or a horizontal direction that is parallel to the display 160 of the portable electronic device 100_1 when the display 160 of the portable electronic device 100_1 is disposed to face a top), a portion of the antenna structure 110_am, at which the antenna (or the patch antenna) is disposed, may be disposed to overlap a central portion of the injection side region 102_at and a central portion of the side opening 110a_h.

The communication support structure 200 may include a first adhesive member 200a, a conductive plate 210, a second adhesive member 200b, and a non-conductive plate 220. Referring to FIG. 5, the conductive plate 210 may include a plurality of openings, peripheries 210_st and 210_ed that define the openings, and ribs 210_br1, 210_br2, 210_br3, and 210_br4 that connect the peripheries 210_st and 210_ed. The peripheries 210_st and 210_ed may be disposed in parallel while being spaced apart from each other at a specific interval. Alternatively, opposite ends of the peripheries 210_st and 210_ed may be connected to each other. The number of the ribs 210_br1, 210_br2, 210_br3, and 210_br4 may vary depending on the number of the patterns of the antenna pattern portion 110_am_pt formed in the antenna structure 110_am. The sizes and shapes of the ribs 210_br1, 210_br2, 210_br3, and 210_br4 may vary depending on the size and shape of the antenna pattern portion 110_am_pt formed in the antenna structure 110_am. A width of at least one (e.g., 210_br1) of the ribs 210_br1, 210_br2, 210_br3, and 210_br4 may be greater than an interval between the antenna elements (e.g., 110_am_pt1 and 110_am_pt2) of the antenna pattern portion. At least one (e.g., 210_br1) of the ribs 210_br1, 210_br2, 210_br3, and 210_br4 may be disposed to cover a spaced space between antenna elements (e.g., 110_am_pt1 and 110_am_pt2) of the antenna pattern portion. At least one (e.g., 210_br2) of the ribs 210_br1, 210_br2, 210_br3, and 210_br4 may be disposed such that the width of the rib overlaps the antenna element (e.g., 110_am_pt2) of the antenna pattern portion in the y-axis direction. As an example, at least one (e.g., 210_br2) of the ribs 210_br1, 210_br2, 210_br3, and 210_br4 may be disposed to overlap a substantial central portion of an antenna element 110_am_pt2 of the antenna pattern portion. Referring to FIG. 6, at least a portion of a signal irradiated from the antenna pattern portion 110_am_pt may be reflected or refracted by the rib formed in the conductive plate 210 and a periphery of the conductive plate 210. The signals reflected by the ribs and the peripheries of the conductive plate 210 may be irradiated in the rearward or forward directions of the portable electronic device 100_1, and may form a new signal transmission/reception path.

The non-conductive plate 220 of the communication support structure 200 may be disposed to close at least a portion of the side opening 110a_h. Correspondingly, at least a portion of an upper end and a lower end of the non-conductive plate 220 may be disposed to face or contact at least a portion of an upper end and a lower end of the first side portion 110a, which defines the side opening 110a_h. The configuration of the communication support structure 200 disposed in the side opening 110a_h may vary depending on the depth (or a depth in the y-axis direction) of the recess of the injection side region 102_at in the -y-axis direction. As an example, when the depth of the recess of the side opening 110a_h in the -y-axis direction is a first depth, the conductive plate 210, the second adhesive member 200b, and the non-conductive plate 220 may be disposed in a region of the side opening 110a_h. As an example, when the depth of the recess of the side opening 110a_h in the -y-axis direction is a second depth (e.g., a depth that is greater than the first depth), the conductive plate 210 may be located in the injection side portion 101_at, and at least a portion of the second adhesive member 200b and the non-conductive plate 220 may be disposed in a region of the side opening 110a_h.

The antenna structure 110_am may include an antenna pattern portion 110_am_pt, a first antenna substrate 110_am_sb1, a second antenna substrate 110_am_sb2, and a substrate support member 110_am_su.

The antenna pattern portion 110_am_pt may include a portion (or a portion, on which a metal pattern is deposited), on which the metal pattern for radiating signals is disposed. Referring to FIG. 5, the antenna pattern portion 110_am_pt, for example, may include a plurality of antenna blocks 110_am_pt1, 110_am_pt2, and 110_am_pt3. Alternatively, a plurality of antenna patterns (or patch antennas) may be disposed in one antenna block. As an example, one antenna pattern (or patch antenna) may be disposed in the first antenna block 110_am_pt1, and a plurality of antenna patterns (e.g., two patterns or patch antennas) may be disposed in the second antenna block 110_am_pt2 or the third antenna block 110_am_pt3. The antenna structure 110_am according to an embodiment of the disclosure is not limited to the number of the antenna blocks. For example, the antenna structure 110_am may include only a first antenna element corresponding to the first antenna block 110_am_pt1 and a second antenna element corresponding to the second antenna block 110_am_pt2. One antenna pattern may be disposed in one antenna block or a plurality of antenna patterns may be disposed. As an example, all antenna blocks included in the antenna structure 110_am may include only one antenna pattern or may include a plurality of antenna patterns.

The first antenna substrate 110_am_sb1 may include a substrate, on which a first wiring line that supplies a signal to the antenna pattern portion 110_am_pt is formed. The second antenna substrate 110_am_sb2 may include a substrate, on which a second wiring line that supplies a signal to the antenna pattern portion 110_am_pt is formed. Alternatively, the second antenna substrate 110_am_sb2 supports the first antenna substrate 110_am_sb1, and may include a substrate, on which a ground region is disposed. The substrate support member 110_am_su may support the antenna substrates 110_am_sb1 and 110_am_sb2 and the antenna pattern portion 110_am_pt. The substrate support member 110_am_su may be fixed to the antenna disposition region 101_at to support the antenna structure 110_am. Meanwhile, the structure of the antenna structure 110_am described above may be modified or changed, and thus, the antenna structure 110_am of the disclosure is not limited to the form illustrated in the drawing. For example, in the antenna structure 110_am of the disclosure, the lamination form, the lamination order, and/or the characteristics of each of the laminated layers may vary depending on a change in design. Alternatively, at least a portion of the antenna structure 110_am described above may be excluded.

As described above, the portable electronic device 100_1 of the disclosure provides a structure, in which the conductive plate 210 that affects radiation of signals of the antenna structure 110_am is separately provided regardless of the housing 110 and then, is disposed at the injection side region 102_at. Accordingly, the portable electronic device 100_1 of the disclosure may provide a process environment that is easier than a process of forming a structure corresponding to the conductive plate 210 at the first side portion 110a of the housing 110, at which the side opening 110a_h is formed, while securing a signal radiation performance of the antenna structure 110_am by the conductive plate 210.

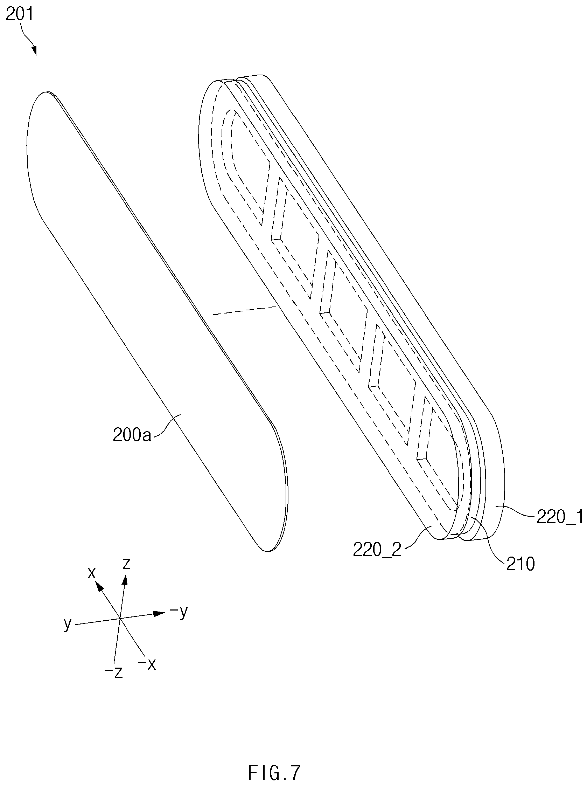

FIG. 7 is a view illustrating an example of a first communication support structure according to an embodiment. The first communication support structure 201 illustrated in FIG. 7 may replace the communication support structure 200 described above. Accordingly, the description related to the portable electronic device 100_1 described above with reference to FIGS. 1 to 6 may be equally applied to the portable electronic device, to which the first communication support structure 201 is applied.

Referring to FIGS. 1 to 7, the first communication support structure 201 may include a first non-conductive plate 220_1, a conductive plate 210, a second non-conductive plate 220_2, and a first adhesive member 200a.

The first non-conductive plate 220_1 and the second non-conductive plate 220_2 may have the same material or similar material. As an example, the first non-conductive plate 220_1 and the second non-conductive plate 220_2 may be formed of (or including) a polymer material or an injection material. The first non-conductive plate 220_1 and the second non-conductive plate 220_2 may be formed to be same as or similar to the size of the side opening 110a_h. As an example, the first non-conductive plate 220_1 and the second non-conductive plate 220_2 may have the same x-axis and z-axis lengths. A thickness (e.g., a y-axis length) of the first non-conductive plate 220_1 may be different from a thickness (e.g., a y-axis length) of the second non-conductive plate 220_2. As an example, a thickness of the first non-conductive plate 220_1 may be greater than a thickness of the second non-conductive plate 220_2. Alternatively, a thickness of the second non-conductive plate 220_2 may be smaller than that of the first non-conductive plate 220_1.

According to an embodiment, the first non-conductive plate 220_1 and the second non-conductive plate 220_2 may be simultaneously formed through the same injection process. In this process, the conductive plate 210 may be disposed between the first non-conductive plate 220_1 and the second non-conductive plate 220_2. In this regard, an injection structure including the conductive plate 210, in which the first non-conductive plate 220_1, the conductive plate 210, and the second non-conductive plate 220_2 are integrally formed, may be formed by using a mold, in which a space corresponding to the first non-conductive plate 220_1 and the second non-conductive plate 220_2, and a space, in which the conductive plate 210 is disposed.

The conductive plate 210 may be formed of (or including) a material that is different from that of the first non-conductive plate 220_1 and the second non-conductive plate 220_2. For example, at least a portion of the conductive plate 210 may be formed of (or including) a metallic material. As described above, the conductive plate 210 may include peripheries (e.g., the peripheries 210_st and 210_ed of FIG. 5) and ribs (e.g., the ribs 210_br1, 210_br2, 210_br3, and 210_br4 of FIG. 5), and may include openings that are divided by the peripheries and the ribs. In the injection structure including the conductive plate 210, the openings of the conductive plate 210 may be filled by at least a portion of the first non-conductive plate 220_1 or the second non-conductive plate 220_2. Alternatively, an injection material that forms the first non-conductive plate 220_1 or the second non-conductive plate 220_2 may be disposed in the opening region of the conductive plate 210. The overall size (or a size of the exterior thereof, which is defined by the peripheries) of the conductive plate 210 may have a size corresponding to the size of the first non-conductive plate 220_1 or the second non-conductive plate 220_2 on the xz plane. A thickness (e.g., a y-axis length) of the conductive plate 210 may be smaller than a thickness of the first non-conductive plate 220_1, and may be a thickness (e.g., a y-axis length) of the second non-conductive plate 220_2 or less. The entire y-axis thickness of the injection structure including the conductive plate 210 may be similar to or greater than a thickness (e.g., a y-axis depth of the opening) of the side opening 110a_h. Alternatively, a thickness of the first non-conductive plate 220_1 may be similar to a depth of the side opening 110a_h, and a sum of the thicknesses of the second non-conductive plate 220_2 and the conductive plate 210 may have a size corresponding to the depth of the recess formed in the -y-axis direction of the injection side region 102_at.

The first adhesive member 200a may include a double-sided tape. Alternatively, the first adhesive member 200a may include an adhesive material that is applied onto one surface (e.g., a surface that faces the y-axis direction) of the second non-conductive plate 220_2. Considering a state, in which an injection structure including the conductive plate 210 is disposed in the portable electronic device 100_1, the first adhesive member 200a may be disposed between the injection side region 102_at and the second non-conductive plate 220_2. Alternatively, the first adhesive member 200a may adhere the second non-conductive plate 220_2 to one surface (e.g., a surface that faces the -y-axis direction) of the injection side region 102_at. When a state, in which the second non-conductive plate 220_2, and the conductive plate 210 and the first non-conductive plate 220_1 are integrated, is maintained, the first adhesive member 200a may serve to adhere the second non-conductive plate 220_2, the conductive plate 210, and the first non-conductive plate 220_1 to one surface of the injection side region 102_at.

As described above, the first communication support structure 201 according to an embodiment of the disclosure may provide the conductive plate 210 as an integrated injection structure that is disposed between the first non-conductive plate 220_1 and the second non-conductive plate 220_2 to improve the easiness of insertion and assembly of the side opening 110a_h.

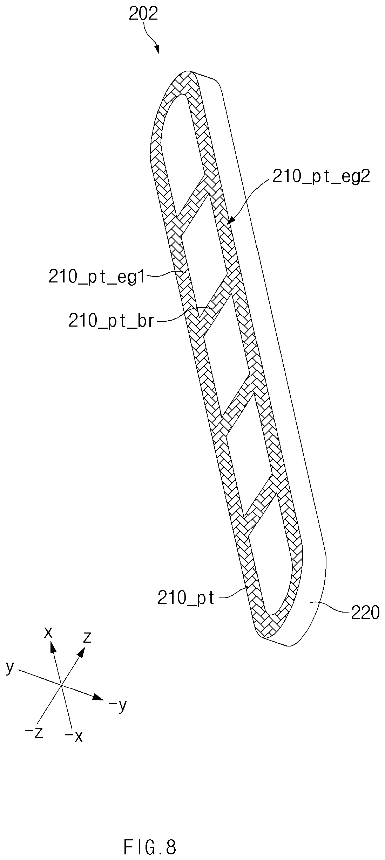

FIG. 8 is a view illustrating an example of some components of a second communication support structure according to an embodiment. The second communication support structure 202 illustrated in FIG. 8 may replace at least a portion of the above-described communication support structure 200 or an integrated injection structure including the first non-conductive plate 220_1, the conductive plate 210, and the second non-conductive plate 220_2 of the first communication support structures 201 described in FIG. 7. Accordingly, the description related to the portable electronic device 100_1 described above with reference to FIGS. 1 to 6 may be equally applied to the portable electronic device, to which the second communication support structure 202 is applied.

Referring to FIGS. 1 to 8, the second communication support structure 202 may include a non-conductive plate 220 and a metal pattern 210_pt.

The non-conductive plate 220 may have a configuration that is the same as or similar to that of the non-conductive plate described in FIGS. 1 to 6. As an example, the non-conductive plate 220, for example, may have a thickness (e.g., a y-axis length) that is the same as a depth (e.g., a depth in the y-axis direction) of the side opening 110a_h. Alternatively, the non-conductive plate 220 may have a thickness that is similar to a sum of the depth of the side opening 110a_h and the depth of the recess of the injection side region 102_at in the -y-axis direction, which have been described above in FIG. 4. In this process, the thickness of the non-conductive plate 220 may be greater than the depth of the side opening 110a_h.

The metal pattern 210_pt may be formed on one surface of the non-conductive plate 220. For example, the metal pattern 210_pt may be formed on one surface of the non-conductive plate 220 in the y-axis direction. The metal pattern 210_pt, for example, may include periphery patterns 210_pt_eg1 and 210_pt_eg2 and rib patterns 210_pt_br. The periphery patterns 210_pt_eg1 and 210_pt_eg2 include a first periphery pattern 210_pt_eg1 that is formed at a periphery (a periphery of portions of one surface formed long in the x axis, which is located in the -z-axis direction) of a lower end of the non-conductive plate 220, and a second periphery pattern 210_pt_eg2 that is formed at a periphery (a periphery of portions of one surface formed long in the x axis, which is located in the z-axis direction) of an upper end of the non-conductive plate 220. The first periphery pattern 210_pt_eg1 and the second periphery pattern 210_pt_eg2 may be disposed to be spaced apart from each other by a length of the rib patterns 210_pt _br that are formed parallel to each other in the z-axis direction. The x-axis and -x-axis peripheries of the first periphery pattern 210_pt_eg1 and the second periphery pattern 210_pt_eg2 may be connected to each other. A plurality of rib patterns 210_pt_br may be disposed between the first periphery pattern 210_pt_eg1 and the second periphery pattern 210_pt _eg2 at regular intervals. The positions, in which the rib patterns 210_pt_br are formed, may include positions corresponding to the ribs 210_br1, 210_br2, 210_br3, and 210_br4 described above with reference to FIG. 5. The metal pattern 210_pt may define openings by the first and second periphery patterns 210_pt_eg1 and 210_pt_eg2 and the rib patterns 210_pt_br, and at least a portion of one surface of the non-conductive plate 220 may be exposed in the y-axis direction through the openings of the metal patterns 210_pt. Additionally or alternatively, the first adhesive member 200a described above may be disposed on the metal pattern 210_pt. Alternatively, when the metal pattern 210_pt includes an adhesive paste, a separate first adhesive member 200a is not added, and the metal pattern 210_pt formed on the non-conductive plate 220 may be adhered to one surface of the injection side region 102_at without a separate additional configuration.

Because the metal pattern 210_pt is formed on the non-conductive plate 220, the above-described second communication support structure 202 may provide a communication support structure that uses a smaller amount of metal material than the first communication support structure 201 or the communication support structure 200 that uses the conductive plate 210. Furthermore, when the metal pattern 210_pt is formed, it may be formed to be thinner than the conductive plate 210 described above.

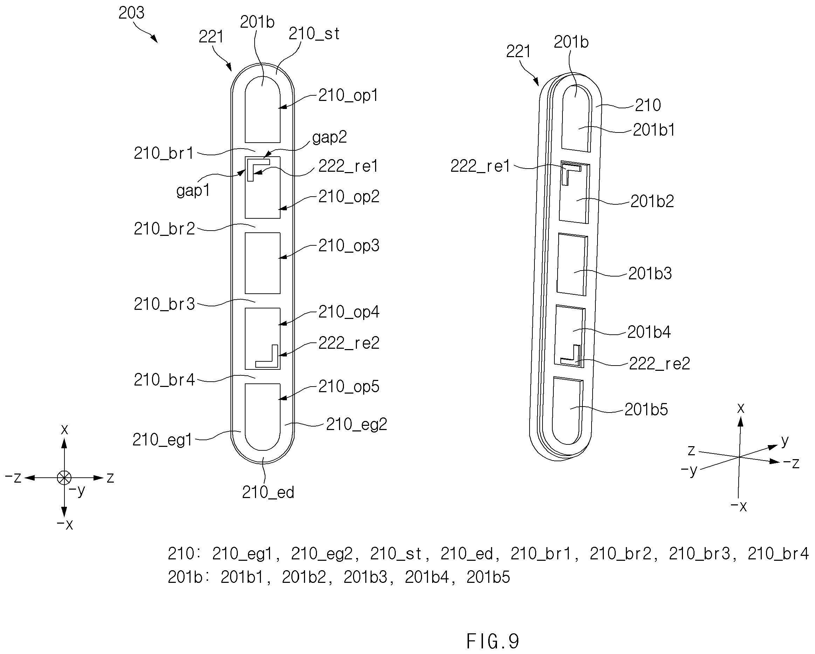

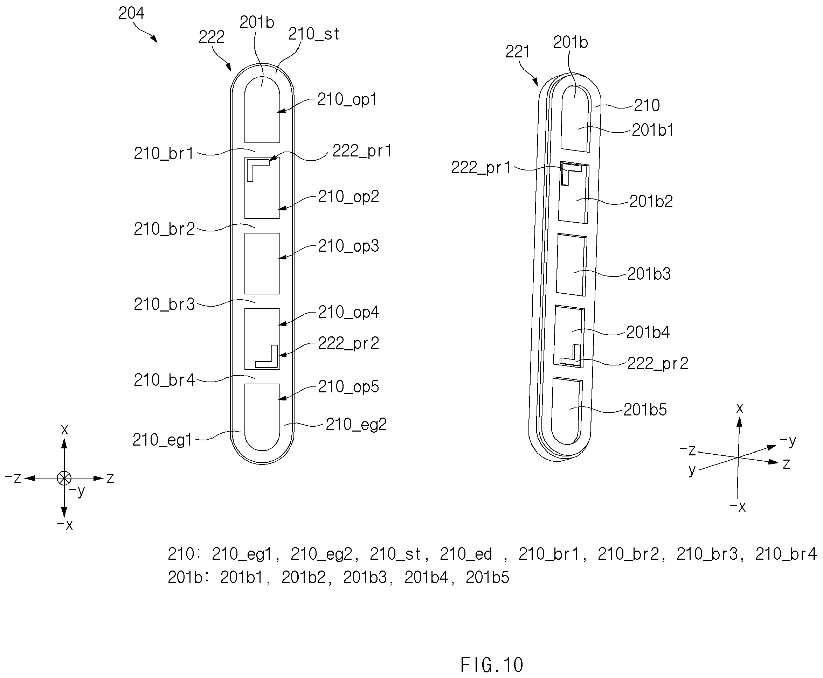

FIG. 9 is a view illustrating an example of some components of a third communication support structure according to an embodiment. FIG. 10 is a view illustrating an example of some components of a fourth communication support structure according to an embodiment. The third communication support structure 203 described in FIG. 9 and the fourth communication support structure 204 described in FIG. 10 correspond to an example of a modification form of the above-described communication support structure, and the portable electronic device, to which the third communication support structure 203 or the fourth communication support structure 204 is applied, may include at least a portion of the description related to the portable electronic device 100_1 described above in FIGS. 1 to 6.

Referring to FIGS. 1 to 9, the third communication support structure 203 may include a first modified non-conductive plate 221, a first modified adhesive member 201b, and a conductive plate 210.

The conductive plate 210 may have the same or similar configuration to the conductive plate 210 described with reference to FIGS. 1 to 7. As an example, the conductive plate 210 may include a first side portion periphery 210_eg1, a second side portion periphery 210_eg2, a first periphery 210_st, and a second periphery 210_ed, and a plurality of ribs 210_br1, 210_br2, 210_br3, and 210_br4. When the third communication support structure 203 is located on the side opening 110a_h, the first side portion periphery 210_eg1 may be located in the -z-axis direction, and the second side portion periphery 210_eg2 may be located in the z-axis direction. The first side portion periphery 210_eg1 may have a bar shape, of which a length in the x-axis direction is greater than a length in the z-axis direction. The second side portion periphery 210_eg2 may have a length and a thickness that are the same as those of the first side portion periphery 210_eg1. The second side portion periphery 210_eg2 may be disposed to be spaced apart from the first side portion periphery 210_eg1 at a specific interval (e.g., by a length of one rib). The first periphery 210_st may connect ends (e.g., ends in the x-axis direction) of the first side portion periphery 210_eg1 and the second side portion periphery 210_eg2. At least a portion of the first periphery 210_st may form a curve. The second periphery 210_ed may connect opposite ends (e.g., ends in the -x-axis direction) of the first side portion periphery 210_eg1 and the second side portion periphery 210_eg2. At least a portion of the second periphery 210_ed may form a curve. As an example, the second periphery 210_ed may include the same or similar shape to that of the first periphery 210_st. Alternatively, with respect to a central portion of the conductive plate 210, the second periphery 210_ed may have a position and a shape that are symmetrical to those of the first periphery 210_st.

The conductive plate 210 may include a plurality of a plurality of openings 210_op1, 210_op2, 210_op3, 210_op4, and 210_op5 that are divided by the first side portion periphery 210_eg1, the second side portion periphery 210_eg2, the first periphery 210_st and the second periphery 210_ed, and the plurality of ribs 210_br1, 210_br2, 210_br3, and 210_br4. As an example, the first opening 210_op1 may be defined by a first side portion periphery 210_eg1, a second side portion periphery 210_eg2, a first periphery 210_st, and a first rib 210_br1. The second opening 210_op2 may be defined by a first side portion periphery 210_eg1, a second side portion periphery 210_eg2, a first rib 210_br1, and a second rib 210_br2. The third opening 210_op3 may be defined by a first side portion periphery 210_eg1, a second side portion periphery 210_eg2, a second rib 210_br2, and a third rib 210_br3. The fourth opening 210_op4 may be defined by a first side portion periphery 210_eg1, a second side portion periphery 210_eg2, a third rib 210_br3, and a fourth rib 210_br4. The fifth opening 210_op5 may be defined by a first side portion periphery 210_eg1, a second side portion periphery 210_eg2, a fourth rib 210_br4, and a second periphery 210_ed. The openings 210_op1, 210_op2, 210_op3, 210_op4, and 210_op5 may have different shapes depending on the side portion peripheries, the peripheries, and the ribs that are defined. For example, as the first opening 210_op1 and the fifth opening 210_op5 are defined by the first periphery 210_st and the second periphery 210_ed, at least a portion of a region formed by a straight line and a curved line may be included. The second opening 210_op2, the third opening 210_op3, and the fourth opening 210_op4 may include a region (e.g., a rectangular region) that is formed only in a straight line as they are defined by the side portion peripheries 210_eg1 and 210_eg2 and the ribs 210_eg2. However, the disclosure is not limited thereto, and the conductive plate 210 may include various types of opening shapes, such as a polygon (e.g. a triangle), a circle, an ellipse, or a free curve depending on modification of the shapes of the side portion peripheries 210_eg1 and 210_eg2 and the ribs 210_br1, 210_br2, 210_br3, and 210_br4. The shape of one or more of the openings may be different to the shape of one or more other openings. For example, one of the shapes may be a mirror image of the other(s), or may comprise an inverted version of the other(s). Further, openings of different shapes may be arranged in a repeating or non-repeating pattern.

The first modified non-conductive plate 221 may have an x-axis length that is greater than a y-axis length or a z-axis length and a z-axis length that is greater than a y-axis length. At least a portion of the first modified non-conductive plate 221 may be formed of (or including) a non-metallic material. A size of the first modified non-conductive plate 221 may have a size corresponding to the size of the side opening 110a_h. The first modified non-conductive plate 221, for example, may have a thickness that is greater than that of the conductive plate 210 or the first modified adhesive member 201b. When the third communication support structure 203 is disposed in the side opening 110a_h, at least a portion of one surface (e.g., one surface in the -y-axis direction) of the first modified non-conductive plate 221 may be exposed to the outside.

According to an embodiment, the first modified non-conductive plate 221 may include a first guide groove 222_re1 and a second guide groove 222_re2 that are provided on one side thereof. The first guide groove 222_re1 may be disposed at a first position (or point) of the first modified non-conductive plate 221, and the second guide groove 222_re2 may be disposed at a second position (or point) of the first modified non-conductive plate 221. The first position and the second position may be positions that are spaced apart from each other by a specific distance.

As an example, at least a portion of the first guide groove 222_re1 may include a shape that is engraved on a surface of the first modified non-conductive plate 221 (e.g., a shape that is engraved in the y-axis to -y-axis direction). In a process of coupling the conductive plate 210, the first guide groove 222_re1 may include a corner region, at least a portion of which is bent for alignment of the first modified non-conductive plate 221 and the conductive plate 210 at a first point.

Similar to the first guide groove 222_re1, at least a portion of the second guide groove 222_re2 may include a shape that is engraved on a surface of the first modified non-conductive plate 221 (e.g., a shape that is engraved in the y-axis to -y-axis direction). In a process of coupling the conductive plate 210, the second guide groove 222_re2 may include a corner region, at least a portion of which is bent for alignment of the first modified non-conductive plate 221 and the conductive plate 210 at a second point. As an example, the first guide groove 222_re1 and the second guide groove 222_re2 may have the same shape (e.g., an "L" shape). Disposition forms of the first guide groove 222_re1 and the second guide groove 222_re2 may be the same or different.

According to an embodiment, the first guide groove 222_re1 may be disposed on the first modified non-conductive plate 221 corresponding to a region of the second opening 210_op2. The second guide groove 222_re2 may be disposed on the first modified non-conductive plate 221 corresponding to a region of the fourth opening 210_op4. However, an embodiment of the disclosure is not limited thereto, and the first guide groove 222_re1 and the second guide groove 222_re2 may be disposed in different opening regions. Furthermore, the first modified non-conductive plate 221 may include only one guide groove or three or more guide grooves. A gap may be formed (or disposed, or positioned) between the first guide groove 222_re1 and the conductive plate 210. For example, a first gap1 may be formed (or disposed, or positioned) between the first side portion periphery 210_eg1 of the conductive plate 210 and the first guide groove 222_re1, and a second gap2 may be formed (or disposed, or positioned) between the first rib 210_br1 of the conductive plate 210 and the first guide groove 222_re1. Similar to the first guide groove 222_re1, the second guide groove 222_re2 may also be disposed at a position that is spaced apart from the conductive plate 210 with a specific gap interposed therebetween.

The first modified adhesive member 201b may be disposed between the first modified non-conductive plate 221 and the conductive plate 210. The first modified adhesive member 201b may serve to fix the conductive plate 210 to the first modified non-conductive plate 221. In the first modified adhesive member 201b, a region, in which the guide grooves 222_re1 and 222_re2 are formed, may be removed for exposure or user recognition of the first guide groove 222_re1 and the second guide groove 222_re2 disposed in the first modified non-conductive plate 221. Correspondingly, in the first modified adhesive member 201b, an adhesive member may be disposed only in a region between surfaces that a periphery of the first modified non-conductive plate 221, peripheries 210_st and 210_ed of the conductive plate 210, and the side portion peripheries 210_eg1 and 210_eg2 face, and a region corresponding to the first opening 210_op1, the third opening 210_op3, and the fifth opening 210_op5. As an example, the first modified adhesive member 201b may include a first adhesive region 201b1 corresponding to the first opening 210_op1, a second adhesive region 201b3 corresponding to the third opening 210_op3, and a third adhesive region 201b5 corresponding to the fifth opening 210_op5, the first adhesive region 201b1 may be spaced apart from the second adhesive region 201b3, and the second adhesive region 201b3 may be spaced apart from the third adhesive region 201b5. Furthermore, in the first modified adhesive member 201b, regions corresponding to the second opening 210_op2 and the fourth opening 210_op4, in which the guide grooves 222_re1 and 222_re2 are formed, may be regions, in which the first modified adhesive member 201b is removed.

Referring to FIGS. 1 to 10, the third communication support structure 204 may include a second modified non-conductive plate 222, a first modified adhesive member 201b, and a conductive plate 210. The fourth communication support structure 204 illustrated in FIG. 10 may include the same or similar first modified adhesive member and conductive plate, except for the second modified non-conductive plate 222. Accordingly, the description of the first modified adhesive member 201b and the conductive plate 210 may be supplemented or replaced with the description of the first modified adhesive member and the conductive plate described above with reference to FIG. 9.

The second modified non-conductive plate 222 may have an x-axis length that is greater than a y-axis length or a z-axis length and a z-axis length that is greater than a y-axis length. At least a portion of the second modified non-conductive plate 222 may be formed of (or including) a non-metallic material. A size of the second modified non-conductive plate 222 may have a size corresponding to the size of the side opening 110a_h. The second modified non-conductive plate 222 may have the same size, shape, and function as those of the first modified non-conductive plate 221 described above, except for the first guide boss 222_pr1 that replaces the first guide groove 222_re1 and the second guide boss 222_pr2 that replaces the second guide groove 222_re2.

The first modified adhesive member 201b may be disposed between the second modified non-conductive plate 222 and the conductive plate 210. The first modified adhesive member 201b may serve to fix the conductive plate 210 to the second modified non-conductive plate 222. In the first modified adhesive member 201b, a region, in which the guide bosses 222_pr1 and 222_pr2 are formed, may be removed for exposure or user recognition of the first guide boss 222_pr1 and the second guide boss 222_pr2 disposed in the second modified non-conductive plate 222. For example, the first modified adhesive member 201b may include a first adhesive region 201b1 corresponding to the first opening 210_op1, a second adhesive region 201b3 corresponding to the third opening 210_op3, and a third adhesive region 201b5 corresponding to the fifth opening 210_op5. Regions 201b2 and 201b4 corresponding to the second opening 210_op2 and the fourth opening 210_op4, in which the guide bosses 222_pr1 and 222_pr2 are formed, may be regions, in which the first modified adhesive member 201b is removed.

At least a portion of the first guide boss 222_pr1 may protrude from one surface of the second modified non-conductive plate 222. As an example, the first guide boss 222_pr1 may include a protruding structure including at least one corner. The first guide boss 222_pr1 may have an "L" shape (or a polygonal shape). The second guide boss 222_pr2 may include a protruding structure having a structure that is similar to that of the first guide boss 222_pr1. The first guide boss 222_pr1 and the second guide boss 222_pr2 may be disposed to be spaced apart from each other by a specified distance. The number of the guide bosses formed in the second modified non-conductive plate 222 may be one or three or more. Meanwhile, the communication support structure 200 may include at least one guide groove and at least one guide boss.

As described above, the third communication support structure 203 and the fourth communication support structure 204 according to an embodiment may help easily recognize where the conductive plate 210 has to be disposed while the conductive plate 210 is disposed on the non-conductive plate by using the guide grooves 222_re1 and 222_re2 or the guide bosses 222_pr1 and 222_pr2.

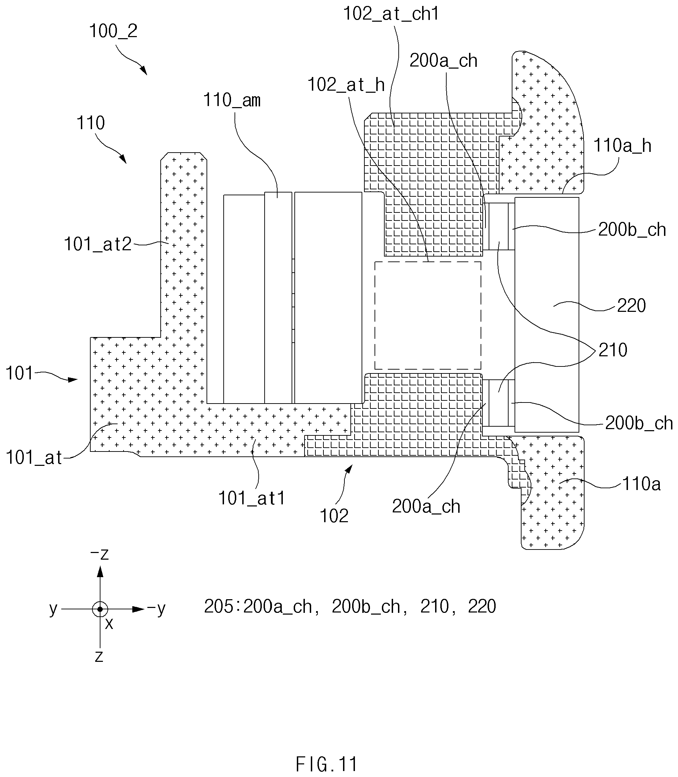

FIG. 11 is a view illustrating an example of a second portable electronic device, to which a fifth communication support structure is applied, according to an embodiment.

Referring to FIGS. 1 to 11, at least a portion of the second portable electronic device 100_2 according to an embodiment may include a housing 110, an antenna structure 110_am, and a fifth communication support structure 205. Additionally or alternatively, the second portable electronic device 100_2 may further include at least a portion of the configurations of the rear cover (e.g., the rear cover 192 of FIG. 4), the rear case 191 (e.g., the rear case 191 of FIG. 4), and the case adhesive member (e.g., the case adhesive member 191_ad of FIG. 4) mentioned in the above description related to FIG. 4, the printed circuit board 170 mentioned in FIG. 2, and the display 160 mentioned in FIG. 1.

The housing 110 may include a machined portion 101 including the side portions 110a, 110b, 110c, and 110d and the support plate 110_bt described above in FIGS. 1 to 3, and an injection molded portion 102 that is disposed between the side portions 110a, 110b, 110c, and 110d and the support plate 110_bt. The machined portion 101 may include an antenna disposition region 101_at, in which the antenna structure 110_am may be disposed. The antenna disposition region 101_at may include a first antenna support region 101_at1 and a second antenna support region 101_at2.

According to an embodiment, the injection-molded portion 102 may include a first modified injection side region 102_at_ch1. The first modified injection side region 102_at_ch1 may have a shape that is the same as or similar to that of the injection side region 102_at described above in FIG. 4, except for an injection through hole 102_at_h that is formed to pass in the y-axis and -y-axis directions from the central portion with reference to the z axis. As an example, a y-axis height of a central portion of the first modified injection side region 102_at_ch1 with respect to an outer surface (an exposed surface) of the first side portion 110a may be formed to be lower than y-axis heights of an upper end and a lower end of the first modified injection side region 102_at_ch1. A -y-axis height of a central portion of the first modified injection side region 102_at_ch1 with respect to an outer surface (an exposed surface) of the first side portion 110a may be formed to be lower than -y-axis heights of an upper end and a lower end of the first modified injection side region 102_at_ch1.

The injection through hole 102_at_h (or injection hole) may be formed to pass through at least a portion of a central portion of the first modified injection side region 102_at_ch1 in the y-axis direction. As an example, a length of the injection through hole 102_at_h in the x-axis direction may be greater than a length thereof in the y-axis direction or the z-axis direction. Accordingly, the injection through hole 102_at_h may be formed to be long in the x-axis direction and may pass along the -y axis or y axis. As an example, a length of the injection through hole 102_at_h in the x-axis direction may be formed to be similar to a length of the side opening 110a_h in the x-axis direction. A height of the injection through hole 102_at_h in the z-axis direction may be smaller than a height of the side opening 110a_h in the z-axis direction. A length of the injection through hole 102_at_h in the x-axis direction and a height thereof in the z-axis direction may be the same as or similar to a disposition (e.g., a length in the x-axis direction and a height in the z-axis direction) of an antenna pattern portion formed in the antenna structure 110_am. Alternatively, a size of the injection through hole 102_at_h may be smaller than a periphery of the antenna structure 110_am, which faces the y-axis direction.

The fifth communication support structure 205 may be disposed within a specific space that is defined by the side opening 110a_h and the first modified injection side region 102_at_ch1. The fifth communication support structure 205 may include a first waterproof adhesive member 200a_ch, a conductive plate 210, a second waterproof adhesive member 200b_ch, and a non-conductive plate 220. The conductive plate 210 and the non-conductive plate 220 may be replaced with or supplemented with the description of the conductive plate and the non-conductive plate described above in FIGS. 1 to 10.

The first waterproof adhesive member 200a_ch may be disposed between the first modified injection side region 102_at_ch1 and the conductive plate 210. The first waterproof adhesive member 200a ch may prevent introduction of foreign substances between the first modified injection side region 102_at_ch1 and the conductive plate 210 while adhering one surface (e.g., one surface that faces the y axis) of the conductive plate 210 to the first modified injection side region 102_at_ch1. In this regard, the first waterproof adhesive member 200a_ch may have a relatively thick thickness compared to the first adhesive member 200a described above. Alternatively, the first waterproof adhesive member 200a_ch may include a structure, in which a waterproof member is disposed between the double-sided tapes.

The second waterproof adhesive member 200b_ch may be disposed between the conductive plate 210 and the non-conductive plate 220. The second waterproof adhesive member 200b_ch may prevent introduction of foreign substances between the conductive plate 210 and the non-conductive plate 220 while adhering one surface (e.g., one surface that faces the y axis) of the conductive plate 210 to the non-conductive plate 220. In this regard, the second waterproof adhesive member 200b_ch may have a structure that is similar to that of the first waterproof adhesive member 200a_ch. As an example, the second waterproof adhesive member 200b_ch may have the same thickness as that of the first waterproof adhesive member 200a_ch. The second waterproof adhesive member 200b_ch may include a structure, in which a waterproof member is disposed between the double-sided tapes. Alternatively, the second waterproof adhesive member 200b_ch may be formed of (or including) a waterproof material that may perform a waterproof function while having an adhesion property. According to various embodiments, at least one of the first waterproof adhesive member 200a_ch and the second waterproof adhesive member 200b_ch may have a shape (e.g., a shape including openings corresponding to the openings of the conductive plate 210) corresponding to the shape of the conductive plate 210.

The second portable electronic device 100_2 according to the above-described embodiment may provide a waterproof function between the injection side region 102_at, at which the antenna structure 110_am is disposed, and the side opening 110a_h. Furthermore, the second portable electronic device 100_2 may improve signal radiation performance by removing obstacles in a signal radiation direction of the antenna structure 110_am through the injection through hole 102_at_h.

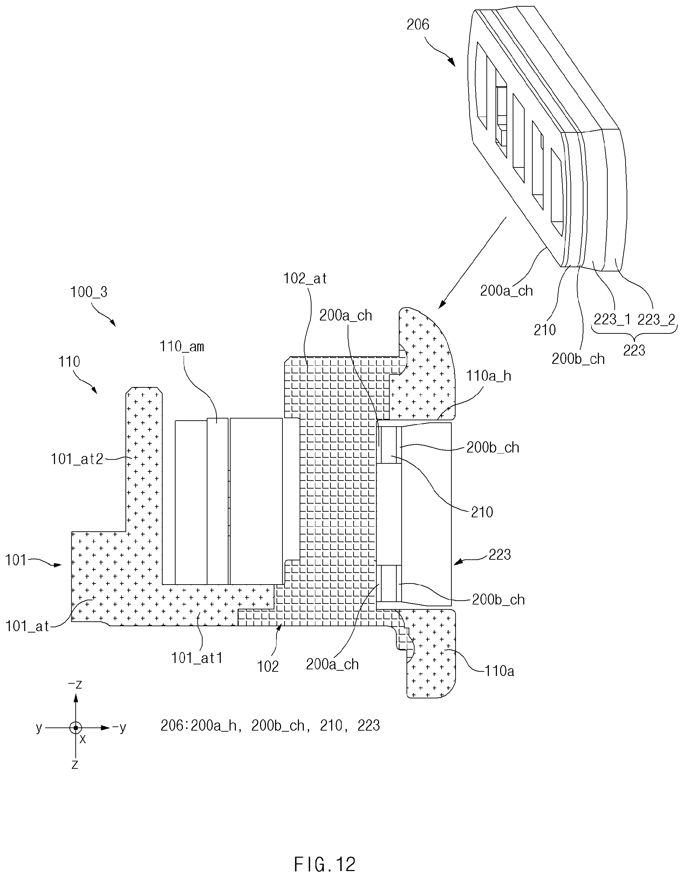

FIG. 12 is a view illustrating an example of a third portable electronic device, to which a sixth communication support structure is applied, according to an embodiment.

Referring to FIGS. 1 to 12, at least a portion of the third portable electronic device 100_3 according to an embodiment may include a housing 110, an antenna structure 110_am, and a sixth communication support structure 206. Additionally or alternatively, the third portable electronic device 100_3 may further include at least a portion of the configurations of the rear cover (e.g., the rear cover 192 of FIG. 2 or 4), the rear case 191 (e.g., the rear case 191 of FIG. 2 or 4), and the case adhesive member (e.g., the case adhesive member 191_ad of FIG. 4) mentioned in the above description related to FIG. 2 or 4, the printed circuit board 170 mentioned in FIG. 2, and the display 160 mentioned in FIG. 1.

The housing 110 may include a machined portion 101 including the side portions 110a, 110b, 110c, and 110d and the support plate 110_bt described above in FIGS. 1 to 3, and an injection molded portion 102 that is disposed between the side portions 110a, 110b, 110c, and 110d and the support plate 110_bt. The machined portion 101 may include an antenna disposition region 101_at, in which the antenna structure 110_am may be disposed. The antenna disposition region 101_at may include a first antenna support region 101_at1 and a second antenna support region 101_at2. According to an embodiment, the injection-molded portion 102 may include an injection side region 102_at. As described above with reference to FIGS. 4 to 6, the injection side region 102_at may have a structure, of which a thickness of a central portion is smaller than that of an upper end and a lower end thereof. Correspondingly, a first empty space may be formed in the at least a partial region between the injection side region 102_at and the antenna structure 110_am. A second empty space may be formed (or disposed, or positioned) between the injection side region 102_at and the first side portion 110a (or between the side openings 110a_h or between the side opening 110a_hs, in which the sixth communication support structure 206 is disposed). Descriptions of structures or configurations other than the sixth communication support structure 206 in the third portable electronic device 100_3 may be replaced or supplemented with the portion described above in FIGS. 1 to 11. As an example, in FIG. 12, the injection side region 102_at, in which the injection through-hole 102_at_h described in FIG. 11 is not formed, illustrated, but the disclosure is not limited thereto. For example, the injection side region 102_at of FIG. 12 may be replaced with the first modified injection side region 102_at_ch1, in which the injection through hole 102_at_h described above in FIG. 11 is formed.

The sixth communication support structure 206 may include a first waterproof adhesive member 200a_ch, a conductive plate 210, a second waterproof adhesive member 200b_ch, and a third modified non-conductive plate 223.

The first waterproof adhesive member 200a_ch, the conductive plate 210, and the second waterproof adhesive member 200b_ch may correspond to the first waterproof adhesive member, the conductive plate, and the second waterproof adhesive member described above in FIG. 11. Accordingly, the description of the configurations of the first waterproof adhesive member 200a_ch, the conductive plate 210, and the second waterproof adhesive member 200b_ch may be supplemented or replaced with the description made above in FIG. 11. Alternatively, at least one of the first waterproof adhesive member 200a_ch and the second waterproof adhesive member 200b_ch may be replaced with at least one of the above-described adhesive member or the modified adhesive member described in FIGS. 1 to 10.

The third modified non-conductive plate 223 may include a second cover portion 223_2, in which peripheries (e.g., peripheries that faces the -z-axis and z-axis directions or the -x-axis and x-axis directions) that define peripheries of one surface in the y-axis direction and one surface in the -y-axis direction are formed flat with respect to the y axis, and a first cover portion 223_1 that is inclined at an inclination that is greater than 0 with respect to the y axis. As an example, the third modified non-conductive plate 223 may have a shape, of which the size of the z-axis cross-section gradually decreases (or from a starting portion of the second cover portion 223_2) from the -y axis in the y-axis direction. Alternatively, the size of one surface of the third modified non-conductive plate 223, which faces the -y-axis direction, may be larger than the size of one surface of the third modified non-conductive plate 223, which faces the y-axis direction. As an example, the size of one surface of the third modified non-conductive plate 223 in the -y-axis direction may have a size (or a size that is slightly larger when being inserted through interference-fitting) that is the same as or similar to the size of the side opening 110a_h. The size of one surface of the third modified non-conductive plate 223 in the y-axis direction may be smaller than the size of the side opening 110a_h. As another example, a boundary between the first cover portion 223_1 and the second cover portion 223_2 may include a step.

The third portable electronic device 100_3 according to the above-described embodiment may provide a function of easily inserting the sixth communication support structure 206 into the side opening 110a_h or easily extracting the sixth communication support structure 206 during a repair.

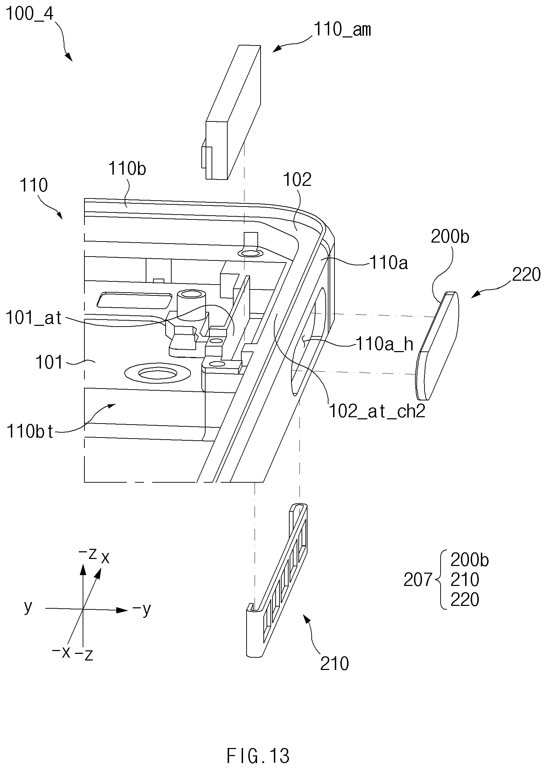

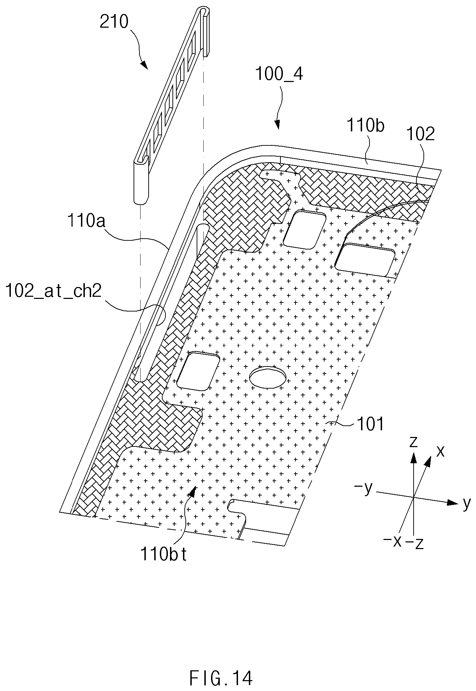

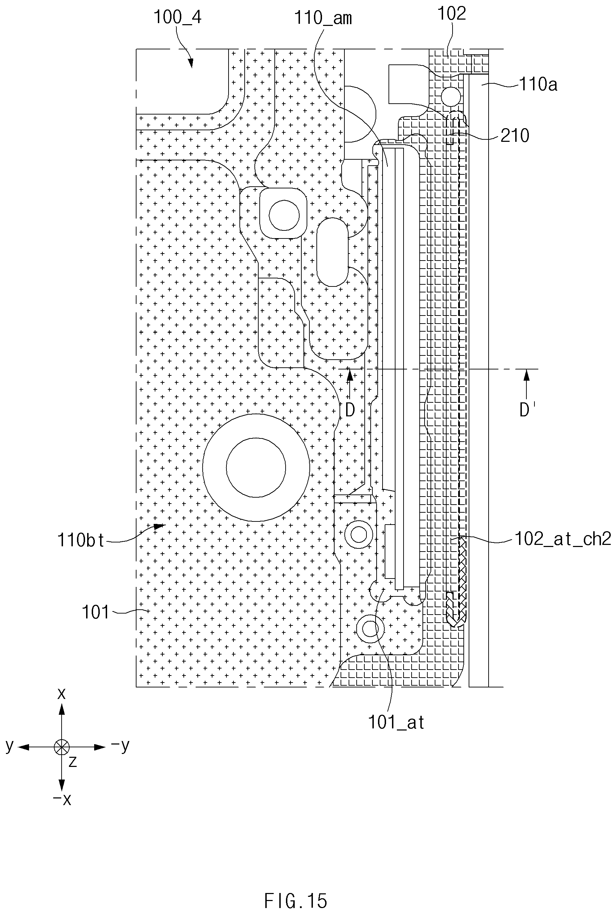

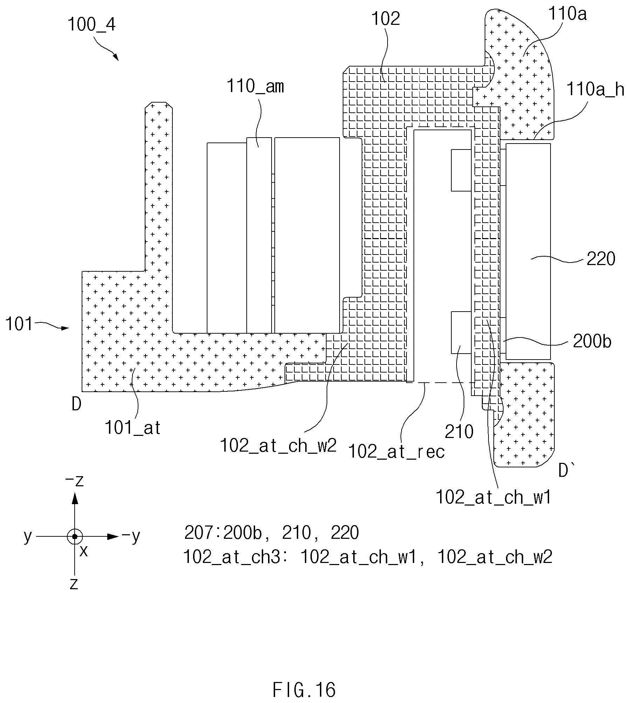

FIG. 13 is a view illustrating an example of a formation in which some components of a fourth portable electronic device, to which a seventh communication support structure according to an embodiment is applied, are separated. FIG. 14 is a view illustrating an example of a front structure of a fourth portable electronic device according to an embodiment. FIG. 15 is a view illustrating an example of an antenna structure disposition region and a side portion of a fourth portable electronic device according to an embodiment. FIG. 16 is a view illustrating an example of a cross section, taken along cutting line D-D' of FIG. 15.

Referring to FIGS. 1 to 13, a fourth portable electronic device 100_4 according to an embodiment may include a housing 110, an antenna structure 110_am, and a seventh communication support structure 207.

The housing 110 may include at least a first side portion 110a, a second side portion 110b, and a support plate 110_bt. Alternatively, the housing 110 may include a machined portion 101 (e.g., a first side portion 110a, a second side portion 110b, and a support plate 110_bt), and an injection-molded portion 102. The machined portion 101 may include an antenna disposition region 101_at (e.g., one region of the support plate 110_bt), in which the antenna structure 110_am is disposed, and the injection-molded portion 102 may include a second modified injection side region 102_at_ch2 that is adjacent to the antenna structure 110_am, and at least a portion of which faces the side opening 110a_h formed at the first side portion 110a. An antenna structure 110_am may be inserted into and fixed to the antenna disposition region 101_at from the -z-axis direction to the z-axis direction. Additionally, at least a portion of the rear cover 192 may be disposed to cover at least a portion of an upper portion of the antenna structure 110_am. In the housing 110, the machined portion 101 including the first side portion 110a, the second side portion 110b, and the support plate 110_bt may be supplemented or replaced with the description of the machined portion 101 including the side portions 110a, 110b, 110c, and 110d and the support plate 110_bt described above in FIGS. 2 and 4 to 6. For example, the structure of the housing 110 illustrated in FIG. 13 may have a structure that is the same as or similar to that of the above-described injection-molded portion 102, except for the second modified injection side region 102_at_ch2. For example, the side opening 110a_h may be formed at the first side portion 110a, and a length of a hole in the x-axis direction may be greater than a length of a hole in the z-axis direction.

The seventh communication support structure 207 may include a non-conductive plate 220, an adhesive member 200b (or a second adhesive member), and a conductive plate 210. Here, the non-conductive plate 220 may be a configuration corresponding to the non-conductive plate or the modified non-conductive plate described above in FIGS. 2 to 12. Accordingly, the description of the non-conductive plate 220 may be supplemented or replaced with the description of the non-conductive plate or the modified non-conductive plate described above. Although the configuration of the first adhesive member 200a described above in FIG. 2 is not illustrated in the seventh communication support structure 207, the fourth portable electronic device 100_4 may further include a separate adhesive member (or the first adhesive member 200a) to adhere the conductive plate 210 to the second modified injection side region 102_at_ch2.

Referring to FIGS. 1 to 14, the fourth portable electronic device 100_4 may include a machined portion 101 and an injection-molded portion 102, and the injection-molded portion 102 may include a second modified injection side region 102_at_ch2. The second modified injection side region 102_at_ch2 may include a region that is recessed or engraved from the z axis to the -z-axis direction. Correspondingly, the conductive plate 210 may be inserted and fixed in a direction that is opposite to a direction, in which the antenna structure 110_am is seated in the antenna disposition region 101_at. The conductive plate 210 may be provided in a shape corresponding to that of the conductive plate described above. Alternatively, at least a portion of the conductive plate 210 may be modified in a shape corresponding to a y-axis width of the second modified injection side region 102_at_ch2. As an example, a periphery of at least one of opposite sides (e.g., the x-axis and -x-axis directions) of the conductive plate above 210 may be bent in the y-axis direction.

Referring to FIGS. 1 to 15, when the z-axis direction of the fourth portable electronic device 100_4 is observed from the -z-axis direction, the antenna structure 110_am of the machine portion 101 or the antenna disposition region 101_at, in which the antenna structure 110_am is disposed, may be observed, and a rear surface of the second modified injection side region 102_at_ch2 of the injection-molded portion 102 may be observed. Because the conductive plate 210 is disposed to be surrounded by the second modified injection side region 102_at_ch2, the conductive plate 210 may not be observed from the -z-axis direction to the z-axis direction.

Referring to FIGS. 1 to 16, the fourth portable electronic device 100_4 may include an antenna structure 110_am that is disposed in the antenna disposition region 101_at, a conductive plate 210 that is disposed in the second modified injection side region 102_at_ch2, a non-conductive plate 220 that is disposed in the side opening 110a_h of the first side region 110a, and an adhesive member 200b.

The second modified injection side region 102_at_ch2 may include a groove 102_at_rec, in which the conductive plate 210 is disposed. The groove 102_at_rec is opened in the z-axis direction, and may have an x-axis length corresponding to a length of the side opening 110a_h in the x-axis direction. In this regard, the second modified injection side region 102_at_ch2 may include a first portion 102_at_ch_w1 that is disposed adjacent to the side opening 110a_h and a second portion 102_at_ch_w2 that is disposed adjacent to the antenna structure 110_am. The groove 102_at_rec may be formed (or disposed, or positioned) between the first portion 102_at_ch_w1 and the second portion 102_at_ch_w2. As an example, the first portion 102_at_ch_w1 of the second modified injection side region 102_at_ch2 may be disposed to close an opening region (an opening region that faces the -y-axis direction, among the side openings 110a_h) of one side of the side opening 110a_h. Correspondingly, a z-axis height and an x-axis length of the first portion 102_at_ch_w1 may be formed to be greater than a z-axis height and an x-axis length of the side opening 110a_h. An adhesive member 200b may be disposed on one surface (e.g., a surface that faces the -y axis) of the first portion 102_at_ch_w1. The conductive plate 210 may be disposed on an opposite surface (e.g., a surface that faces the y axis) of the first portion 102_at_ch_w1. Alternatively, the conductive plate 210 may be disposed on one surface (e.g., a surface that faces the -y axis) of the second portion 102_at_ch_w2. In relation to the disposition of the conductive plate 210, an opposite surface of the first portion 102_at_ch_w1 or one surface of the second portion 102_at_ch_w2 may be formed to be flat. Alternatively, at least a portion of surfaces of the first portion 102_at_ch_w1 and the second portion 102_at_ch_w2, which face each other, may be formed to be flat. At least a portion of an opposite surface (e.g., a surface that faces the y axis) of the second portion 102_at_ch_w2 may be disposed to face the antenna structure 110_am. An opposite surface of the second portion 102_at_ch_w2 may have a recess that is engraved in the -y-axis direction. Correspondingly, a y-axis thickness of a center of the second portion 102_at_ch_w2 may be smaller than that of an upper end or a lower end thereof.

The adhesive member 200b may be disposed between the second modified injection side region 102_at_ch2 and the non-conductive plate 220. The adhesive member 200b may adhere the non-conductive plate 220 to the first portion 102_at_ch_w1 of the second modified injection side region 102_at_ch2. The adhesive member 200b may be replaced with the waterproof adhesive member described above in FIG. 11 or 12. Alternatively, the adhesive member 200b may have a shape, in which a region corresponding to the opening of the conductive plate 210 described in FIGS. 9 and 10 is partially removed. Alternatively, the adhesive member 200b may be formed to cover the entirety of one surface (e.g., one surface that faces the y axis) of the non-conductive plate 220.

The conductive plate 210 may be attached to one surface of the first portion 102_at_ch_w1 of the second modified injection side region 102_at_ch2. Alternatively, a separate adhesive member may be disposed between the first portion 102_at_ch_w1 of the second modified injection side region 102_at_ch2 and the conductive plate 210. As another example, the conductive plate 210 may be attached to one surface (e.g., a surface that faces the -y axis) of the second portion 102_at_ch_w2 of the second modified injection side region 102_at_ch2. In this case, an adhesive member may be further disposed between one surface of the second portion 102_at_ch_w2 and the conductive plate 210. Meanwhile, the shape, size, or thickness of the conductive plate 210 may be any one of the forms described in the other drawings of the disclosure.

When observed in a lateral direction (e.g., from the -y-axis direction to the y-axis direction) of the housing, in the fourth electronic device 100_4, at least a portion of the non-conductive plate 220, at least a portion of the adhesive member 200b, at least a portion of the first portion 102_at_ch1 of the second modified injection side region 102_at_ch2, and at least a portion of the conductive plate 210 located in the groove 102_at_rec, at least a portion of the second portion 102_at_ch_w2 of the second modified injection side region 102_at_ch2, at least a portion of the antenna structure 110_am, and at least a portion of the machine portion 101 (e.g., the antenna disposition region 101_at) may be disposed to overlap. Here, the conductive plate 210 may be located in the groove 102_at_rec, and may be attached to an opposite surface (a surface that faces the y axis) of the first portion 102_at_ch_w1 or one surface (e.g., a surface that faces the -y axis) of the second portion 102_at_ch_w2 for fixing. Alternatively, the conductive plate 210 may be fixed to a bottom surface of the groove 102_at_rec. In this case, the conductive plate 210 may be disposed between the first portion 102_at_ch_w1 and the second portion 102_at_ch_w2, and may define a gap between the first portion 102_at_ch_w1 and the second portion 102_at_ch_w2.

The housing 110 may have a titanium double metal structure (e.g., a titanium-aluminum clad structure). Alternatively, the housing 110 may have a structure, in which at least a portion of an outer side (e.g., at least some of the side portions) is formed of titanium (Ti), and at least a portion of an inner side (e.g., at least a portion of the support plate 110_bt) is formed of aluminum (Al), so that the outer side and the inner side of the housing 110 are bonded to each other. An opening (a space filled with an injection material) without titanium and aluminum may be disposed in the antenna disposition region 101_at. The conductive plate 210 may include at least a portion of titanium or aluminum. Alternatively, the conductive plate 210 may be formed in a titanium-aluminum (Ti-Al) clad structure.

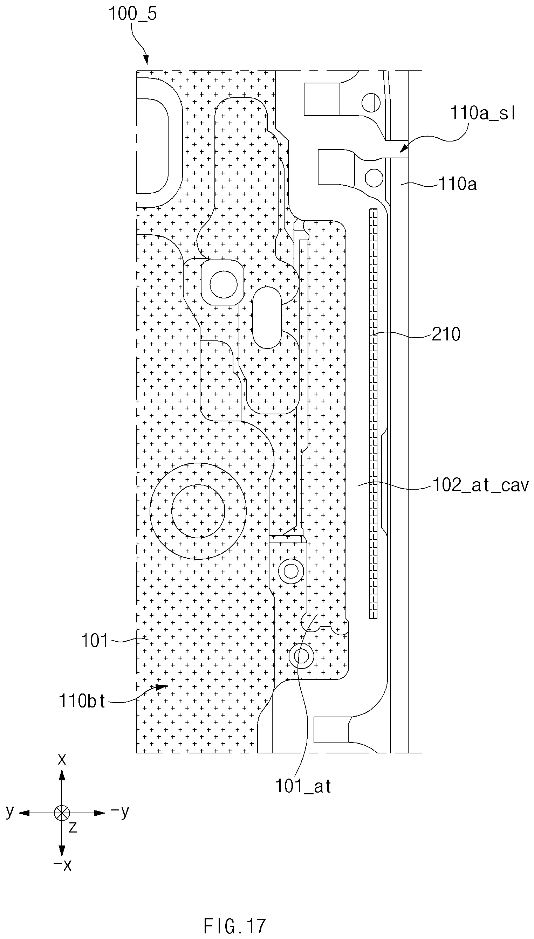

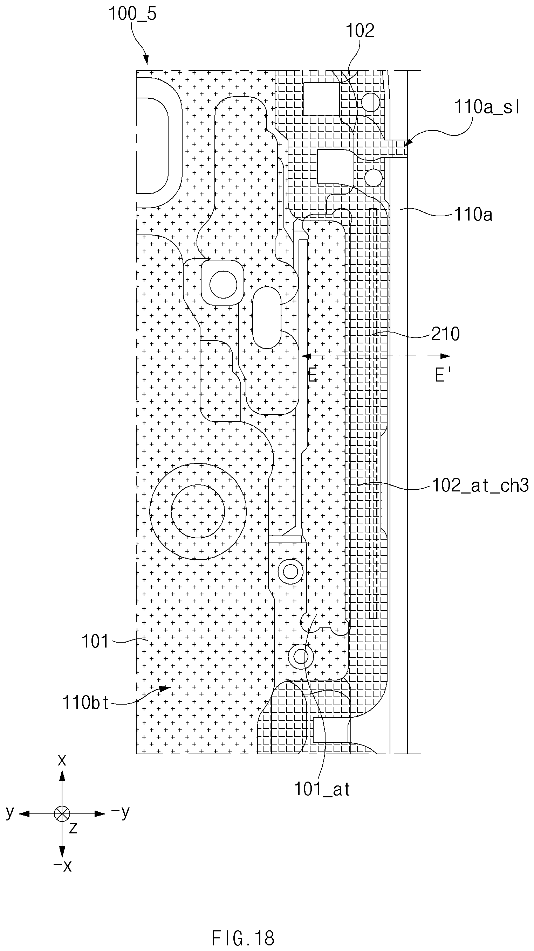

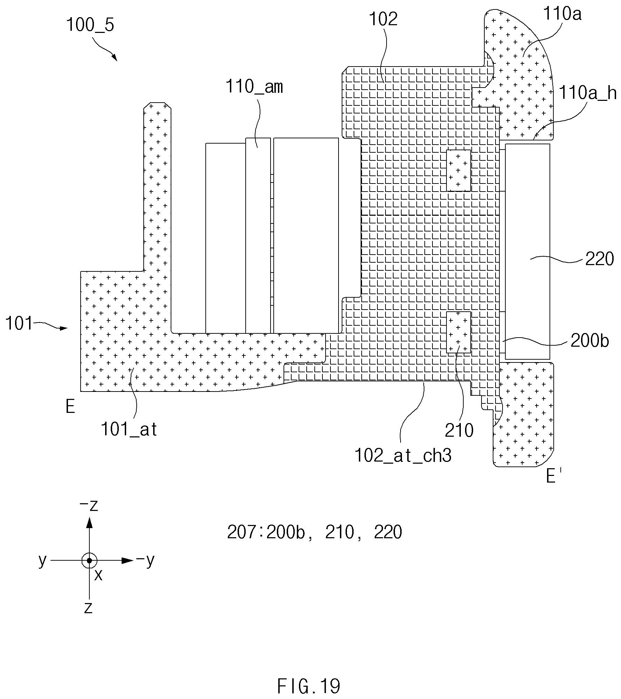

FIG. 17 is a view illustrating an example of some components including a support plate, a side portion, and a conductive plate, among components of a fifth portable electronic device according to an embodiment. FIG. 18 is a view illustrating an example of some components of a support plate, a side portion, an injection-molded portion, and a conductive plate, among components of a fifth portable electronic device according to an embodiment. FIG. 19 is a view illustrating an example of a cross section, taken along cutting line E-E' of FIG. 18.

Referring to FIGS. 1 to 17, a fifth portable electronic device 100_5 according to an embodiment may include a machined portion 101. The machined portion 101 may include a support plate 110_bt and a side portion (e.g., a first side portion 110a). The machined portion 101 may further include another side portions described above in FIG. 1. The support plate 110_bt may include an antenna disposition region 101_at, in which an antenna structure is disposed. The first side portion 110a may include a slit 110a_sl. The first side portion 110a may include a plurality of pieces through the slit 110a_sl. An injection space 102_at_cav, in which an injection-molded portion is disposed, may be formed (or disposed, or positioned) between the support plate 110_bt and the first side portion 110a. The conductive plate 210 may be disposed on the injection space 102_at_cav. The conductive plate 210 may be any one of the various types of conductive plates described in other drawings of the disclosure.

Referring to FIGS. 1 to 18, an injection-molded portion 102 (or the third modified injection side region 102_at_ch3) may be disposed in an injection space (e.g., the injection space 102_at_cav of FIG. 17) between the support plate 110_bt of the machined portion 101 and the first side portion 110a of the machined portion 101. The injection-molded portion 102 may be formed through an insert injection process. A portion of the injection-molded portion 102 may be filled in the slit 110a_sl of the first side portion 110a. The injection-molded portion 102 may be disposed in or on at least a portion between the support plate 110_bt and the side portions (e.g., the first side portion 110a) that are physically separated from each other to physically connect the support plate 110_bt and the side portions (e.g., the first side portion 110a). A third modified injection side region 102_at_ch3 included at a portion of the injection-molded portion 102 may be formed in the injection space 102_at_cav described above in FIG. 17. One side (e.g., a y-axis periphery) of the third modified injection side region 102_at_ch3 may be connected to an antenna disposition region 101_at of the support plate 110_bt, and an opposite side (e.g., a -y-axis periphery) of the third modified injection side region 102_at_ch3 may be connected to one side of the first side portion 110a. A conductive plate 210 may be disposed at the third modified injection side region 102_at_ch3. The conductive plate 210 may be fixed in the injection space 102_at_cav while the third modified injection side region 102_at_ch3 is formed through an injection process, and may be disposed between the antenna disposition region 101_at and the first side portion 110a. Accordingly, the conductive plate above 210 may be formed of a stainless steel (SUS) material or the same material (e.g., aluminum) as that of the housing 110.

Referring to FIGS. 1 to 19, a cross section taken along cutting line E-E' of FIG. 18 may include a seventh communication support structure 207, at least a portion of which is disposed in the side opening 110a_h formed in the first side portion 110a. The seventh communication support structure 207 may include a non-conductive plate 220 that is located in the side opening 110a_h, an adhesive member 200b that is located between the third modified injection side region 102_at_ch3 and the non-conductive plate 220, and a conductive plate 210 that is located at the third modified injection side region 102_at_ch3.

The side opening 110a_h may be formed to pass through the y-axis direction of the first side portion 110a, and a length thereof in the x-axis direction may be greater than a length thereof in the z-axis direction. The side opening 110a_h may be formed at a central portion of the first side portion 110a with respect to the z-axis direction. The non-conductive plate 220 may be formed and disposed to close the side opening 110a_h. The non-conductive plate 220 may be formed to have a size that is the same as the size of the side opening 110a_h or is slightly larger than a predesigned size to be inserted into the side opening 110a_h through interference-fitting. Alternatively, the non-conductive plate 220 may be formed of (or including) an elastic material, and may be disposed to close the side opening 110a_h before being inserted into the side opening 110a_h or after being inserted thereinto to be compressed. A y-axis thickness of the non-conductive plate 220 may be greater than a y-axis thickness of the side opening 110a_h.

The third modified injection side region 102_at_ch3 may be disposed in the injection space 102_at_cav between the antenna disposition region 101_at and the first side portion 110a. The third deformed injection side region 102_at_ch3 may be formed to be larger than the side opening 110a_h formed in the first side portion 110a, and may be disposed to cover the side opening 110a_h with respect to the y-axis direction. As an example, the third modified injection side region 102_at_ch3 may have a y-axis length at an upper end and a lower end, which is greater than a y-axis length at a central portion thereof. An adhesive member 200b may be disposed on one surface (e.g., a bottom surface of the recess portion that is recessed in the y-axis direction) of the third modified injection side region 102_at_ch3 in the - y-axis direction. One surface of the third modified injection side region 102_at_ch3 in the y-axis direction may be disposed to face the antenna structure 110_am. One surface of the third modified injection side region 102_at_ch3 in the y-axis direction may have a recess that is recessed in the -y-axis direction to define an empty space on one surface of the antenna structure 110_am.

The conductive plate 210 may be disposed at the third modified injection side region 102_at_ch3. As an example, as described above, the third modified injection side region 102_at_ch3 may be formed to cover the conductive plate 210 located in the injection space 102_at_cav while the injection material is filled in the injection space 102_at_cave in the injection process. Accordingly, the conductive plate 210 may be disposed at a specific position of the third modified injection side region 102_at_ch3. As an example, the conductive plate 210 may be disposed at a central portion of the third modified injection side region 102_at_ch3 with respect to the y-axis direction. However, the disclosure is not limited thereto, and the conductive plate 210 may be located at the third modified injection side region 102_at_ch3 and also may be located closer to the antenna structure 110_am than to the first side portion 110a or be disposed to be closer to the first side portion 110a than to the antenna structure 110_am. As an example, with respect to the z-axis direction, the conductive plate 210 may be located at the third modified injection side region 102_at_ch3 corresponding to the antenna pattern portion formed in the antenna structure 110_am. As the conductive plate 210 is located at the third modified injection side region 102_at_ch3, the openings defined by the peripheries of the conductive plate 210, the side portion peripheries, and the ribs may be filled with an injection material.

The adhesive member 200b may be disposed on one surface (e.g., a surface that faces the -y-axis direction) of the third modified injection side region 102_at_ch3. The adhesive member 200b may adhere one surface of the non-conductive plate 220 to one surface of the third modified injection side region 102_at_ch3. Although it is illustrated that the adhesive member 200b has an empty central portion, the disclosure is not limited thereto, and the adhesive member 200b may be replaced with any one of various types of adhesive members illustrated in the other drawings.

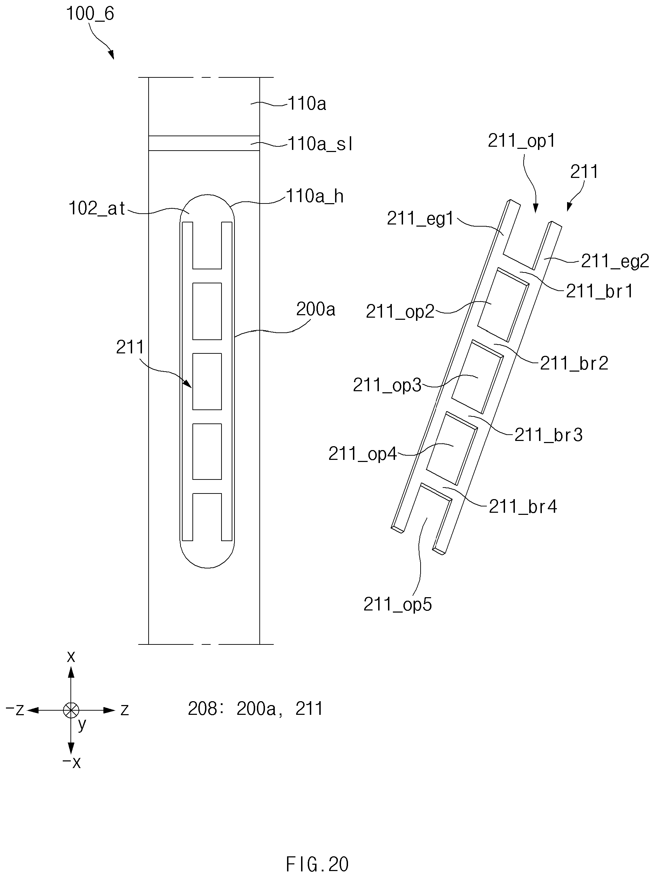

FIG. 20 is a view illustrating an example of some components of a sixth portable electronic device, in which an eighth communication support structure including a first modified conductive plate is disposed, according to an embodiment.

Referring to FIGS. 1 and 20, a sixth portable electronic device 100_6 may include a first side portion 110a, at which a side opening 110a_h and a slit 110a_sl are formed, and an eighth communication support structure 208. In FIG. 20, only a portion of the first side portion 110a of the sixth portable electronic device 100_6 is illustrated, but the disclosure is not limited thereto. For example, the sixth portable electronic device 100_6 may further include at least some of the components of the portable electronic device illustrated and described in other drawings of the disclosure, except for the eighth communication support structure 208.

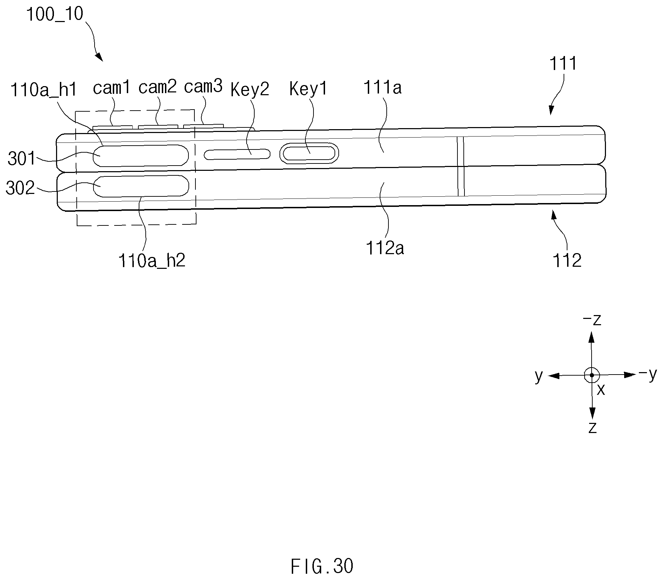

Furthermore, for the eighth communication support structure 208, the adhesive member 200a and the first modified conductive plate 211 has been exemplified, but the disclosure is not limited thereto. For example, the eighth communication support structure 208 may further include the non-conductive plate described in other drawings of the disclosure, and may further include other adhesive members that are disposed between the non-conductive plate and the first modified conductive plate 211. Meanwhile, the first modified conductive plate 211 described in FIG. 20 may be applied to any one of the communication support structure or the portable electronic device described above in FIGS. 1 to 19 or the portable electronic device described in FIGS. 30 to 32.

The first modified conductive plate 211, for example, may include a first side portion periphery 211_eg1, a second side portion periphery 211_eg2, and a plurality of ribs 211_br1, 211_br2, 211_br3, and 211_br4. The first side portion periphery 211_eg1 and the second side portion periphery 211_eg2 may have a length corresponding to at least a portion of the length of the side opening 110a_h in the x-axis direction. The first side portion periphery 211_eg1 and the second side portion periphery 211_eg2 may be formed to be longer than the length of each of the plurality of ribs 211_br1, 211_br2, 211_br3, and 211_br4. The plurality of ribs 211_br1, 211_br2, 211_br3, and 211_br4 may have the same or similar widths and lengths, and may be disposed between the first side portion periphery 211_eg1 and the second side portion periphery 211_eg2. The widths and lengths of the plurality of ribs 211_br1, 211_br2, 211_br3, and 211_br4 may vary depending on the shape of the antenna pattern portion formed in the antenna structure 110_am. Because the plurality of ribs 211_br1, 211_br2, 211_br3, and 211_br4 are disposed at central portions of the first side portion periphery 211_eg1 and the second side portion periphery 211_eg2 and are not disposed at an x-axis or-x-axis periphery of the first side portion periphery 211_eg1 and the second side portion periphery 211_eg2, opposite peripheries of the first side portion periphery 211_eg1 and the second side portion periphery 211_eg2 may be spaced apart from each other while not being connected to each other.

According to an embodiment, the first modified conductive plate 211 may include a first opening 211_op1 that is defined by one end portion of the first side portion periphery 211_eg1 and the one end portion of the second side portion periphery 211_eg2, and the first rib 211_br1, a second opening 211_op2 that is defined by the first side portion periphery 211_eg1 and the second side portion periphery 211_eg2, the first rib 211_br1, and the second rib 211_br2, a third opening 211_op3 that is defined by the first side portion periphery 211_eg 1 and the second side portion periphery 211_eg2, the second rib 211_br2, and the third rib 211_br3, a fourth opening 211_op4 that is defined by the first side portion periphery 211_eg1 and the second side portion periphery 211_eg2, the third rib 211_br3, and the fourth rib 211_br4, and a fifth opening 211_op5 that is defined by an opposite end portion of the first side portion periphery 211_eg1 and an opposite end portion of the second side portion periphery 211_eg2, and the fourth rib 211_br4. The second opening 211_op2, the third opening 211_op3, and the fourth opening 211_op4 may have a shape of a band (e.g., a polygonal band, an elliptical band, or a square band) that passes in the y-axis direction, and a periphery of which is closed. Each of the first opening 211_op1 and the fifth opening 211_op5 may include a groove shape (e.g., a "C" shape), one side of which is opened.

The adhesive member 200a may adhere the first modified conductive plate 211 to the injection side region 102_at. In this regard, the adhesive member 200a may have a shape (e.g., a ladder shape) corresponding to one surface of the first modified conductive plate 211 in the y-axis direction. Alternatively, the adhesive member 200a may have a shape that covers the entirety (e.g., the first side portion periphery 211_eg1, the second side portion periphery 211_eg2, the plurality of ribs 211_br1, 211_br2, 211_br3, and 211_br4, and the openings 211_op1, 211_op2, 211_op3, 211_op4, and 211_op5) of one surface (e.g., a surface that faces the y-axis direction) of the first modified conductive plate 211.

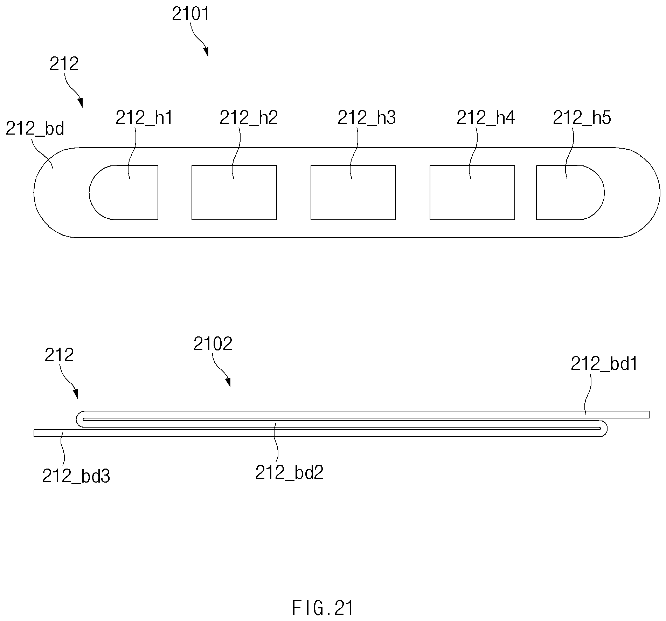

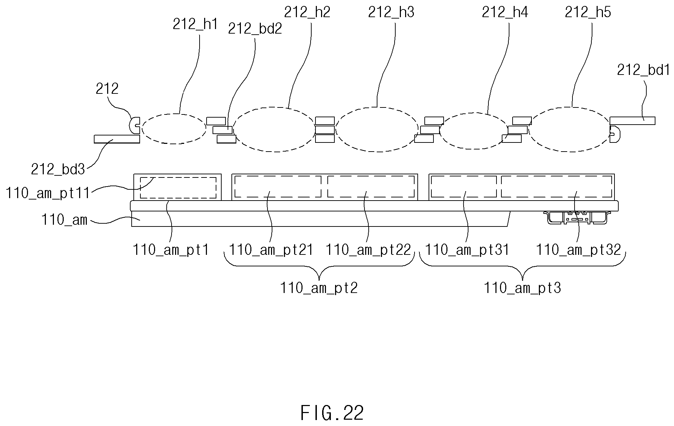

FIG. 21 is a view illustrating an example of a second modified conductive plate according to an embodiment. FIG. 22 is a view illustrating an example of a disposition relationship between a second modified conductive plate and an antenna structure according to an embodiment.

Referring to FIGS. 1 and 21, state 2101 illustrates a front surface (e.g., one surface that faces the first side portion (e.g., the first side portion 110a of FIG. 1) when a second modified conductive plate 212 is disposed in the portable electronic device) of the second modified conductive plate 212, and state 2102 illustrates a side surface (e.g., a side surface that faces the z-axis direction, on which the display (e.g., the display 160 of FIG. 1) is disposed when the second modified conductive plate 212 is disposed in the portable electronic device) of the second modified conductive plate 212.

According to an embodiment, the second modified conductive plate 212 may include a first metal layer 212_bd1 (or a first conductive plate), a second metal layer 212_bd2 (or a second conductive plate), a third metal layer 212_bd3 (or a third conductive plate). At least portions of the metal layers 212_bd1, 212_bd2, and 212_bd3 may vertically overlap each other upward and downward. A periphery on one side of the first metal layer 212_bd1 may be connected to a periphery on one side of the second metal layer 212_bd2, and a periphery on an opposite side of the second metal layer 212_bd2 may be connected to a periphery on one side of the third metal layer. However, the second modified conductive plate 212 of the disclosure is not limited thereto, and the metal layers 212_bd1, 212_bd2, and 212_bd3 may be separated from each other, and may include a structure that is adhered upward and downward, or may have two or four or more metal layers.

Each of the metal layers 212_bd1, 212_bd2, and 212_bd3 may include openings 212_h1, 212_h2, 212_h3, 212_h4, and 212_h5 that pass upward and downward. For example, the first openings 212_h1 (or the first opening) may be located at a periphery on one side while being formed to pass through the first to third metal layers 212_bd1, 212_bd2, and 212_bd3 upward and downward, and the fifth openings 212_h5 (or the fifth opening) may be located at a periphery on an opposite side to the periphery, at which the first openings 212_h1 are formed, while being formed to pass through the first to third metal layers 212_bd1, 212_bd2, and 212_bd3 upward and downward. The second openings 212_h2, the third openings 212_h3, and the fourth openings 212_h4 (or the second opening, the third opening, and the fourth opening) may be disposed between the first openings 212_h1 and the fifth openings 212_h5. Meanwhile, the openings formed in a specific metal layer, among the metal layers 212_bd1, 212_bd2, and 212_bd3, may partially overlap the openings formed in the other metal layers. As a plurality of openings are formed in each of the metal layers 212_bd1, 212_bd2, and 212_bd3, and the openings at least partially overlap each other upward and downward, each of the metal layers 212_bd1, 212_bd2, and 212_bd3 may include openings that overlap the other metal layers.

Referring to FIGS. 1 and 22, the antenna structure 110_am may include a plurality of antenna blocks 110_am_pt1, 110_am_pt2, and 110_am_pt3. A plurality of patterns may be disposed in at least one of the antenna blocks. For example, a first antenna pattern 110_am_pt11 may be disposed in the first antenna block 110_am_pt1, a second antenna pattern 110_am_pt21 and a third antenna pattern 110_am_pt22 may be disposed in the second antenna block 110_am_pt2, and a fourth antenna pattern 110_am_pt31 and a fifth antenna pattern 110_am_pt32 may be disposed in the third antenna block 110_am_pt3. The antenna patterns 110_am_pt11, 110_am_pt21, 110_am_pt22, 110_am_pt31, and 110_am_pt32 may radiate at least some signals toward the second modified conductive plate 212. As an example, the first antenna pattern 110_am_pt11 may radiate a signal toward the first openings 212_h1 formed in the metal layers 212_bd1, 212_bd2, and 212_bd3. At least a portion of the signal irradiated from the second antenna pattern 110_am_pt21 may be irradiated toward the second openings 212_h2 formed on the metal layers 212_bd1, 212_bd2, and 212_bd3. The third antenna pattern 110_am_pt22 may radiate a signal in toward the third openings 212_h3 formed on the metal layers 212_bd1, 212_bd2, and 212_bd3. At least a portion of the signal irradiated from the fourth antenna pattern 110_am_pt31 may proceed (or be transmitted or delivered) toward the side opening (e.g., the side opening 110a_h of FIG. 2) through the fourth openings 212_bd1, 212_bd2, and 212_bd3 formed in the metal layers 212_bd1. The fifth antenna pattern 110_am_pt32 may radiate a signal toward the fifth openings 212_h5 formed in the metal layers 212_bd1, 212_bd2, and 212_bd3. According to various embodiments, a pattern interval between a plurality of patterns formed in at least one of the antenna blocks 110_am_pt1, 110_am_pt2, and 110_am_pt3 or a pattern interval between antenna patterns formed in the antenna blocks 110_am_pt1, 110_am_pt2, and 110_am_pt3 may be smaller than a length (or a diameter) of the antenna element. The pattern interval (or the pattern interval of the plurality of patterns formed in one antenna block) of the antenna patterns may vary depending on a communication frequency band supported by the portable electronic device or a frequency band supported by the antenna.

As an example, with respect to a direction, in which the light irradiated from the antenna patterns 110_am_pt1, 110_am_pt2, and 110_am_pt3 travels, the first opening (or at least one of the second to fifth openings) formed in the first metal layer 212_bd1 may partially overlap the first opening (or at least one of the second to fifth openings) formed in the second metal layer 212_bd2, and the first opening (or at least one of the second to fifth openings) formed in the second metal layer 212_bd2 may partially overlap the first opening (or at least one of the second to fifth openings) formed in the third metal layer 212_bd3.

As described above, the sizes of the openings 212_h1, 212_h2, 212_h3, 212_h4, and 212_h5 formed in the plurality of metal layers 212_bd1, 212_bd2, and 212_bd3 and the sizes of the openings 212_h1, 212_h2, 212_h3, and 212_h4 of the metal layers 212_bd1, 212_bd2, and 212_bd3 overlap each other upward and downward may vary depending on a travel direction of the light irradiated from the antenna patterns 110_am_pt11, 110_am_pt21, 110_am_pt22, 110_am_pt31, and 110_am_pt32. For example, each of the metal layers 212_bd1, 212_bd2, and 212_bd3 includes the same number of openings, and the sizes of the openings formed in the metal layers 212_bd1, 212_bd2, and 212_bd3 may be different. For example, the size of the first opening (or the fifth opening) formed in the first metal layer 212_bd1 may be smaller than the size of the first opening (or the fifth opening) formed in the second metal layer 212_bd2, and the size of the first opening (or the fifth opening) formed in the second metal layer 212_bd2 may be smaller than the size of the first opening (or the fifth opening) formed in the third metal layer 212_bd3. Alternatively, the size of the second opening (or the third opening) formed in the first metal layer 212_bd1 may be greater than the size of the second opening (or the third opening) formed in the second metal layer 212_bd2, and the size of the second opening (or the third opening) formed in the second metal layer 212_bd2 may be greater than the size of the second opening (or the third opening) formed in the third metal layer 212_bd3. Alternatively, the fourth opening of the first metal layer 212_bd1 may be the same as the size of the fourth opening of the second metal layer 212_bd2, the fourth opening of the second metal layer 212_bd2 may be the same as the size of the fourth opening of the third metal layer 212_bd3, and they may overlap each other upward and downward at different positions. Meanwhile, at least one of the number, the sizes, and the overlapping positions of the openings of each of the metal layers 212_bd1, 212_bd2, and 212_bd3 illustrated in FIG. 22 may vary depending on the number and the sizes or the antenna patterns 110_am_pt11, 110_am_pt21, 110_am_pt22, 110_am_pt31, and 110_am_pt32. The second modified conductive plate 212 described in FIGS. 21 and 22 may be applied to any one of the communication support structure or the portable electronic device described above in FIGS. 1 to 19 or the portable electronic device described in FIGS. 30 to 32.

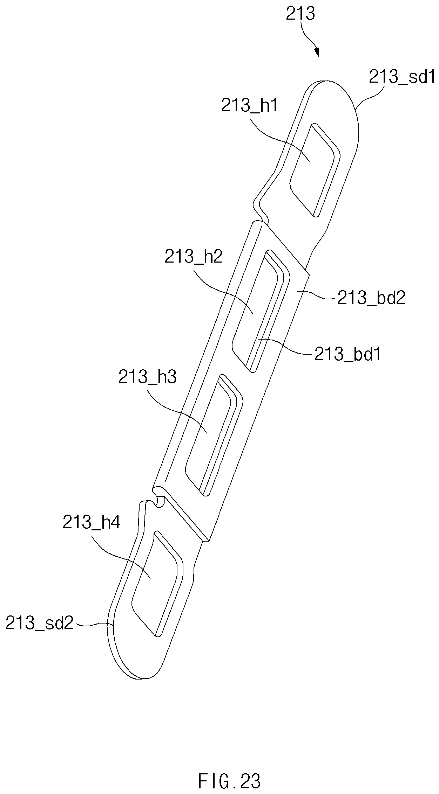

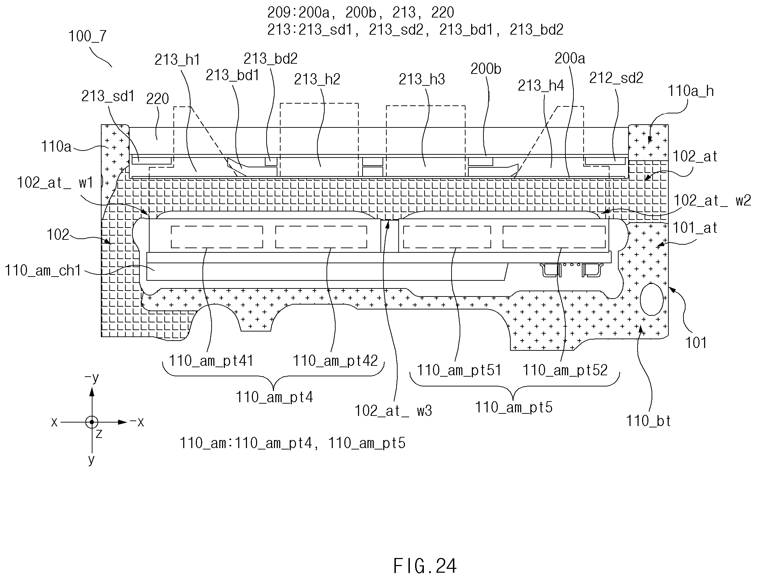

FIG. 23 is a view illustrating an example of a third modified conductive plate according to an embodiment. FIG. 24 is a view illustrating an example of a configuration of a seventh portable electronic device including a third modified conductive plate and a first modified antenna structure according to an embodiment.

Referring to FIGS. 1 and 23, the third modified conductive plate 213 according to an embodiment may include a first plate side portion 213_sd1, a second plate side portion 213_sd2, and central portions 213_bd1. The central portions 213_bd1 and 213_bd2 may be disposed between the first plate side portion 213_sd1 and the second plate side portion 213_sd2. The first plate side portion 213_sd1 and the second plate side portion 213_sd2 may be connected to the first central portion 213_bd1. A step may be formed at a boundary portion between the first plate side portion 213_sd1 and the first central portion 213_bd1, and a boundary portion between the second plate side portion 213_sd2 and the first central portion 213_bd1. As an example, the first plate side portion 213_sd1 may be disposed to have the same height as the height of one surface of the second central portion 213_bd2 while extending from the first central portion 213_bd1 in the first direction. The second plate side portion 213_sd2 may extend from the first central portion 213_bd1 in the second direction (e.g., a direction that is opposite to the first direction), and may be disposed to have the same height as the height of one surface of the second central portion 213_bd2. The first plate side portion 213_sd1, the second plate side portion 213_sd2, and the first central portion 213_bd1 may have the same thickness. Alternatively, the first central portion 213_bd1 and the second central portion 213_bd2 may have the same thickness. The first central portion 213_bd1 and the second central portion 213_bd2 may be stacked upward and downward. The first central portion 213_bd1 and the second central portion 213_bd2 may have the same size.

The first plate side portion 213_sd1 may include a first opening 213_h1 that passes through the front and rear surfaces. The first opening 213_h1 may have a shape, of which a length in one direction is greater than a length in another direction. The central portions 213_bd1 and 213_bd2 may include a second opening 213_h2 and a third opening 213_h3 that pass through the front and rear surfaces. A size of the second opening 213_h2 may be the same as or similar to a size of the third opening 213_h3. The second plate side portion 213_sd2 may include a fourth opening 213_h4 that passes the front and rear surfaces. A shape of the fourth opening 213_h4 may be the same as or similar to a shape of the first opening 213_h1.

Referring to FIGS. 1 and 24, a seventh portable electronic device 100_7 includes the housing (e.g., the housing 110 of FIG. 1) described above in FIG. 1, and the housing may include a support plate 110_bt, on which the antenna disposition region 101_at is formed, a machined portion 101 including a first side portion 110a, and an injection-molded portion 102 including an injection side region 102_at. The first side portion 110a includes a side opening 110a_h, and at least a portion of the ninth communication support structure 209 may be disposed in the side opening 110a_h. The injection side region 102_at may have recesses formed at central portions that faces y-axis and -y-axis directions, respectively. A first modified antenna structure 110_am_ch1 may be disposed in the antenna disposition region 101_at. The first modified antenna structure 110_am_ch1 may include a fourth antenna block 110_am_pt4 (or a first antenna block) and a fifth antenna block 110_am_pt5 (or a second antenna block). The fourth antenna block 110_am_pt4 may include a sixth antenna pattern 110_am_pt41 (or a first antenna pattern) and a seventh antenna pattern 110_am_pt42 (or a second antenna pattern), and the fifth antenna block 110_am_pt5 may include an eighth antenna pattern 110_am_pt51 (or a third antenna pattern) and a ninth antenna pattern 110_am_pt52 (or a fourth antenna pattern).

An empty space may be formed (or disposed, or positioned) between the first modified antenna structure 110_am_ch1 and the injection side region 102_at. At least one isolation wall 102_at_w1, 102_at_w2, and 102_at_w3 may be formed on one surface of the injection side region 102_at in the y-axis direction, and the at least one isolation wall 102_at_w1, 102_at_w2, and 102_at_w3 may be disposed between a periphery of the first modified antenna structure 110_am_ch1 or antenna blocks 110_am_pt4 and 110_am_pt5. A recess region that is recessed in the y-axis direction may be formed at a central portion of the injection side region 102_at in the y-axis direction, and at least a portion of the ninth communication support structure 209 may be disposed. As an example, a first adhesive member 200a, a third modified conductive plate 213, a second adhesive member 200b, and a non-conductive plate 220 may be disposed on one surface (e.g., a surface that faces the -y axis) of the injection side region 102_at and the side opening 110a_h. As an example, at least a portion of the third modified conductive plate 213 may be adhered to one surface of the injection side region 102_at through a first adhesive member 200a. For example, the first central portion 213_bd1 of the third modified conductive plate 213 may be fixed to one surface of the injection side region 102_at through the first adhesive member 200a. In the third modified conductive plates 213, the first plate side portion 213_sd1, the second central portion 213_bd2, and the second plate side portion 213_sd2 may be adhered to the non-conductive plate 220 through a second adhesive member 200b.

As an example, with respect to the y-axis direction or the -y-axis direction, at least a portion of the first opening 213_h1 may overlap the sixth antenna pattern 110_am_pt41, at least a portion of the second opening 213_h2 may overlap the seventh antenna pattern 110_am_pt42, at least a portion of the third opening 213_h3 may overlap the eighth antenna pattern 110_am_pt51, and at least a portion of the fourth opening 213_h4 may overlap the ninth antenna pattern 110_am_pt52. The first to fourth openings 213_h1, 213_h2, 213_h3, and 213_h4 may have different shapes. As an example, the first opening 213_h1 and the fourth opening 213_h4 may have shapes and positions that are symmetrical to each other leftward and rightward with respect to the center of the first modified antenna structure 110_am_ch1. The second opening 213_h2 and the third opening 213_h3 may have the same or similar shape.

Meanwhile, in the above description, it has been exemplified that the third modified conductive plate 213 includes four openings, and it has been exemplified that the first modified antenna structure 110_am_ch1 includes four antenna patterns, but the present disclosure is not limited thereto. For example, three or more openings may be disposed at the central portions 213_bd1 and 213_bd2 of the third modified conductive plate 213, and correspondingly, the first modified antenna structure 110_am_ch1 may include five or more antenna patterns. Alternatively, one opening may be disposed at the central portions 213_bd1 and 213_bd2 of the third modified conductive plate 213, and correspondingly, the first modified antenna structure 110_am_ch1 may include three antenna patterns. Meanwhile, the third modified conductive plate 213 described in FIG. 23 may be applied to any one of the communication support structure or the portable electronic device described above in FIGS. 1 to 19 or the portable electronic device described in FIGS. 30 to 32.

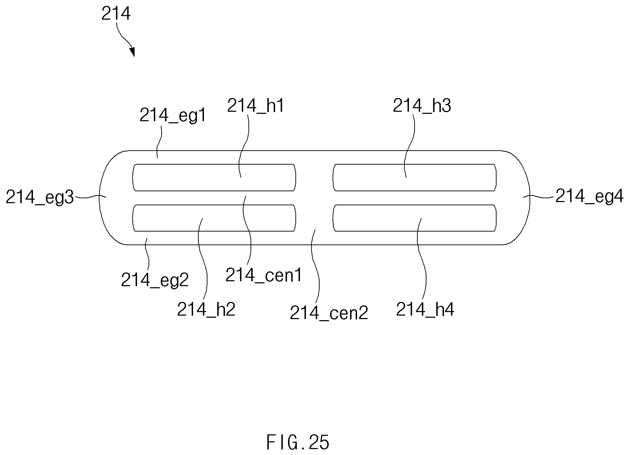

FIG. 25 is a view illustrating an example of a fourth modified conductive plate according to an embodiment.

Referring to FIGS. 1 and 25, a fourth modified conductive plate 214 according to an embodiment may include a first side portion periphery 241_eg1, a second side portion periphery 241_eg2, a third side portion periphery 241_eg3, a fourth side portion periphery 241_eg4, a transverse central portion 241_cen1, and a longitudinal central portion 241_cen2. The fourth modified conductive plate 214 may include four openings 214_h1, 214_h2, 214_h3, and 214_h4 that are defined by the first side portion periphery 241_eg1, the second side portion periphery 241_eg2, the third side portion periphery 241_eg3, the fourth side portion periphery 241_eg4, the transverse central portion 241_cen1, and the longitudinal central portion 241_cen2. For example, the fourth modified conductive plate 214 may include a first opening 214_h1 that is defined by a portion of the first side portion periphery 214_eg1, a portion of the third side portion periphery 214_eg3, a portion of the transverse central portion 214_cen1, and a portion of the longitudinal central portion 214_cen2, a second opening 214_h2 that is defined by a portion of the second side portion periphery 214_eg2, a portion of the third side portion periphery 214_eg3, a portion of the transverse central portion 214_cen1, and another portion of the longitudinal central portion 214_cen2, a third opening 214_h3 that is defined by another portion of the first side portion periphery 214_eg1, a portion of the fourth side portion periphery 214_eg4, another portion of the transverse central portion 214_cen1, and a portion of the longitudinal central portion 214_cen2, and a fourth opening 214_h4 that is defined by another portion of the second side portion periphery 214_eg2, another portion of the fourth side portion periphery 214_eg4, another portion of the transverse central portion 214_cen1, and another portion of the longitudinal central portion 214_cen2. According to an embodiment, the first opening 214_h1 and the second opening 214_h2 may be disposed upward and downward in parallel, and the third opening 214_h3 and the fourth opening 214_h4 may be disposed upward and downward in parallel. Alternatively, the first opening 214_h1 and the third opening 214_h3 may be disposed leftward and rightward in parallel, and the second opening 214_h2 and the fourth opening 214_h4 may be disposed leftward and rightward in parallel.

The antenna structure of the portable electronic device, to which the fourth modified conductive plate 214 is applied, may include an antenna pattern portion including antenna patterns corresponding to the disposition of the first to fourth openings 214_h1, 214_h2, 214_h3, and 214_h4. For example, the antenna structure may include four antenna blocks corresponding to the positions and sizes of the first to fourth openings 214_h1, 214_h2, 214_h3, and 214_h4. Alternatively, the antenna structure may include a first antenna block including two antenna patterns corresponding two openings (e.g., the first opening 214_h1 and the second opening 214_h2 or the first opening 214_h1 and the third opening 214_h3), and a second antenna block including two antenna patterns corresponding two openings (e.g., the third opening 214_h3 and the fourth opening 214_h4 or the second opening 214_h2 and the fourth opening 214_h4). Meanwhile, the fourth modified conductive plate 214 described in FIG. 25 may be applied to any one of the communication support structure or the portable electronic device described above in FIGS. 1 to 19 or the portable electronic device described in FIGS. 30 to 32. For example, the above-described injection side region 102_at (or the modified injection side region 102_at_ch1, 102_at_ch2, 102_at_ch3) may be disposed between the fifth modified conductive plate 215 and the first modified antenna structure 110_am_ch1, and the fifth modified conductive plate 215 may be disposed to face the side opening 110a_h of the first side portion 110a.

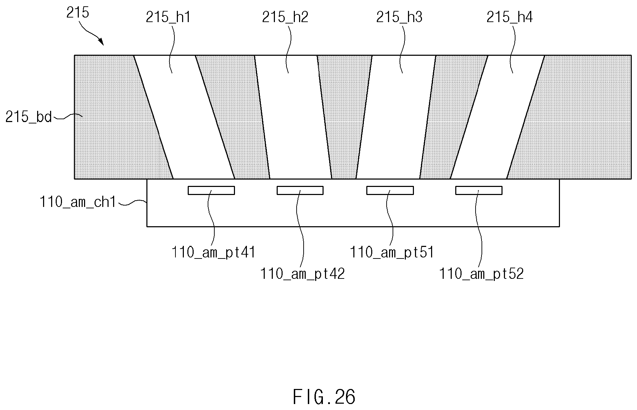

FIG. 26 is a view illustrating an example of a disposition relationship between a fifth modified conductive plate and a first modified antenna structure according to an embodiment.

Referring to FIGS. 1 and 26, the fifth modified conductive plate 215 according to an embodiment may include a conductive plate body 215_bd and a plurality of openings 215_h1, 215_h2, 215_h3, and 215_h4 that pass through the conductive plate body 215_bd. As an example, among the plurality of openings 215_h1, 215_h2, 215_h3, and 215_h4, the first opening 215_h1 may be formed to pass from an upper portion of the conductive plate body 215_bd in a rightward downward direction while having a first inclination with respect to the illustrated drawing, and the second opening 215_h2 may be formed to pass from an upper portion of the conductive plate body 215_bd in a rightward downward direction while having a second inclination (e.g., an inclination that is greater than the first inclination) with respect to the illustrated drawing. The third opening 215_h3 may be formed to pass from an upper portion of the conductive plate body 215_bd in a leftward downward direction while having a second inclination, and the fourth opening 215_h4 may be formed to have from an upper portion of the conductive plate body 215_bd in a leftward downward direction while having a first inclination (e.g., an inclination that is smaller than the second inclination) with respect to the illustrated drawing. The first opening 215_h1 and the fourth opening 215_h4 may be disposed at peripheries on opposite sides of the conductive plate body 215_bd, and the second opening 215_h2 and the third opening 215_h3 may be disposed between the first opening 215_h1 and the fourth opening 215_h4.

The first modified antenna structure 110_am_ch1 may include four antenna patterns 110_am_pt41, 110_am_pt42, 110_am_pt51, and 110_am_pt52. For example, the first modified antenna structure 110_am_ch1 may include a sixth antenna pattern 110_am_pt41, a seventh antenna pattern 110_am_pt42, an eighth antenna pattern 110_am_pt51, and a ninth antenna pattern 110_am_pt52. The sixth antenna pattern 110_am_pt41 may be disposed at a position that faces one surface of the first opening 215_h1. The seventh antenna pattern 110_am_pt42 may be disposed at a position that faces one surface of the second opening 215_h2, the eighth antenna pattern 110_am_pt51 may be disposed at a position that faces one surface of the third opening 215_h3, and the ninth antenna pattern 110_am_pt52 may be disposed at a position that faces one surface of the fourth opening 215_h4. Accordingly, at least a portion of the signal irradiated from the sixth antenna pattern 110_am_pt41 may proceed through the first opening 215_h1. Furthermore, at least a portion of a signal irradiated from the seventh antenna pattern 110_am_pt42 may proceed through the second opening 215_h2, at least a portion of a signal irradiated from the eighth antenna pattern 110_am_pt51 may proceed through the third opening 215_h3, and at least a portion of a signal irradiated from the ninth antenna pattern 110_am_pt52 may proceed through the fourth opening 215_h4.

Meanwhile, in FIG. 26, a portion of the fifth modified conductive plate 215 and the first modified antenna structure 110_am_ch1 is illustrated, but an embodiment of the disclosure is not limited thereto, and other components of the portable electronic device may be supplemented or replaced with at least some of the components described in other drawings.

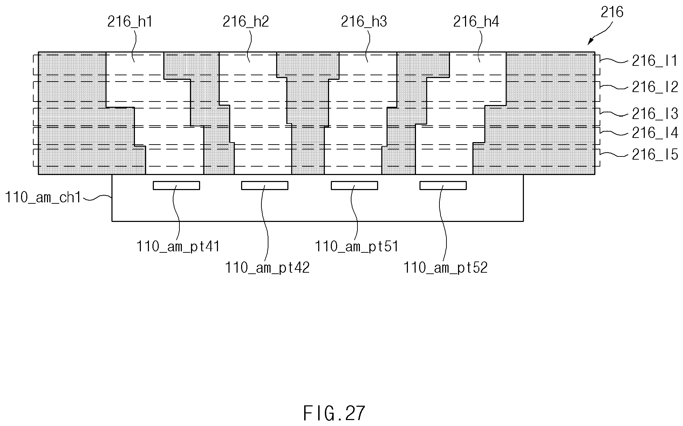

FIG. 27 is a view illustrating an example of a disposition relationship between a sixth modified conductive plate and a first modified antenna structure according to an embodiment.

Referring to FIGS. 1 and 27, the sixth modified conductive plate 216 according to an embodiment may include a plurality of metal layers 216_l1, 216_l2, 216_l3, 216_l4, and 216_l5. For example, the sixth modified conductive plate 216 may include a first metal layer 216_l1 that is located on an upper layer, a second metal layer 216_l2 that is located under the first metal layer 216_l1, a third metal layer 216_l3 that is located under the second metal layer 216_l2, a fourth metal layer 216_l4 located under the third metal layer, and the fifth metal layer 216_l5 located between the fourth metal layer 216_l4 and the first modified antenna structure 110_am_ch1. Additionally or alternatively, an injection side region 102_at and a modified injection side region 102_at_ch1, 102_at_ch2, and 102_at_ch3 may be disposed between the sixth modified conductive plate 216 and the first modified antenna structure 110_am_chl. The sixth modified conductive plate 216 may be disposed to face the side opening 110a_h of the first side portion 110a of the portable electronic device. Each of the plurality of metal layers 216_l1, 216_l2, 216_l3, 216_l4, and 216_l5 of the sixth modified conductive plate 216 may include a plurality of openings 216_h1, 216_h2, 216_h3, and 216_h4. Positions, in which the plurality of openings 216_h1, 216_h2, 216_h3, and 216_h4 may be formed in the metal layers 216_l1, 216_l2, 216_l3, 216_l4, and 216_l5 are formed in the metal layers 216_l1, 216_l2, 216_l3, 216_l4, and 216_15, may be different. Alternatively, positions, in which the openings 216_h1, 216_l2, 216_l3, 216_l4, and 216_l5 formed in each of the metal layers 216_l1, 216_h2, 216_h3, and 216_h4 are stacked upward and downward, may be different.

As described above, the first modified antenna structure 110_am_ch1 may include four antenna patterns 110_am_pt41, 110_am_pt42, 110_am_pt51, and 110_am_pt52. At least a portion of the light irradiated from the sixth antenna pattern 110_am_pt41 may proceed (or be transmitted) through the first opening 216_h1 located in a left periphery with respect to the illustrated drawing while the openings of the plurality of metal layers 216_l1, 216_l2, 216_l3, 216_l4, and 216_l5 are stacked to partially overlap each other. At least a portion of the light irradiated from the seventh antenna pattern 110_am_pt42 may proceed (or be transmitted) through the second opening 216_h2 located between the first opening 216_h1 and the third opening 216_h3 with respect to the illustrated drawing while the openings of the plurality of metal layers 216_l2, 216_l3, 216_l4, and 216_l5 are stacked to partially overlap each other. At least a portion of the light irradiated from the eighth antenna pattern 110_am_pt51 may proceed (or be transmitted) through a third opening 216_h3 formed to partially overlap the openings of the plurality of metal layers 216_l1, 216_l2, 216_l3, 216_l4, and 216_l5. At least a portion of the light irradiated from the ninth antenna pattern 110_am_pt52 may proceed (or be transmitted) through a fourth opening 216_h4 formed to partially overlap the openings of the plurality of metal layers 216_l1, 216_l2, 216_l3, 216_l4, and 216_l5.

Meanwhile, in FIG. 27, a portion of the sixth modified conductive plate 216 and the first modified antenna structure 110_am_ch1 is illustrated, but an embodiment of the disclosure is not limited thereto, and other components of the portable electronic device may be supplemented or replaced with at least some of the components described in other drawings.

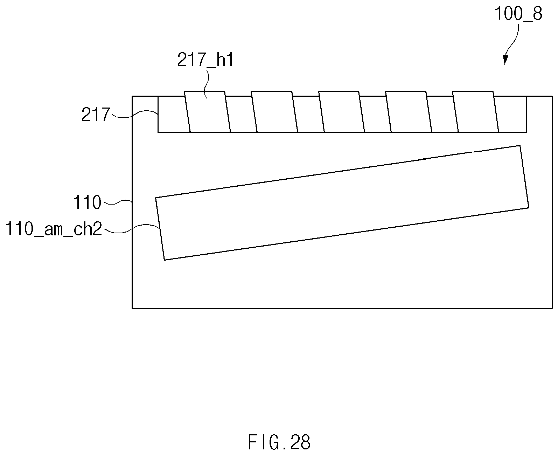

FIG. 28 is a view illustrating an example of an eighth portable electronic device including a seventh modified conductive plate and a second modified antenna structure according to an embodiment.

Referring to FIGS. 1 and 28, an eighth portable electronic device 100_8 according to an embodiment may include a housing 110, a seventh modified conductive plate 217, and a second modified antenna structure 110_am_ch2.

The seventh modified conductive plate 217 may be disposed on one side (e.g., the injection side region 102_at of FIG. 4) of the housing 110 of the eighth portable electronic device 100_8. As an example, one surface of the seventh modified conductive plate 217 may be disposed to face a side opening (e.g., the side opening 110a_h of FIG. 2) formed in the first side portion (e.g., the first side portion 110a of FIG. 2). The seventh modified conductive plate 217 may include a plurality of openings 217_h1. The plurality of openings 217_h1 may have the same or similar shapes. For example, the plurality of openings 217_h1 may be formed to have a specific inclination angle from an upper portion of the seventh modified conductive plate 217 to the lower right side.

The second modified antenna structure 110_am_ch2 may be disposed with a specific inclination with respect to the seventh modified conductive plate 217. In this regard, the housing 110 may include an antenna disposition region, in which the second modified antenna structure 110_am_ch2 may be disposed to be inclined with respect to the seventh modified conductive plate 217. The second modified antenna structure 110_am_ch2 may include a plurality of antenna patterns corresponding to the plurality of openings 217_h1, and signals irradiated from each of the antenna patterns may proceed (or be delivered or transmitted) toward a side opening through the plurality of openings 217_h1. Here, an inclination size of the second modified antenna structure 110_am_ch2 with respect to the first side portion (e.g., the first side portion 110a of FIG. 2) of the housing 110 may be formed to be the same as an inclination size of the openings 217_h1.

Additionally or alternatively, as described above, an injection-molded portion (e.g., the injection side region 102_at) may be disposed between the seventh modified conductive plate 217 and the second modified antenna structure 110_am_ch2.

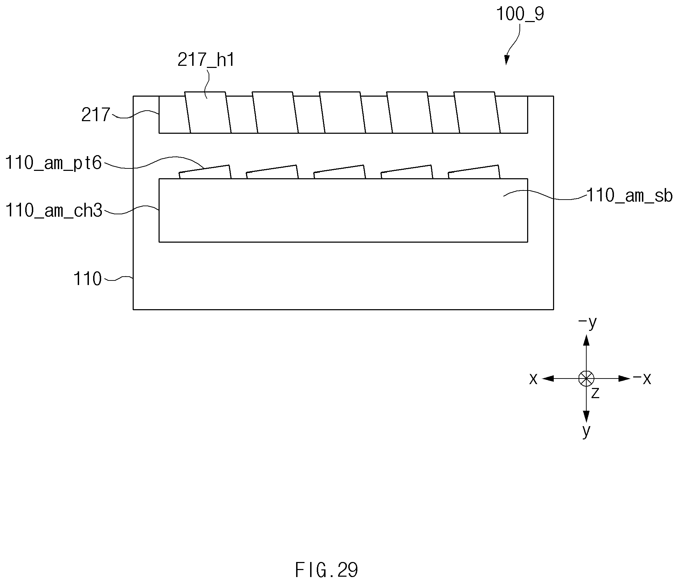

FIG. 29 is a view illustrating an example of a ninth portable electronic device including a seventh modified conductive plate and a third modified antenna structure according to an embodiment.

Referring to FIGS. 1 and 29, a ninth portable electronic device 100_9 according to an embodiment may include a housing 110, a seventh modified conductive plate 217, and a third modified antenna structure 110_am_ch3.

The seventh modified conductive plate 217 may have the same structure and position in the housing 110 as those of the seventh modified conductive plate described above in FIG. 28. For example, the seventh modified conductive plate 217 may include a plurality of openings 217_h1. The plurality of openings 217_h1 may have the same or similar shapes. The plurality of openings 217_h1 may be formed to have a specific inclination angle from an upper portion of the seventh modified conductive plate 217 to the lower right side.

The third modified antenna structure 110_am_ch3 may include a substrate portion 110_am_sb and an antenna pattern portion 110_am_pt6. The third deformation antenna structure 110_am_ch3 may be disposed at a position corresponding to the seventh modified conductive plate 217. For example, the substrate portion 110_am_sb may be disposed in parallel to the seventh modified conductive plate 217. For example, the substrate portion 110_am_sb and the seventh modified conductive plate 217 may overlap each other upward and downward with respect to the y-axis or -y-axis direction. The antenna pattern portion 110_am_pt6 may be disposed to face the -y-axis direction at the substrate portion 110_am_sb, and may be disposed to have a specific inclination. Accordingly, one surface of the antenna pattern portion 110_am_pt6 may be disposed on the substrate portion 110_am_sb to be inclined in the -y direction. At least a portion of a signal irradiated from the antenna pattern portion 110_am_pt6 may proceed while being inclined in the -y direction, and may be delivered or transmitted to the outside of the ninth portable electronic device 100_9 through a plurality of openings 217_h1 having a specific inclination.

Additionally or alternatively, as described above, an injection-molded portion (e.g., the injection side region 102_at) may be disposed between the seventh modified conductive plate 217 and the second modified antenna structure 110_am_ch2.

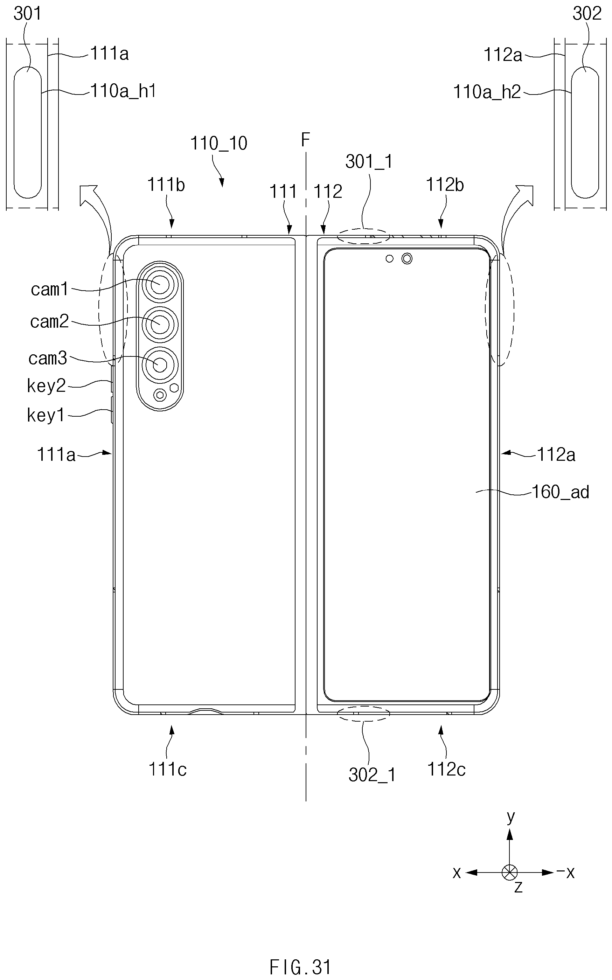

FIG. 30 is a view illustrating an example of an exterior of a foldable portable electronic device, to which a communication support structure may be applied, in a folded state according to an embodiment. FIG. 31 is a view illustrating an example of an exterior of a foldable portable electronic device, to which a communication support structure may be applied, in an unfolded state according to an embodiment.

Referring to FIGS. 1 and 30, a tenth portable electronic device 100_10 according to an embodiment may include a first housing 111 and a second housing 112. An auxiliary display 160_ad may be disposed on a rear surface of the second housing 112. Additionally or alternatively, the tenth portable electronic device 100_10 may include at least one hinge structure that connects the first housing 111 and the second housing 112, and a flexible display that is continuously disposed on the first housing 111 and the second housing 112. The first housing 111 and the second housing 112 may be unfolded or folded based on the hinge structure, and the currently illustrated drawing illustrates a folded state of the first housing 111 and the second housing 112. For example, a first key Key1, a second key Key2, and first to third cameras cam1, cam2, and cam3 may be disposed in the first housing 111.

According to an embodiment, communication support structures 301 and 302 may be disposed on the side portions (e.g., the x-axis direction) of the first housing 111 and the second housing 112, respectively. The communication support structures 301 and 302 may correspond to at least one of the communication support structures described above in FIGS. 1 to 29, and the antenna structure mentioned in other drawings may be disposed on an inside of at least one of the first housing 111 and the second housing 112, in which the communication support structures 301 and 302 are located. As a result, the example of the antenna structure and the corresponding communication support structure described in the embodiment of the disclosure may also be applied to the tenth portable electronic device 100_10 corresponding to a foldable portable electronic device.

Referring to FIGS. 1 to 31, the communication support structure 301 and 302 (an opening structure including a metal structure and a non-conductive plate) may include a first opening structure (or the first communication support structure 301) that is located on a left surface (e.g., a periphery in the x-axis direction) of the housing, which is located on a left side of a central portion (e.g., a folding axis "F") of a front surface in the foldable device (the tenth portable electronic device 100_10), and a second opening structure (or the second communication support structure 302) that is formed on a right surface (e.g., a periphery in the -x-axis direction) of the second housing 112, which is located on a right side (e.g., the -x-axis direction) of the central portion (e.g., the folding axis "F"). The first and second opening structures 301 and 302 may be formed at positions that are symmetrical to each other. The first and second opening structures 301 and 302 may have different sizes of the side openings 110a_hl and 110a_h2. When the sizes of the side openings 110a_hl and 110a_h2 of the first and second opening structures 301 and 302 are different (or the same case), the centers of the two side openings 110a_h1 and 110a_h2 may be located in a straight line while the tenth portable electronic device 100_10 is folded. The tenth portable electronic device 100_10 includes a first mmWave antenna and a second mmWave antenna corresponding to the first and second opening structures, respectively, and the first mmWave antenna and the second mmWave antenna may be selectively operated depending on a folding state of the foldable device. Any one of the first mmWave antenna and the second mmWave antenna may be operated while the foldable device is unfolded, for example, depending on a grip direction, and both the first mmWave antenna and the second mmWave antenna may be operated while the foldable device is folded. As an example, depending on the folding state (e.g., a fully folded state, a partially folded state, or a fully unfolded state) of the tenth portable electronic device 100_10, an input power, an output power, or the number of the used antenna elements for at least one antenna structure may be adjusted based on a radiation direction of the antenna structure or a positional relationship between the antenna structures.

As an example, the tenth portable electronic device 100_10 may include a first housing 111 including a first injection-molded portion (e.g., the injection-molded portion 102 of FIG. 2) formed of (or including) an injection material and a first machine portion (e.g., the machined portion 101 of FIG. 2) formed of (or including) a metallic material, and a second housing 112 including a second injection-molded portion (e.g., the injection-molded portion 102 of FIG. 2) formed of (or including) an injection material and a second machined portion (e.g., the machined portion 101 of FIG. 2) formed of (or including) a metallic material. The first machined portion of the first housing 111 may include a side portion 111a of the first housing including the first side opening 110a_h1. The second machined portion of the second housing 112 may include a side portion 112a of the second housing including the second side opening 110a_h2.

The tenth portable electronic device may include at least one hinge structure that connects the first housing 111 and the second housing 112 to support a folding or unfolding operation of the first housing 111 and the second housing 112, a display (e.g., a flexible display that is deformed such that the display 160 of FIG. 2 is positioned over the first housing 111 and the second housing 112, and a central portion thereof may be folded with respect to a folding axis) positioned on the first housing 111 and the second housing 112 (or positioned over the first housing 111 and the second housing 112, a first antenna structure (e.g., an antenna structure corresponding to the antenna structure 110_am of FIG. 2 and positioned in the first housing 111) that is positioned in the first housing 111 and a second antenna structure (e.g., an antenna structure corresponding to the antenna structure 110_am of FIG. 2 and positioned in the second housing 112) that is positioned in the second housing 112, a first communication support structure 301 that is disposed in the first housing 111 to support radiation of signals of the first antenna structure, and a second communication support structure 302 that is disposed in the second housing to support radiation of signals of the second antenna structure.

The first communication support structure 301 may include a first conductive plate (e.g., the conductive plate 210 of FIG. 2) that partially overlaps the first antenna structure with respect to a first direction that faces the first antenna structure from the side portion 110a of the first housing 111, and a first non-conductive plate (e.g., the non-conductive plate 220 of FIG. 2) that closes the first side opening 110a_h1 while at least partially overlapping the first conductive plate (or at least a portion thereof is disposed in the first side opening 110a_h1).

The second communication support structure 302 may include a second conductive plate (e.g., a conductive plate corresponding to the conductive plate 210 of FIG. 2 and positioned in the second housing 112) that partially overlaps the second antenna structure with respect to a second direction (may be the same as or different from the first direction that faces the first antenna structure depending on a folded or unfolded state) that faces the second antenna structure from the side portion 112a of the second housing 112, and a second non-conductive plate (e.g., a non-conductive plate positioned in the second housing 112 corresponding to the non-conductive plate 220 of FIG. 2) that closes the second side opening 110a_h2 while at least partially overlapping the second conductive plate (or at least a portion thereof is disposed in the second side opening 110a_h1).

According to various embodiments, the first communication support structure 301_1 and the second communication support structure 302 corresponding to the first communication support structure 301 and the second communication support structure 302 described above may be disposed at positions that are spaced apart from each other by a set distance with respect to the y-axis direction (or -y-axis direction). For example, the first communication support structure 301_1 may be disposed at the upper portion 112b with respect to the center of the second housing 112, and the second communication support structure 302_1 may be disposed at the lower portion 112c with respect to the center of the second housing 112. Alternatively, the first communication support structure 301_1 and the second communication support structure 302_1 described above may be disposed at the upper portion 111b and the lower portion 111c of the first housing 111. As another example, a plurality of communication support structures (e.g., 301 and 302) may be disposed at the side portion 111a of the first housing 111 (or the side portion 112a of the second housing 112).

Meanwhile, the tenth portable electronic device 100_10 may include a communication support structure and an antenna structure that are disposed on any one of the two housings 111 and 112.

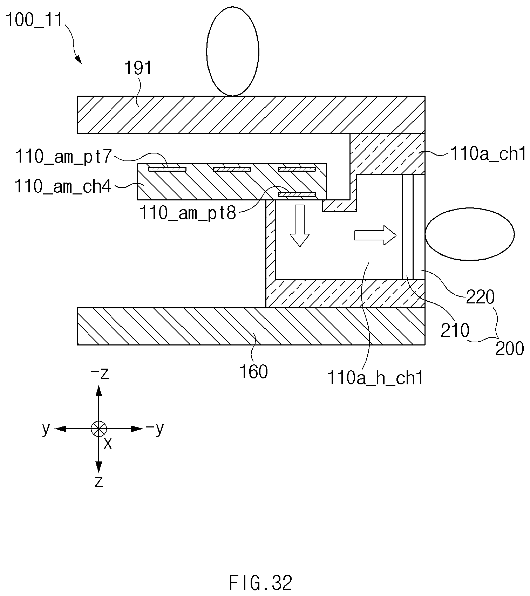

FIG. 32 is a view illustrating an example of an eleventh portable electronic device including a side signal radiation structure according to an embodiment.

Referring to FIG. 32, according to an embodiment, an eleventh portable electronic device 100_11 may include a rear case 191, a first modified side portion 110a_ch1, at which the first modified side opening 110a_h_ch1 is formed, a fourth modified antenna structure 110_am_ch4, a communication support structure 200, and a display 160. Here, the eleventh portable electronic device 100_11 may further include at least some of the components mentioned in the drawings, except for the rear case 191, the first modified side portion 110a_chl, in which the first modified side opening 110a_h_ch1 is formed, the fourth modified antenna structure 110_am_ch4, and the display 160.

The first modified side opening 110a_h_ch1 may be formed such that a direction of an inlet portion and a direction of an outlet portion are different. For example, the outlet portion of the first modified side opening 110a_h_ch1 may be formed on a right side portion (e.g., a portion that faces the -y-axis direction) of the first modified side portion 110a_ch1, and the inlet portion may be formed on an upper portion (e.g., a portion that faces the -z-axis direction) of the first modified side portion 110a_ch1. Accordingly, the first modified side opening 110a_h_ch1 may include an "L" shape. An outlet portion (e.g., a -y-axis periphery) (or at least a portion of the outlet portion) of the first modified side opening 110a_h _ch1 may be closed by the communication support structure 200.

According to an embodiment, the fourth modified antenna structure 110_am_ch4 may include tenth antenna patterns 110_am_pt7 that are disposed to face a first direction (e.g., a -z-axis direction or a rearward direction) and eleventh antenna patterns 110_am_pt8 that are disposed to face a second direction (e.g., a z-axis direction or a forward direction). The eleventh antenna pattern 110_am_pt8 may be disposed to face an opening region (e.g., a region that is opened toward the -z axis, and an inlet portion of the first modified side opening 110a_h_ch1) of one side of the first modified side opening 110a_h_ch1. At least a portion of the communication support structure 200 including the conductive plate 210 and the non-conductive plate 210 (e.g., the non-conductive plate 220 of FIG. 2) described above may be disposed in an opening region (e.g., a region that is opened toward the -y axis, and an outlet portion of the first modified side opening 110a_h_ch1) on an opposite side of the first modified side opening 110a_h_ch1. In the communication support structure 200, an adhesive member may be further disposed between the conductive plate 210 and the non-conductive plate 210. As an example, an adhesive member may be further disposed between the communication support structure 200 and an inner wall of the outlet portion of the first modified side opening 110a_h_ch1.

The fourth modified antenna structure 110_am_ch4 described above is a single antenna structure, and may perform irradiation of signals in a rearward direction and irradiation of signals in a lateral direction.

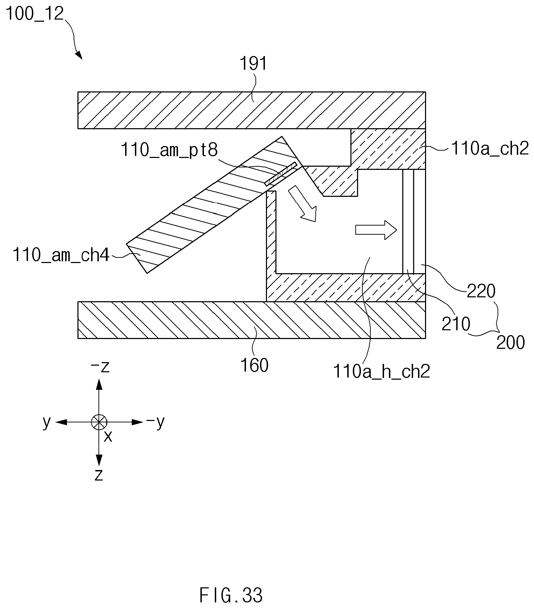

FIG. 33 is a view illustrating an example of a twelfth portable electronic device including a side signal radiation structure according to an embodiment.

Referring to FIG. 33, according to an embodiment, a twelfth portable electronic device 100_12 may include a rear case 191, a second modified side portion 110a_ch2, in which the second modified side opening 110a_h_ch2 is formed, a fourth modified antenna structure 110_am_ch4, and a display 160. Here, the twelfth portable electronic device 100_12 may further include at least some of the components mentioned in the drawings, except for the rear case 191, the second modified side portion 110a_ch2, in which the second modified side opening 110a_h_ch2 is formed, the fourth modified antenna structure 110_am_ch4, and the display 160.

The second modified side opening 110a_h_ch2 may be formed such that a direction of an inlet portion and a direction of an outlet portion are different. For example, with respect to a direction, in which a signal is radiated, the inlet portion of the second modified side opening 110a_h_ch2 may be formed at an upper left inclined portion (e.g., a portion that faces a diagonal direction between the -z axis and the y axis) of the second modified side portion 110a_ch2, and the outlet portion may be formed at a right portion (e.g., a portion that faces the -y-axis direction) of the second modified side portion 110a_ch2. At least a portion of an outlet portion (e.g., a -y-axis periphery) of the second modified side opening 110a_h_ch2 may be closed by the communication support structure 200.

According to an embodiment, the fourth modified antenna structure 110_am_ch4 may include an eleventh antenna pattern 110_am_pt8. The eleventh antenna pattern 110_am_pt8 may be disposed to face an opening region (e.g., a region that is opened toward a diagonal line between the -z axis and the y axis, and an inlet portion of the second modified side opening 110a_h_ch2) of one side of the second modified side opening 110a_h_ch2. At least a portion of the above-described non-conductive plate (e.g., the non-conductive plate 220 of FIG. 2) or the communication support structure 200 including the illustrated conductive plate 210 and the non-conductive plate 220 may be disposed in an opening region (e.g., a region that is opened to face the -y axis) on an opposite side of the second modified side opening 110a_h_ch2. In the communication support structure 200, an adhesive member may be further disposed between the conductive plate 210 and the non-conductive plate 210. As an example, an adhesive member may be further disposed between the communication support structure 200 and an inner wall of the outlet portion of the second modified side opening 110a_h_ch2.

As another example, the fourth modified antenna structure 110_am_ch4 may include tenth antenna patterns that are disposed on a surface that is opposite to one surface, on which the eleventh antenna pattern 110_am_pt8 is formed. Accordingly, when the eleventh antenna pattern 110_am_pt8 irradiates a signal in a lateral direction through the second modified side opening 110a_h_ch2, the tenth antenna pattern may irradiate a signal in a direction that is inclined with respect to the rear case 191.

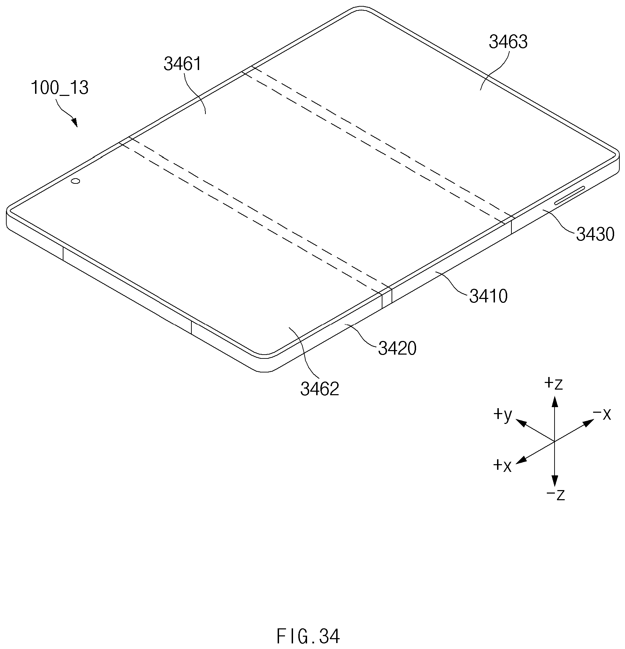

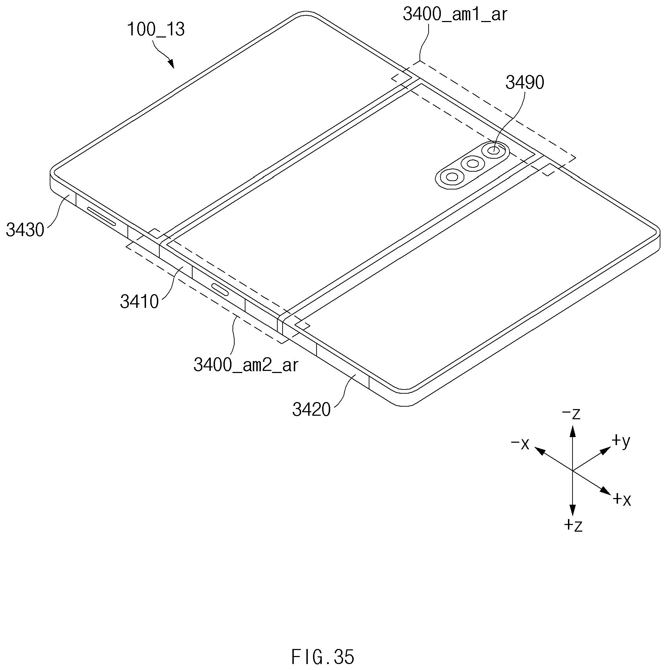

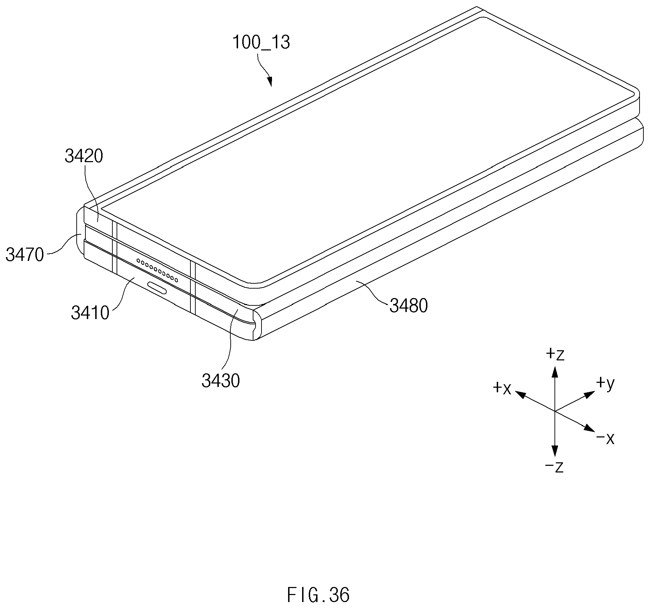

FIG. 34 is a view illustrating an example of a shape of a thirteenth portable electronic device in a first direction in an unfolded state according to an embodiment. FIG. 35 is a view illustrating an example of a shape of a thirteenth portable electronic device in a second direction in an unfolded state according to an embodiment. FIG. 36 is a view illustrating an example of a thirteenth portable electronic device in a folded state according to an embodiment.

Referring to FIGS. 1 to 33, 34 to 36, as an example, a thirteenth portable electronic device 100_13 may be a multi-foldable device including a first housing part 3410, a second housing part 3420, and a third housing part 3430. The first housing part 3410 may be coupled to the second housing part 3420 to be rotatable by a first hinge structure 3470. The second housing part 3420 and the first housing part 3410 may be rotated with respect to the first hinge structure 3470. The third housing part 3430 may be coupled to the second housing part 3420 to be rotatable by a second hinge structure 3480. The second housing part 3420 and the third housing part 3430 may be rotated with respect to the second hinge structure 3480. A width of the first hinge structure 3470 may be different from a width of the second hinge structure. The width of the first hinge structure 3470 may be greater than the width of the second hinge structure 3480. The thirteenth portable electronic device 100_13 may include a flexible display including a first display region 3461, a second display region 3462, and a third display region 3463 that are accommodated in the first housing part 3410, the second housing part 3420, and the third housing part 3430, respectively.

As an example, the thirteenth portable electronic device 100_13 may be an E-type multi-foldable device and a G-type multi-foldable device depending on a folding direction (or a shape in a folded state). In the E-type multi-foldable device and the G-type multi-foldable device, the first hinge structure 3470 and the second hinge structure 3480 may support in-folding. The antenna structure and the communication support structure described above in other drawings may be disposed in at least one of the first housing part 3410, the second housing part 3420, or the third housing part 3430. As an example, in a G-type multi-foldable device, at least a portion of an upper portion (a y-axis periphery) of the first housing part 3410 may include a first structure disposition region 3400_am1_ar, in which the first antenna structure and the first communication support structure are disposed, and at least a portion of a lower portion (a -y-axis periphery) of the first housing part 3410 may include a second structure disposition region 3400_am2_ar, in which the second antenna structure and the second communication support structure are disposed. Alternatively, according to an embodiment, the G-type multi-fold device may include a region of at least a partial region of the side portion exposed to the outside in a folded state, in which the antenna structure and the communication support structure described above in the other drawings are disposed.

According to an embodiment, a communication circuit using an antenna structure and/or a communication support structure may be disposed in the first housing part 3410. The first housing part 3410, in which the communication circuit is disposed, may be disposed between the second housing part 3420 and the third housing part 3430. Correspondingly, the antenna structure and the communication support structure described above in other drawings may be designed to be disposed in the first housing part 3410 and such that a path connected to the communication circuit on the path is shorter than those of the other housing parts. The embodiment of the disclosure is not limited thereto, and the antenna structure and the communication support structure described above in the other drawings may be formed at a side portion of another housing part.

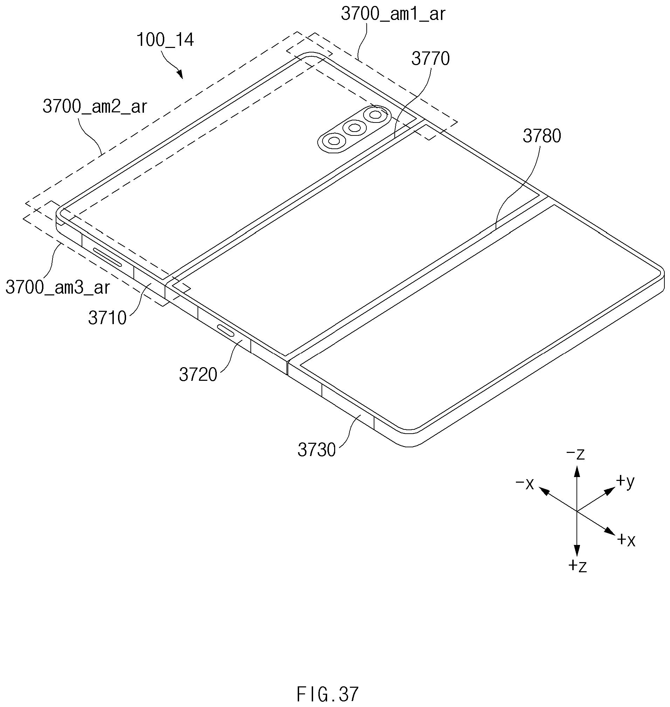

FIG. 37 is a view illustrating an example of a shape of a fourteenth portable electronic device in a first direction in an unfolded state according to an embodiment.

Referring to FIGS. 1 to 37, a fourteenth portable electronic device 100_14 may be a multi-foldable device including a first housing part 3710, a second housing part 3720, and a third housing part 3730. The first housing part 3710 may be coupled to the second housing part 3720 to be rotatable by a first hinge structure 3770. The second housing part 3720 and the first housing part 3710 may be rotated with respect to the first hinge structure 3770. The third housing part 3730 may be coupled to the second housing part 3720 to be rotatable by a second hinge structure 3780. The second housing part 3720 and the third housing part 3730 may be rotated with respect to the second hinge structure 3780. A width of the first hinge structure 3770 may be different from a width of the second hinge structure. The width of the first hinge structure 3770 may be smaller than the width of the second hinge structure 3780. Similar to the above description of the thirteenth portable electronic device 100_13, the fourteenth portable electronic device 100_14 may include a flexible display including a first display region, a second display region, and a third display region that are accommodated in the first housing part 3710, the second housing part 3720, and the third housing part 3730, respectively. A separate auxiliary display may be disposed on at least one of the rear surfaces (rear surfaces, on which the flexible display is not disposed) of the first housing part 3710, the second housing part 3720, and the third housing part 3730.

According to an embodiment, at least one communication circuit using an antenna structure and/or a communication support structure may be disposed in the first housing part 3710. The first housing part 3710, in which the at least one communication circuit is disposed, may be disposed on the -x axis with respect to the second housing part 3720. Alternatively, one side portion of the first housing part 3710 may be connected to another housing part (e.g., the second housing part 3720), and an opposite side portion of the first housing part 3710 may be disposed to be exposed (or observed from the outside) to the outside in a folded or unfolded state of the fourteenth portable electronic device 100_14. Alternatively, the second housing part 3720, in which the communication circuit is not disposed, may be disposed between the first housing part 3710 and the third housing part 3730. One side of the third housing part 3730 may be connected to the second housing part 3720 through the second hinge structure 3780, and an opposite side of the third housing part 3730 may be disposed to be exposed when the fourteenth portable electronic device 100_14 is in a folded state and not to be exposed when the fourteenth portable electronic device 100_14 is in an unfolded state. Correspondingly, the antenna structure and the communication support structure described above in other drawings may be designed to be disposed in the first housing part 3710 and such that a path connected to the communication circuit on the path is shorter than those of the other housing parts. As an example, in the E-type multi-foldable devices, an upper portion (e.g., a y-axis periphery) of the first housing part 3710 may include a first structure disposition region 3700_am1_ar, in which the first antenna structure and the first communication support structure are disposed, and a left portion (e.g., a -x-axis periphery) of the first housing part 3710 may include a second structure deposition region 3700_am2_ar, in which the second antenna structure and the second communication support structure are disposed, and a lower portion (e.g., a -y-axis periphery) of the first housing part 3710 may include a third structure disposition region 3700_am3_ar, in which the third antenna structure and the third communication support structure are disposed. Alternatively, when the fourteenth portable electronic device 100_14 is in a folded or an unfolded state, at least one of the above-described structure disposition regions 3700_am1_ar, 3700_am2_ar, and 3700_am3_ar may be disposed in the exposed side portion of the first housing part 3710. An embodiment of the disclosure is not limited thereto, and the structure disposition region, in which the antenna structure and/or the communication support structure described in other drawings are disposed, may be formed at a side portion (e.g., a side portion of at least one of an upper portion and a lower portion of the second housing part 3720, and an upper portion, a lower portion, and a right portion of the third housing part 3730).

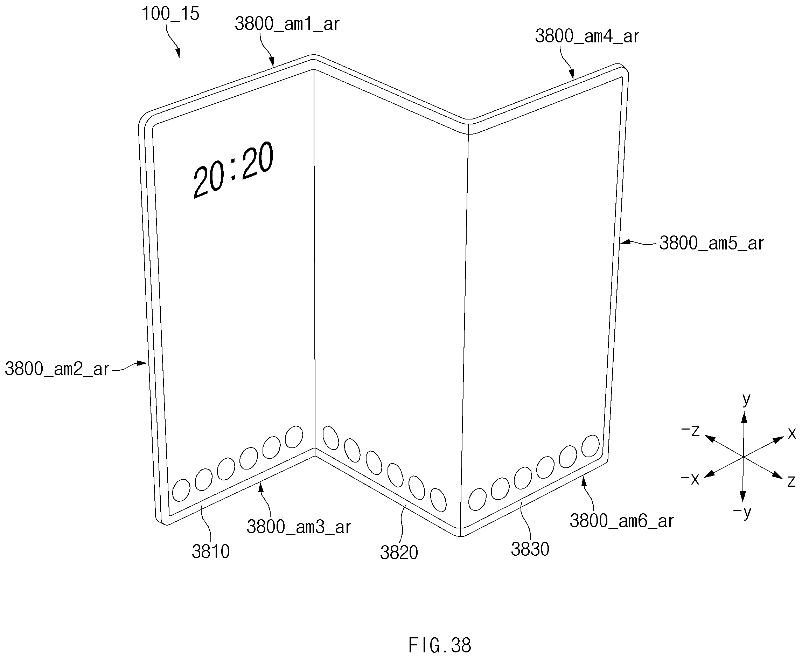

FIG. 38 is a view illustrating an example of a fifteenth portable electronic device in a partially folded state according to an embodiment.

Referring to FIG. 38, a fifteenth portable electronic device 100_15 according to an embodiment may include a Z-type multi-foldable device that is folded. The Z-type multi-foldable device may supports an in-folding operation (an operation of folding the display regions corresponding to a first housing part 3810 and a second housing part 3820 in a direction, in which they face each other) of the first hinge structure (e.g., the hinge structure that is disposed between the first housing part 3810 and the second housing part 3820 to connect the first housing part 3810 and the second housing part 3820 to enable a hinge operation thereof), and may support an out-folding operation (e.g., an operation of folding the display regions corresponding to the second housing part 3820 and a third housing part 3830 in a direction, in which they do not face each other) (or an operation of folding the rear surfaces of the second housing part 3820 and the third housing part 3830 such that they face each other) of the second hinge structure (e.g., the hinge structure that is disposed between the second housing part 3820 and the third housing part 3830 to connect the second housing part 3820 and the third housing part 3830 to enable a hinge operation thereof).

As an example, in a Z-type multi-foldable device, such as the fifteenth portable electronic device 100_15, the structure deposition regions (at least one of 3800_am1_ar, 3800_am2_ar, 3800_am3_ar, 3800_am4_ar, 3800_am5_ar, and 3800_am6_ar), in which the antenna structure and the communication support structure are disposed, may be disposed in or on at least one side portion of at least one of the first to third housing part 3810 to 3830, respectively. In the Z-type fifteenth portable electronic device 100_15, among the structure deposition regions 3800_am1_ar, 3800_am2_ar, 3800_am3_ar, 3800_am4_ar, 3800_am5_ar, 3800_am5_ar, and 3800_am6_ar, in which the antenna structure and the communication support structures disposed in each of the first to third housing parts 3810 to 3830, at least some structure deposition regions (e.g., the first structure disposition region 3800_am1_ar and the third structure disposition region 3800_am3_ar, the second structure disposition region 3800_am2_ar and the fifth structure disposition region 3800_am5_ar, and the fourth structure disposition region 3800_am4_ar and the sixth structure disposition region 3800_am6_ar) may be disposed to radiate signals in opposite directions. While the fifteenth portable electronic device 100_15 is fully folded, among the structure deposition regions 3800_am1_ar, 3800_am2_ar, 3800_am3_ar, 3800_am4_ar, 3800_am5_ar, and 3800_am6_ar formed in each of the first and third housing parts 3800_am1_ar, at least portions of at least some structure deposition regions (the first structure disposition region 3800_am1_ar and the fourth structure disposition region 3800_am4_ar, the second structure disposition region3800_am2_ar and the fifth structure disposition region 3800_am5_ar, and the third structure disposition region 3800_am3_ar and the sixth structure disposition region 3800_am6_ar) may overlap each other with respect to the z axis. While the Z-type fifteenth portable electronic device 100_15 is fully folded, among the structure deposition regions 3800_am1_ar, 3800_am2_ar, 3800_am3_ar, 3800_am4_ar, 3800_am5_ar, and 3800_am6_ar formed in each of the first to third housing parts 3810 to 3830, at least some structure deposition regions may be disposed such that central portions with respect to the y axis coincide with each other. While the Z-type fifteenth portable electronic device 100_15 is fully folded, among the structure deposition regions 3800_am1_ar, 3800_am2_ar, 3800_am3_ar, 3800_am4_ar, 3800_am5_ar, and 3800_am6_ar formed in each of the first to third housing parts 3810 to 3830, at least some structure deposition regions may be disposed to be spaced apart from each other in the x-axis direction. Depending on the folding state (e.g., a fully folded state, a partially folded state, or a fully unfolded state) of the fifteenth portable electronic device 100_15, an input power, an output power, or the number of the used antenna elements for at least one antenna structure may be adjusted based on a radiation direction of the antenna structure or a positional relationship between the antenna structures.

In the above description related to FIG. 38, it has been exemplified that three structure disposition regions 3800_am1_ar, 3800_am2_ar, and 3800_am3_ar are disposed in the first housing part 3810, and three structure deposition regions 3800_am4_ar, 3800_am5_ar, and 3800_am6_ar are disposed in the third housing part 3830, but the disclosure is not limited thereto. For example, the fifteenth portable electronic device 100_15 may include two or less structure deposition regions or six or more structure deposition regions. In this case, an additional structure disposition region, in which the antenna structure and communication support structure are disposed, may be formed in or on at least one of an upper portion and a lower portion of the second housing part 3820.

According to some of the above-described embodiment, the portable electronic device may include a first housing 111, wherein the first housing 111 may include a first injection-molded portion 102 formed of (or including) an injection material and a first machined portion (e.g., the machine portion of the first housing 111 corresponding to the machined portion 101 of FIG. 2) formed of (or including) a metallic material, and the first machined portion may include a side portion (e.g., a side portion corresponding to the first side portion 110a of FIG. 2 and formed on the first housing 111) of the first housing 111 including a first side opening 110a_h1 (e.g., the side opening of the first housing 111 corresponding to the side opening 110a_h1 of FIG. 2 and formed in the first housing 111), wherein the second housing 112 may include a second injection-molded portion (e.g., the injection molded portion of the second housing 112 corresponding to the injection-molded portion 102 of FIG. 2) formed of (or including) an injection material and a second machine portion (e.g., the machined portion of the second housing 112 corresponding to the machined portion 101 of FIG. 2) formed of (or including) a metallic material, and the second machined portion may include a side portion (e.g., the side portion of the second housing 112 corresponding to the side portion 110a of FIG. 2) of the second housing 112 including a second side opening 110a_h2 (e.g., the side opening of the second housing 112 corresponding to the side opening 110a_h of FIG. 2), at least one hinge structure connecting the first housing 111 and the second housing 112 and that supports a folding or unfolding operation of the first housing 111 and the second housing 112, and a display (e.g., a display that is modified such that the display 160 of FIG. 2 is folded) positioned on the first housing 111 and the second housing 112. The portable electronic device may include a first antenna structure positioned in the first housing 111 and a second antenna structure positioned on the second housing 112, a first communication support structure 301 disposed in the first housing 111, and that supports radiation of signals of the first antenna structure, and a second communication support structure 302 disposed in the second housing 112, and that supports radiation of signals of the second antenna structure, the first communication support structure may include a first conductive plate partially overlapping the first antenna structure with respect to a first direction facing the first antenna structure from a side portion of the first housing 111, and a first non-conductive plate that closes the first side opening 110a_h1 while at least a portion thereof overlaps the first conductive plate (or at least a portion thereof is disposed in the first side opening 110a_h1), and the second communication support structure may include a second conductive plate partially overlapping the second antenna structure with respect to a second direction facing the second antenna structure from a side portion of the second housing 112, and a second non-conductive plate that closes the second side opening 110a_h1 while at least a portion thereof overlaps the second conductive plate (or at least a portion thereof is disposed in the second side opening 110a_h1).

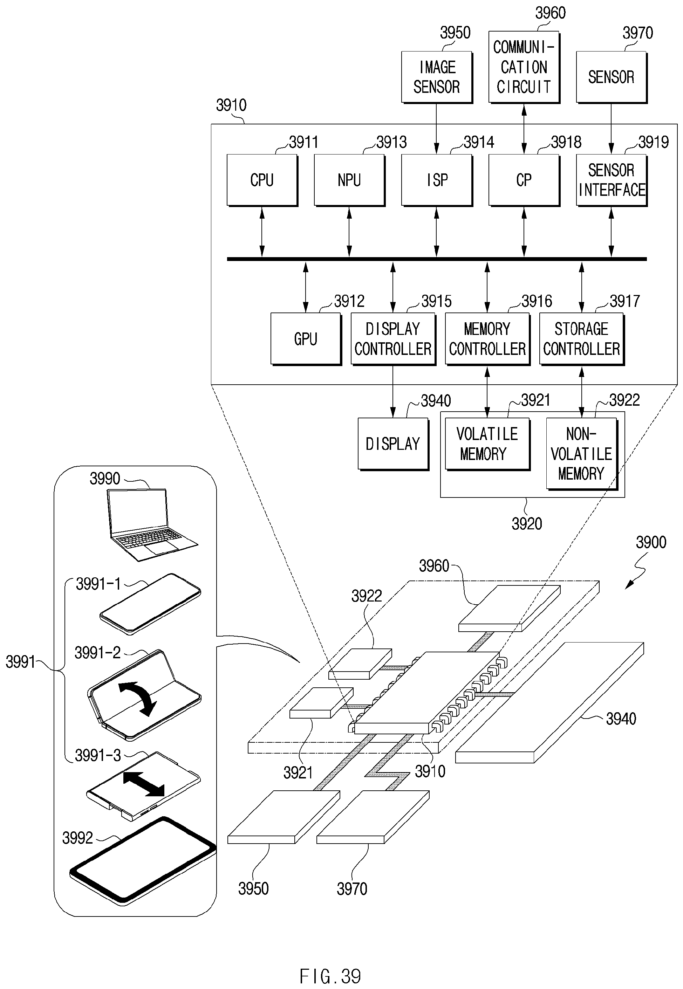

FIG. 39 illustrates a block diagram of an exemplary electronic device 3900 capable of performing the operations described herein.

Referring to FIG. 39, the electronic device 3900 may be one of various types of electronic devices, such as a notebook computer 3990, smartphones 3991 having various form factors (e.g., a bar-type smartphone 3991-1, a foldable smartphone 3991-2, or a slidable (or rollable) smartphone 3991-3), a tablet PC 3992, a cellular telephone (not shown), and any other similar computing devices (not shown). The components illustrated in FIG. 39, the relationships thereof, and the functions thereof are merely for illustration, and are not intended to limit the implementations described or claimed in the disclosure thereto. The electronic device 3900 may be referred to as a mobile device, a user equipment, a multifunctional device, a portable device, or a server.

The electronic device 3900 may comprise various components including at least one processor 3910 (hereinafter, the processor 3910), at least one memory 3920 (hereinafter, the memory 3920), at least one display 3940 (hereinafter, the display 3940), at least one image sensor 3950 (hereinafter, the image sensor 3950), at least one communication circuitry 3960 (hereinafter, the communication circuitry 3960), and/or at least one sensor 3970 (hereinafter, the sensor 3970). The aforementioned components are merely of an example. For example, the electronic device 3900 may comprise other components (e.g., a power management integrated circuitry (PMIC), an audio processing circuitry, an antenna, a rechargeable battery, or an input/output interface). For example, some components may be omitted from the electronic device (3900). For example, some components may be integrated into one component.

The processor 3910 may be implemented as one or more integrated circuit (or circuitry) (IC) chips and may perform various data processing. The processor 3910 may include at least one electrical circuitry and may process instructions (or program, data, and so on) stored in the memory 3920 individually or collectively in a distributed manner. The processor 3910 may include a processor assembly that includes one or more processing circuitries. The processor may include any processing circuitry that may be operative for controlling operations and performance of one or more components (e.g., the memory 3920, a display 3940, the image sensor 3950, the communication circuitry 3960, and/or the sensor 3970) of the electronic device. For example, the processor 3910 (e.g., an application processor (AP)) may be implemented as a system on chip (SoC) (e.g., one chip or chipset). For example, the processor 3910 may be implemented as a plurality of cores (or at least one core circuitry), a plurality of chips, or a plurality of chipsets. For example, the processor 3910 may comprise one or more processing circuitry. For example, the processor 3910 may comprise one or more processing circuitry which are individually and/or collectively configured to perform various functions of the present disclosure. As a non-limiting example, at least a portion of the processor 3910 may be included in a first chip of the electronic device 3900 and at least another portion of the processor 3910 may be included in a second chip of the electronic device 3900 different from the first chip of the electronic device 3900.

For example, the processor 3910 may comprise a central processing unit (CPU) 3911, a graphics processing unit (GPU) 3912, a neural processing unit (NPU) 3913, an image signal processor (ISP) 3914, a display controller 3915, a memory controller 3916, a storage controller 3917, a communication processor (CP) 3918, and/or a sensor interface 3919. These components of the processor 3910 are merely of an example. For example, the processor 3910 may further comprise other components. For example, some components of the processor 3910 may be omitted from the processor 3910. For example, some components of the processor 3910 may be included as separate components of the electronic device 3900 outside the processor 3910. For example, some components of the processor 3910 (e.g., the memory controller 3916) may be included in other components of the electronic device 3900 (e.g., at least a portion of the memory 3920, an interface (e.g., usable for connecting to at least one component of the electronic device 3900), the display 3940, and/or the image sensor 3950).

The processor 3910 may cause other components of the electronic device 3900 to perform various operations by executing instructions stored in the memory 3920. The CPU 3911 (or a central processing circuitry) may be configured to control the components of the processor 3910 based on execution of instructions stored in the memory 3920 (e.g., the volatile memory 3921 and/or the non-volatile memory 3922). The GPU 3912 (or a graphic processing circuitry) may be configured to execute parallel computations (e.g., rendering). The NPU 3913 (or a neural processing circuitry, or an artificial intelligence (AI) chip) may be configured to execute operations (e.g., convolution computations) for an artificial intelligence model. The ISP 3914 (or an image signal processing circuitry) may be configured to process a raw image obtained from the image sensor 3950 in a format suitable for a component in the electronic device 3900 or a component of the processor 3910. The display controller 3915 (or a display control circuitry, or a display processing unit (DPU)) may be configured to process an image obtained from the CPU 3911, the GPU 3912, the ISP 3914, or the memory 3920 (e.g., the volatile memory 3921) in a format suitable for the display 3940. The memory controller 3916 (or a memory control circuitry) may be configured to control reading data from the volatile memory 3921 and writing data to the volatile memory 3921. The storage controller 3917 (or a storage control circuitry) may be configured to control reading data from the non-volatile memory 3922 and writing data to the non-volatile memory 3922. The CP 3918 (or a communication processing circuitry) may be configured to process data obtained from a component of the processor 3910 in a format suitable for transmission to another electronic device via the communication circuitry 3960, or to process data obtained from another electronic device via the communication circuitry 3960 in a format suitable for processing of the component of the processor 3910. For example, the communication circuitry 3960 may comprise one or more communication circuitry. The sensor interface 3919 (or a sensing data processing circuitry, a sensor hub) may be configured to process data on a state of the electronic device 3900 and/or a state around the electronic device 3900, obtained through the sensor 3970, in a format suitable for a component of the processor 3910.

The memory 3920 may comprise one or more storage mediums (or one or more storage devices). For example, the memory 3920 may include a memory assembly that includes one or more storage mediums. For example, the one or more storage mediums may comprise a permanent memory (e.g., the non-volatile memory 3922) such as a hard drive, a flash memory, a read-only memory (ROM), a semi-permanent memory (e.g., the volatile memory 3921) such as a random access memory (RAM), a storage (or a storage assembly) of any other suitable type, or any combination thereof. The memory 3920 may comprise a cache memory which is a memory of one or more different types used to store data for performing a function or feature of the electronic device 3900 at least temporarily. As a non-limiting example, the cache memory may be included in the processor 3910. The memory 3920 may be fixedly embedded within the electronic device 3900, or may be incorporated onto one or more suitable types of components that may be repeatedly inserted into the electronic device 3900, and removed from the electronic device 3900 (e.g., a subscriber identity module (SIM) card, and/or a secure digital (SD) card).

For example, the memory 3920 may store one or more software applications such as an operating system (or a system) software application, a firmware software application, a driver software application, a plug-in (e.g., add-in, add-on, and/or applet) software application, and/or any other suitable software application. For example, the one or more software applications may include instructions executable by the processor 3910. For example, the memory 3920 may store instructions callable by an application programming interface (API). For example, the memory 3920 may store instructions in a library.

## Claims

1. A portable electronic device comprising:
a display (160);
a housing (110) in which the display is placed, wherein the housing includes an injection-molded portion (102) including an injection molded material and a metal portion (101) including a metal material, and wherein the metal portion includes a first side portion (110a) including an opening (110a_h);
an antenna structure (110_am) disposed in the housing, wherein at least a portion of antenna structure is disposed to face the opening; and
a support structure (200) disposed between the antenna structure and the first side portion;
wherein the support structure includes:
a conductive plate (210) that partially overlaps the antenna structure with respect to a first direction toward the antenna structure from the first side portion; and
a non-conductive plate (220) that closes the opening, wherein at least a portion of the non-conductive plate overlaps the conductive plate.

2. The portable electronic device of claim 1, wherein the injection-molded portion (102) includes an injection side portion (102_at) disposed between the antenna structure (110_am) and the first side portion (110a).

3. The portable electronic device of claim 2, further comprising:
a first adhesive member (200a) that adheres the conductive plate (210) to the injection side portion (102_at).

4. The portable electronic device of claim 2, wherein a thickness of an upper portion or a lower portion of the injection side portion (102_at) is thicker than a thickness of a center portion of the injection side portion.

5. The portable electronic device of claim 2, wherein the injection side portion (102_at) includes a through hole (102_at_h) that penetrates the injection-molded portion (102) in the first direction.

6. The portable electronic device of claim 2, wherein the conductive plate (210) is disposed in the injection side portion (102_at).

7. The portable electronic device of claim 1, further comprising:
a second adhesive member (200b) disposed between the conductive plate (210) and the non-conductive plate (220).

8. The portable electronic device of claim 1, wherein the conductive plate (210) comprises a metal pattern (210_pt) formed on the non-conductive plate (220).

9. The portable electronic device of claim 1, wherein the conductive plate (210) comprises a structure (212) including a plurality of layers (212_bd), wherein each of the plurality of layers includes openings (212_h).

10. A portable electronic device comprising:
a display (160);
a rear case (191);
a frame structure (102) disposed between the display and the rear case, the frame structure forming at least a portion of one side of the portable electronic device; and
an array antenna (110_am) including a first antenna element and a second antenna element, wherein the first antenna element and the second antenna element are arranged to face the one side of the portable electronic device between the display and the rear case,
wherein the frame structure comprises:
an inner portion (102_at) including a non-conductive material and
an outer portion (110a) including a conductive material,
an opening region (110a_h) formed in the outer portion and disposed at a position corresponding to the array antenna,
a conductive plate (210) including at least two holes separated by a rib (210_br) disposed adjacent to the opening region and disposed to cover between the first antenna element and the second antenna element; and
a non-conductive plate (220) disposed corresponding to the opening region and comprising an opaque or translucent material.

11. The portable electronic device of claim 10, wherein the conductive plate (210) is coupled to the opening region (110a_h) by being attached to the inner portion (102_at) at a position using a first adhesive member (200a), wherein the non-conductive plate (220) is attached to the conductive plate using a second adhesive member (200b) having substantially a same size as the first adhesive member.

12. The portable electronic device of claim 10, wherein the conductive plate (210) is formed by insert molding in the inner portion (102_at), or is formed by deposition on the non-conductive plate (220).

13. The portable electronic device of claim 10, wherein a width of the rib (210_br) is greater than a width between the first antenna element and the second antenna element.

14. The portable electronic device of claim 13, wherein the conductive plate (210) includes an additional rib,
wherein the additional rib is arranged to overlap at least a portion of the second antenna element.

15. The portable electronic device of claim 13, further comprising:
a further conductive plate stacked with the conductive plate (210),
wherein the further conductive plate includes a first portion overlapped with the rib (210_br) and a second portion in which another rib is disposed that does not overlap with the rib.
